# EUROPÄISCHE PATENTANMELDUNG

(11) **EP 4 509 013 A1**
(43) Veröffentlichungstag der Anmeldung: **19.02.2025**
(21) Anmeldenummer: 23191946.5
(22) Anmeldetag: 17.08.2023
(51) Int. Cl.: A46B 9/04, A61C 15/04

(54) **KÖRPERPFLEGEPRODUKT, INSBESONDERE MUNDHYGIENEPRODUKT**

(71) Anmelder: Trisa Holding AG, 6234 Triengen (CH)
(72) Erfinder: BÄRTSCHI, Armin, 4652 Winznau (CH); FISCHER, Herbert, 5057 Reitnau (CH); ZWIMPFER, Martin, 6004 Luzern (CH)
(74) Vertreter: Daub, Thomas

(57) **Zusammenfassung**

Die Erfindung geht aus von einem Körperpflegeprodukt, insbesondere einem Mundhygieneprodukt, mit zumindest einer Anwendungseinheit (12a; 12e; 12f; 12g; 12h; 12i; 12j; 12k) mit zumindest einer Griffeinheit (14a; 14c; 14d; 14e; 14f; 14g; 14h; 14i; 14j; 14k), welche zumindest einen materiellen Griffkörper (16a; 16b; 16c; 16d; 16e; 16f; 16g; 16h; 16i; 16j; 16k) aufweist, der zumindest teilweise, insbesondere zumindest zu einem Großteil, aus einem Papierwerkstoff besteht, und mit einer Verbindungseinheit (18a; 18c; 18d; 18e; 18f; 18g; 18h; 18i; 18j; 18k), über welche die Anwendungseinheit (12a; 12e; 12f; 12g; 12h; 12i; 12j; 12k) mit der Griffeinheit (14a; 14c; 14d; 14e; 14f; 14g; 14h; 14i; 14j; 14k) verbunden ist.

Es wird vorgeschlagen, dass die Verbindungseinheit (18a; 18c; 18d; 18e; 18f; 18g; 18h; 18i; 18j; 18k) zumindest ein mit der Anwendungseinheit (12a; 12e; 12f; 12g; 12h; 12i; 12j; 12k) verbundenes Verbindungselement (20a; 20e; 20f; 20g; 20h; 20i; 20j; 20k) und zumindest ein mit der Griffeinheit (14a; 14c; 14d; 14e; 14f; 14g; 14h; 14i; 14j; 14k) verbundenes weiteres Verbindungselement (22a; 22c; 22d; 22e; 22f; 22g; 22h; 22i; 22j 22k) aufweist, wobei das Verbindungselement (20a; 20e; 20f; 20g; 20h; 20i; 20j; 20k) der Verbindungseinheit (18a; 18c; 18d; 18e; 18f; 18g; 18h; 18i; 18j; 18k) zumindest teilweise, insbesondere zumindest zu einem Großteil, aus einem Polymer, insbesondere aus einem Kunststoff, besteht.

## Beschreibung

### Stand der Technik

Die Erfindung betrifft ein Körperpflegeprodukt, insbesondere ein Mundhygieneprodukt.

Es ist bereits ein Körperpflegeprodukt, insbesondere Mundhygieneprodukt, mit zumindest einer Anwendungseinheit, mit zumindest einer Griffeinheit, welche zumindest einen materiellen Griffkörper aufweist, der zumindest teilweise, insbesondere zumindest zu einem Großteil, aus einem Papierwerkstoff besteht, und mit einer Verbindungseinheit, über welche die Anwendungseinheit mit der Griffeinheit verbunden ist, vorgeschlagen worden.

Aus der EP 3 964 166 A1, der DE 20 2020 000 613 U1, der WO 2021/081438 A1 sowie der DE 10 2020 100 106 A1 sind bereits Mundhygienemittel bekannt.

Die Aufgabe der Erfindung besteht insbesondere darin, eine gattungsgemäße Vorrichtung mit verbesserten Eigenschaften hinsichtlich einer Haltbarkeit, eines Komforts sowie hinsichtlich der Ökologie bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Körperpflegeprodukt, insbesondere Mundhygieneprodukt, mit zumindest einer Anwendungseinheit, mit zumindest einer Griffeinheit, welche zumindest einen materiellen Griffkörper aufweist, der zumindest teilweise, insbesondere zumindest zu einem Großteil, aus einem Papierwerkstoff besteht, und mit einer Verbindungseinheit, über welche die Anwendungseinheit mit der Griffeinheit verbunden ist.

Es wird vorgeschlagen, dass die Verbindungseinheit zumindest ein mit der Anwendungseinheit verbundenes Verbindungselement und zumindest ein mit der Griffeinheit verbundenes weiteres Verbindungselement aufweist, wobei das Verbindungselement der Verbindungseinheit zumindest teilweise, insbesondere zumindest zu einem Großteil, aus einem Polymer, insbesondere aus einem Kunststoff, besteht. Vorzugsweise sind das Verbindungselement und das weitere Verbindungselement korrespondierend ausgebildet. Bevorzugt bildet das Verbindungselement einen Teil der Anwendungseinheit und das weitere Verbindungselement einen Teil der Griffeinheit. Es wäre jedoch auch eine getrennte Ausbildung denkbar. Vorzugsweise besteht das Verbindungselement der Verbindungseinheit zumindest zu einem Großteil aus einer Hartkomponente.

Unter "zumindest zu einem Großteil" soll insbesondere verstanden werden, dass zumindest ein Hauptbestandteil eines Materials des materiellen Griffkörpers der Griffeinheit ein Papierwerkstoff bzw. des Verbindungselements der Verbindungseinheit ein Polymer, insbesondere ein Kunststoff, ist. Vorzugsweise sind zumindest 50 Gew.% (Gewichtsprozent), vorzugsweise zumindest 70 Gew.% und besonders bevorzugt zumindest 90 Gew.% des materiellen Griffkörpers der Griffeinheit aus einem Papierwerkstoff bzw. des Verbindungselements der Verbindungseinheit aus einem Polymer, insbesondere aus einem Kunststoff. Besonders bevorzugt besteht der materielle Griffkörper der Griffeinheit vollständig aus einem Papierwerkstoff. Bevorzugt besteht das Verbindungselement der Verbindungseinheit vollständig aus einem Kunststoff. Ferner soll in diesem Zusammenhang unter einem "Papierwerkstoff" insbesondere ein, vorzugsweise flächiger, Werkstoff verstanden werden, der im Wesentlichen aus Fasern, vorzugsweise pflanzlicher Herkunft, besteht. Der Werkstoff wird vorzugsweise durch Entwässerung einer Fasersuspension auf einem Sieb gebildet. Das entstehende Faservlies wird anschließend insbesondere verdichtet und getrocknet. Vorzugsweise ist der Werkstoff aus Zellstoff, Holzschliff und/oder Altpapier hergestellt. Es ist denkbar, das Papier durch eine andere nachhaltige Werkstoffalternative wie z.B. Holz, Bambus oder einer Folie aus einer Kunststoffkomponente, insbesondere eine nachhaltige Kunststoffkomponente zu ersetzen. Auch diese Alternativen werden vorzugsweise zumindest als Rohstoff und/oder Halbfabrikat flächig bereitgestellt. Flächig heißt in der ersten und zweiten Ausdehnungsdimension deutlich größer als in der dritten Ausdehnungsdimension. Flächige Werkstoffe sind üblicherweise in einem Bearbeitungsschritt in Bogen oder

Rollenform verfügbar. Falls in dieser Schrift daher von einem Papierwerkstoff gesprochen wird, gilt dies selbstverständlich auch für die genannten Alternativen aus Werkstoffalternativen.

Vorzugsweise besteht der Papierwerkstoff insbesondere aus Fasern, wobei insbesondere verschiedene Verarbeitungsmöglichkeiten bestehen. Der Papierwerkstoff kann zudem behandelt sein. Der Papierwerkstoff kann beschichtet sein, wie insbesondere lackiert, beispielsweise mit einem Lack zu einer Verbesserung der Verbindung beim Verbinden und/oder zur Verbesserung der Resistenz gegen Wasser, und/oder getränkt. Der Papierwerkstoff kann insbesondere sowohl in flacher Form, in Block-Form oder in flüssiger bis pappeförmiger Form und/oder Konsistenz vorliegen, wobei ausgehend von der Form verschiedene Verarbeitungen möglich sind. In flacher Form kann der Papierwerkstoff gerollt, geschichtet, gepresst, laminiert, gerillt, geprägt, gefaltet, gestanzt und/oder grainiert, also insbesondere aufgeraut oder gekörnt, werden. Zu einem Verbinden kann der Papierwerkstoff geklebt werden, wobei allenfalls Vorbereitungsschritte wie Grainieren oder dergleichen nötig sind, verschweißt werden, wie insbesondere mittels Ultraschall-Schweißen, gesiegelt (heiß oder kalt) werden oder laminiert werden, etc. Zu einem Verbinden können auf dem Papierwerkstoff Spezialschichten nötig sein, um die Verbindung zu ermöglichen bzw. zu verbessern. Verbindungen können mit einem Papierwerkstoff oder anderen in dieser Schrift genannten Materialien bzw. Werkstoffen hergestellt werden. Insbesondere können Verbindungen zwischen dem Papierwerkstoff und einer Kunststoffkomponente hergestellt werden. In Block-Form kann der Papierwerkstoff mechanisch bearbeitet, beispielsweise gefräst, gebohrt oder gestanzt werden. In flüssiger Form kann der Papierwerkstoff gegossen oder spritzgegossen werden, wie insbesondere mittels Papierspritzguss oder Papierguss bzw. Faserguss. Hierbei wird der Papierwerkstoff insbesondere analog zu einem Spritzgussprozess in einer Kavität geformt. Anschließend wird das gegossene Teil ausgehärtet bzw. getrocknet. Vorzugsweise sind beim Papierspritzguss oder Papierguss bzw. Faserguss am Körper aus Papierwerkstoff keine Nachbearbeitungen nötig, jedoch sind diese möglich, beispielsweise kann mechanisch nachbearbeitet werden, beispielsweise durch Fräsen, Bohren oder Stanzen. Beim Papierspritzguss ist insbesondere auch ein Anspritzen an andere Teile bzw. Materialien, beispielsweise Kunststoff mit Papier umspritzt, denkbar. Alternativ kann ein Kunststoffteil auch an einem Papierwerkstoff angespritzt werden, indem der plastifizierte Kunststoff bzw. die plastifizierte Kunststoffkomponente (z.B. ein Thermoplast bzw. eine Hartkomponente) form- und/oder kraftschlüssig an den Papierwerkstoff angespritzt wird. Insgesamt kann der Produktaufbau des Körperpflegeprodukts verschiedener Art sein, wie insbesondere vollständig aus einem Papierwerkstoff oder in einer Hybridtechnik, beispielsweise aus Papierwerkstoff kombiniert mit einer Kunststoffkomponente, insbesondere beispielsweise mit einem Wechselkopf und/oder mit einer Griffeinheit aus Papier und einer Anwendungseinheit aus Kunststoff. Weitere Materialkombinationen mit Papier können wie erwähnt Kunststoff und/oder Metall und/oder organische Materialien wie Holz, Bambus und/oder anorganische Materialien wie Stein, Glas etc. sein. Es sei angemerkt, dass in dieser Schrift der Einfachheit halber Papier als bevorzugter Werkstoff für die Griffeinheit beschrieben wird, es aber durchaus im Sinne der Erfindung ist, Papier durch einen vorzugsweise aus im Wesentlichen nachhaltigen Bestandteilen bestehenden Werkstoff wie z.B. Holz oder Bambus oder einer Folie aus einer Kunststoffkomponente, insbesondere eine nachhaltige Kunststoffkomponente zu ersetzen. Der Werkstoff für die Griffeinheit ist zumindest als Rohmaterial bzw. Halbfabrikat vorzugsweise in einer flächigen Form bereitgestellt.

Der Papierwerkstoff weist insbesondere Anforderungen hinsichtlich der Wasserresistenz auf, so sollte der Papierwerkstoff eine geringe bis keine Wasseraufnahme aufweisen. Ferner sollte der Papierwerkstoff eine vorteilhafte Biegefestigkeit aufweisen, was insbesondere für die spätere Anwendung sehr wichtig ist.

Der Papierwerkstoff kann dabei einlagig oder mehrlagig ausgebildet sein. Mehrlagiger Papierwerkstoff besteht aus mehreren Lagen von Papier gleicher oder unterschiedlicher Dicke und/oder unterschiedlichen Eigenschaften und/oder zumindest teilweise aus unterschiedlichem Material. Vorzugsweise können mehrere Lagen von Papier eine Schicht ausbilden, wobei der Körper auch aus einer oder mehreren Schichten bestehen kann.

Schichten können z.B. mittels Laminieren/Verkleben/Pressen/Falten einer oder mehrerer Lagen erzeugt werden. Die Lagen können sich teilweise oder ganz überlappen, z.B. um eine Verbindung der einen oder mehreren Lagen herzustellen und/oder mindestens teilweise einen Hohlkörper auszubilden.

Äußere Lagen können über unterschiedliche wasserabweisende Eigenschaften verfügen als innere Lagen. Äußere Lagen können über eine unterschiedliche Farbe verfügen als innere Lagen. Äußere Lagen können aus einer Hartkomponente, bevorzugt einer nachhaltigen bestehen. Einzelne oder alle Lagen können im Wesentlichen aus Frischfaser bzw. Primärfaser bestehen. Einzelne oder alle Lagen können im Wesentlichen auch aus Sekundärfaser bestehen.

Der Papierwerkstoff kann über bis zu 15 Lagen verfügen, bevorzugt über zwischen 1 - 10 Lagen, besonders bevorzugt sind Körperpflegeprodukte aus 1, 2, 3, 4 oder 5 Lagen hergestellt. Die Lagen können dabei durch Laminieren, Zusammenkleben oder Zusammenpressen, insbesondere auch ohne Einsatz von Klebstoff, hergestellt werden.

Das fertige Körperpflegeprodukt kann zumindest in einzelnen Bereichen aus einer oder mehreren Schichten des Papierwerkstoffs gebildet sein. Beispielsweise können 1, 2, 3, 4, 5 oder 6 Schichten gebildet werden. Die totale Anzahl Lagen errechnet sich in diesem Fall durch die Summe der Lagen der einzelnen integrierten Schichten.

Mehrere Schichten können z.B. mittels Falten einer Schicht erzeugt werden. Die Schichten können sich teilweise oder ganz überlappen z.B. um eine Verbindung herzustellen und/oder mindestens teilweise einen Hohlkörper auszubilden.

Bei einem Produkt aus mehreren Schichten hat insbesondere ein Nachbearbeitungsschritt durch Laminieren/Verkleben/Pressen/Falten etc. stattgefunden. Es wurden insbesondere Schichtpakete erstellt. Es wurden insbesondere mehrere Schichten verbunden.

Eine einzelne Lage weist insbesondere ein Flächengewicht von 300 g/m² bis 500 g/m², vorzugsweise 350 g/m² bis 450 g/m² auf. Die Materialstärke der Lage beträgt insbesondere von 0,25 mm bis 0,65 mm, vorzugsweise von 0,35 mm bis 0,5 mm.

Das Material ist insbesondere so aufgebaut, dass Elemente für die Wasserresistenz vorzugsweise direkt im Papiermaterial eingebracht sind. Es wird daher insbesondere keine Beschichtung hierfür vorgesehen, sondern es werden bereits bei der Herstellung des Papierwerkstoffs Bestandteile beigemischt. Die Beimischung von Stärke, beispielsweise Kartoffelstärke, bringt beispielsweise eine Reduktion der Wasseraufnahme. Die Wasseraufnahme ist vorzugsweise möglichst gering, insbesondere nicht größer als 30%, vorzugsweise nicht größer als 25% und besonders bevorzugt nicht größer als 20%, wobei die Prozentzahl insbesondere eine prozentuale, maximale Gewichtszunahme des Papierwerkstoffs zwischen nass und trocken beschreibt. Zur Evaluation dieses Wertes wird ein Teststreifen wie nachfolgend beschrieben ins Wasser getaucht und zuvor und auch direkt anschließend gewogen.

Ferner kann die Faserausrichtung des Papierwerkstoffs längs oder quer ausgerichtet sein, wobei längs, d.h. in der Haupterstreckungsrichtung des Körperpflegeproduktes bevorzugt ist. Das Körperpflegeprodukt ist insbesondere so gestaltet, dass eine oder mehrere Schichten verwendet werden.

Mehrere Lagen bzw. Schichten können vorab verbunden werden und/oder im eigentlichen Produkterstellungsprozess verbunden werden, beispielsweise bei der Integration eines weiteren Elementes wie z.B. der Verbindungseinheit. Die Lagen bzw. Schichten werden insbesondere durch Laminieren, Verkleben, Falten und/oder Siegeln verbunden.

Eine Knick- bzw. Biegesteifigkeit des Papierwerkstoffs kann insbesondere durch interne Tests überwacht werden. Der Test kann dabei insbesondere vor und/oder während eines Prozesses durchgeführt werden. Der Test sieht dabei insbesondere vor, dass so lange gegen den Papierwerkstoff gedrückt wird, bis dieser nachgibt und knickt. Hierfür werden insbesondere Teststreifen in einer Länge von beispielhaft 100 mm und einer Breite von beispielhaft 30 mm eingesetzt. Ein Testaufbau sieht insbesondere vor, dass der Teststreifen an einem Einspannpunkt mit 63 mm ab freiem Ende eingespannt wird. Ein Druckpunkt liegt dann insbesondere wiederum 25 mm ab freiem Ende. Ferner sind verschiedene Testarten denkbar. So kann ein trockener Teststreifen verwendet werden. Das Material wird daher insbesondere so getestet wie er angeliefert wird. Alternativ oder zusätzlich kann ein nasser Teststreifen getestet werden. Dieser wird hierfür insbesondere ab freiem Ende 70 mm über zumindest 2 Sekunden in Wasser getaucht, anschließend abtropfen gelassen und darauffolgend direkt getestet. Alternativ oder zusätzlich kann ein Trocken-Nass-Teststreifen getestet werden. Das Vorgehen ist hierbei wie bei dem nassen Teststreifen, wobei der Teststreifen vor einem Test 24 Stunden trocknet. Der Trocken-Nass-Teststreifen dient insbesondere zu einer Simulation der Zahnreinigung mit Trocken-Nass-Zyklus. Eine einzelne Lage weist dabei trocken insbesondere eine Biegesteifigkeit von 0,8 N bis 2 N, vorzugsweise von 1 N bis 1,6 N auf. Der nass-trocken Teststreifen weist insbesondere eine Biegesteifigkeit von 0,8 N bis 2 N, vorzugsweise von 1 N bis 1,6 N auf. Mehrere verbundene Lagen, hier insbesondere 2 verbundene Lagen, weisen trocken insbesondere eine Biegesteifigkeit von 5 N bis 7 N, vorzugsweise von 5,7 N bis 6,7 N, nass von 1 N bis 2,5 N, vorzugsweise von 1,5 N bis 2 N, und nass-trocken insbesondere von 5 N bis 7 N, vorzugsweise von 5,7 N bis 6,7 N, auf.

Die Erfindung beschreibt insbesondere, dass der Papierwerkstoff vorzugsweise ein flächig vorbereiteter Werkstoff ist. Aus diesem Grund kann der Papierwerkstoff wie beschrieben synonym für Holz-, Furnier- oder auch Bambus-Werkstoffe verwendet werden, die dem Papier entsprechend vorzugsweise flächig vorbereitet sind bzw. verarbeitet werden. Die beschriebenen Ausführungsformen mit Papierwerkstoff können somit synonym mit den oben genannten alternativen Werkstoffen ausgeführt werden.

Das Vorbereiten des Holz- oder auch Bambus-Werkstoffs beinhaltet verschiedene Schritte. Das Holz bzw. der Bambus muss in einem ersten Schritt geschält werden, d.h. die Oberfläche beispielsweise des Stammes wird von der Rinde befreit. Im Anschluss wird eine flache Schicht ab dem Holz-/Bambus-Stamm abgetrennt, beispielsweise durch Abschälen wird so das Holz / der Bambus in eine dünne, flache Form gebracht, welche die Basis für die weitere Verarbeitung bildet. Aus dieser Schicht wird im Anschluss beispielsweise der Körper gestanzt, der dann benutzt werden soll. Vorzugsweise wird gleich komplett gestanzt - ohne dass später noch weiter gestanzt werden muss. Die auf diese Weise vorbereiteten Teile werden sodann geschliffen oder auch trowalisiert, damit die scharfen Kanten und Gräte entfernt werden und auch die Oberfläche entsprechend feiner wird. Falls die Körper eine 3D-Form erhalten, können sie anschließend mittels Druck, Wärme und/oder Feuchtigkeit verformt werden, damit sie fertig vorbereitet sind.

Eine 3D-Formung von Griffkörpern und auch ein Stanzen kann auch direkt im Spritzgusswerkzeug passieren. Dabei wird durch das Schließen des Spritzgusswerkzeugs beispielsweise gleichzeitig der Körper verformt, sodass er eine 3D-Geometrie erhält. Auf die gleiche Weise kann auch der Griffkörper gestanzt werden, durch das Schließen des Werkzeugs findet eine Stanzung statt. Die Formung und Stanzung im Spritzgusswerkzeug kann für alle beschriebenen Produkte und Werkstoffe realisiert werden.

Die verschiedenen Aspekte der Erfindung sind im Zusammenhang vorzugsweise aus flächigen Rohstoffen ausgestalteten Körpern beschrieben. Grundsätzlich können die Aspekte dennoch auch auf voluminösere Körper übertragen werden, beispielsweise zylinderförmige Körper (Stäbe) oder andere Volumen in 3D-Form. Dies kommt beispielsweise im Zusammenhang mit den beschriebenen Papierspritzguss- oder Papierguss- bzw. Faserguss-Verfahren zur Anwendung.

Durch die erfindungsgemäße Ausgestaltung des Körperpflegeprodukts können vorteilhafte Eigenschaften hinsichtlich einer Ergonomie sowie einer Herstellbarkeit des Körperpflegeprodukts bereitgestellt werden. Es kann insbesondere ein vorteilhaft ökologisches bzw. ein zu einem wesentlichen Teil aus nachhaltigen Werkstoffen bestehendes Körperpflegeprodukt bereitgestellt werden. Es kann insbesondere ein vorteilhaft leichtes und dadurch gut manövrierbares Körperpflegeprodukt bereitgestellt werden.

Es kann insbesondere eine vorteilhaft einfache Trennung bzw. Entsorgung des Körperpflegeprodukts erreicht werden. Ferner kann durch die Verbindungseinheit ein vorteilhaft langlebiges und stabiles Körperpflegeprodukt bereitgestellt werden.

Das Körperpflegeprodukt ist insbesondere von einem Rasierer, insbesondere einem manuellen Rasierer, einem Pinsel, insbesondere einem Applikationspinsel für kosmetische Anwendungen wie z.B. zur Haarfärbung, oder einem Applikator für medizinische Anwendungen wie z.B. Applikatoren im Dentalbereich wie beispielsweise Applikationspinsel für Hilfsmittel für Füllungen, Kronen oder dergleichen, oder einem Applikator für kosmetische Anwendungen beispielsweise ein Applikator für Mascara, und/oder einem Mundhygienemittel gebildet. Der Rasierer kann beispielsweise von einem Einwegrasierer oder einem Mehrwegrasierer mit einer wechselbaren Klinge gebildet sein.

Unter einem "Mundhygienemittel" soll insbesondere eine Zahnbürste und/oder ein Zungenreiniger oder ein Flosser verstanden werden. Vorteilhaft ist das Mundhygienemittel als eine Zahnbürste, insbesondere eine Handzahnbürste, ausgebildet. Das Mundhygienemittel kann hierbei bei einer Ausbildung als Zahnbürste insbesondere eine Einwegzahnbürste (für Einmalgebrauch), eine Mehrwegzahnbürste (für Mehrfachgebrauch) oder auch eine Wechselkopfzahnbürste sein. Das Mundhygienemittel könnte jedoch auch allgemein von einem Bürstenprodukt gebildet sein. Unter einem "Körperpflegeprodukt" soll insbesondere eine Mundhygienebürste und/oder eine Kosmetikbürste und/oder eine Haarbürste und/oder eine Haushaltsbürste verstanden werden. Als Mundhygienebürsten sind beispielsweise manuelle Zahnbürsten wie Mehrwegzahnbürsten, Wechselkopfzahnbürsten, Aufsteckbürsten für elektrische Zahnbürsten, Einwegzahnbürsten oder Single-Tuft-Bürsten oder Zungenreiniger oder Flosser denkbar. Als Körperpflegeprodukte, insbesondere Kosmetikbürsten, sind ferner beispielsweise Mascarabürsten, Nagellackpinsel, Gesichtsbürsten, Applikatoren, Massagegeräte, Make-up-Pinsel, Rasierpinsel und/oder Nassrasierer oder andere Körperpflegeprodukte denkbar.

Generell können auch medizinische Applikatoren, die in ähnlicher Form aufgebaut sind wie die Körperpflegeprodukte, mit der vorliegenden Erfindung realisiert werden, beispielsweise Applikatoren im Dentalbereich, wie beispielsweise Applikationspinsel für Hilfsmittel für Füllungen, Kronen oder dergleichen, Whitening Fluide oder ein Applikator für kosmetische Anwendungen, beispielsweise ein Applikator für Mascara.

Bei einer Ausbildung als Zahnbürste ist insbesondere denkbar, dass die Anwendungseinheit aus einem Grundkörper und einem Borstenplättchen, welches mit Borsten und/oder alternativen Reinigungselementen besetzt ist, zusammengesetzt ist. Weiter kann die Anwendungseinheit aus einem Grundkörper bestehen, welcher mit Borsten umspritzt bzw. besetzt wird, oder die Anwendungseinheit kann ohne Grundkörper direkt bzw. einstückig gespritzt sein. Vorzugsweise besteht das Körperpflegeprodukt aus einer Anwendungseinheit mit Borsten, der Verbindungseinheit und der Griffeinheit, wobei die Griffeinheit insbesondere einen Halsteil aufweist. Alle gespritzten Teilelemente können aus mindestens einer Hart- und/oder einer oder mehreren Weichkomponente/n und/oder einem oder mehreren Materialien für gespritzte Borsten bestehen.

Das Körperpflegeprodukt weist insbesondere eine Längsachse auf, die vorteilhaft zumindest im Wesentlichen parallel zu einer Haupterstreckungsrichtung des Körperpflegeprodukts angeordnet ist. Bevorzugt verläuft die Längsachse zumindest abschnittsweise innerhalb des Körperpflegeprodukts und insbesondere durch dessen Schwerpunkt. Insbesondere ist die Längsachse des Körperpflegeprodukts eine Zentralachse des Körperpflegeprodukts und/oder eine Zentralachse der Griffeinheit. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Punkten schneidet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter einer "Haupterstreckung" eines Objekts soll in diesem Zusammenhang insbesondere eine Erstreckung einer längsten Kante eines kleinsten gedachten Quaders, welcher das Objekt gerade noch vollständig umschließt, verstanden werden.

Vorteilhaft weist die Anwendungseinheit zumindest einen Reinigungsbereich auf, der zu einer Zahnreinigungsanwendung, insbesondere in einem Mundraum des Benutzers, vorgesehen ist. Vorzugsweise umfasst der Reinigungsbereich zumindest eine Reinigungseinheit. Die Reinigungseinheit kann einen Bürstenkopf, vorteilhaft einen Zahnbürstenkopf, bevorzugt mit mehreren Borsten und/oder Borstenbündeln und/oder gespritzten Reinigungselementen bzw. gespritzten Borsten und/oder weichelastischen Reinigungselementen, umfassen. Alternativ oder zusätzlich kann die Reinigungseinheit auch als ein Single Tuft (d.h. als einzelnes großes Borstenbündel), ein Zahnzwischenraumreinigungselement (z.B. Zahnseide, Zahnstocher, Stick etc.) oder dergleichen ausgebildet sein. Ferner weist die Anwendungseinheit vorteilhaft zumindest einen Grundkörper auf, welcher bevorzugt mit dem Reinigungsbereich, insbesondere unmittelbar und/oder einstückig, verbunden ist. Alternativ oder zusätzlich weist die Anwendungseinheit zumindest einen Applikationsbereich auf, der beispielsweise zu einer Speicherung und Abgabe einer Farbe, insbesondere einer Haarfarbe, vorgesehen ist. Alternativ oder zusätzlich weist die Anwendungseinheit zumindest einen Rasierbereich mit zumindest einer Klinge auf. Alternativ oder zusätzlich weist die Anwendungseinheit zumindest einen Applikationsbereich auf, der beispielsweise zu einer Speicherung und Abgabe eines Mediums, insbesondere eines Hilfsmittels für Füllungen, Kronen oder dergleichen insbesondere eines Dentalklebstoffs, -primers oder ähnlichem, vorgesehen ist. Dieser Applikationsbereich ist als Applikatorkopf ausgebildet, wobei die Form des Applikatorkopfs vorzugsweise kugelförmig oder ellipsoidförmig gestaltet ist. Die Oberfläche des Applikatorkopfs ist mit Elementen gestaltet, welche die Applikation bzw. Speicherung und / oder Abgabe eines Mediums unterstützen. Dabei können beispielsweise Ausnehmungen in der Oberfläche gestaltet sein, die dies ermöglichen oder der Applikatorkopf kann mit einer Beflockung versehen sein, welche dies ermöglicht. Die Ausnehmungen können rund um den Applikatorkopf ausgebildet sein oder nur partiell auf gewissen Teilflächen. Die Ausnehmungen können als einzelne isolierte Elemente realisiert sein - beispielsweise in Form von einzelnen Streifen, oder die Ausnehmung kann als eine durchgehende Form über den ganzen Körper gebildet sein - beispielsweise in Form einer Spirale.

Die Ausgestaltung eines entsprechenden Applikatorkopfs kann durch Spritzgießen erfolgen. Der Applikatorkopf kann an einen Griffkörper angespritzt werden, der Griffkörper wird damit umspritzt und die Verbindung zwischen dem Applikatorkopf und dem Griffkörper wird auf diese Weise ausgestaltet.

Ein Applikatorkopf für die Applikation eines Mundhygienemittels beispielsweise eines Whitening Fluids kann an einen Griffkörper angespritzt sein. Der Applikatorkopf, d.h. die Anwendungseinheit ist mittels der Verbindungseinheit mit der weiteren Verbindungseinheit bzw. der Griffeinheit verbunden. Die Anwendungseinheit trägt eine sich unter Speicheleinfluss öffnende Fluidkugel mit einer Whitening Flüssigkeit in einem Träger des Körperpflegeprodukts. Die Anwendungseinheit weist einen Träger mit einer Vertiefung und in dieser mit radial nach außenstehenden Lamellen auf, welcher im Zentrum eine Ausnehmung für die Fluidkugel bildet. Die Fluidkugel kann so von Wasser oder Speichel umflossen werden, wobei sie sich auflöst und die in sich tragende Flüssigkeit freisetzt. Alternativ zur Fluidkugel kann der entsprechende Bereich auch leer gestaltet sein, sodass ein Anwender eine Paste zur Anwendung in diese Öffnung einbringen kann. Die ganze Anwendungseinheit kann so im Mund beispielsweise an die Zähne geführt werden, um das Fluid auf die Zähne aufzubringen. Die Lamellen und die Form der Anwendungseinheit unterstützen dabei.

Unter "einstückig" soll insbesondere zumindest stoffschlüssig verbunden, beispielsweise durch einen Verbindungsprozess wie einen Schweißprozess, einen Siegelprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise weist die Griffeinheit zumindest ein Griffelement auf, das vorteilhaft zu einem Halten mit einer Hand vorgesehen ist. Es ist denkbar, dass das Griffelement zumindest bereichsweise tailliert und/oder mit einem konkaven Oberflächenbereich und/oder mit einem konvexen Oberflächenbereich ausgebildet ist. Das Griffelement verfügt vorzugsweise zumindest bereichsweise über einen Querschnitt, welcher ein U-Profil bildet. Dies erlaubt vorteilhaft eine höhere Stabilität, einen sicheren Halt und optimiert die Ergonomie. Besonders bevorzugt ist das Griffelement länglich ausgebildet, wobei vorteilhaft eine Längsachse des Griffelements der Längsachse des Körperpflegeprodukts entspricht. Das Griffelement ist zumindest im Wesentlichen, insbesondere vollständig, aus mindestens einem Papierwerkstoff ausgebildet. Alternativ oder zusätzlich kann das Griffelement und/oder die Griffeinheit zumindest teilweise aus einer Hartkomponente und/oder aus einer oder mehreren Weichkomponenten und/oder aus Material für gespritzte Borsten ausgebildet sein. Vorzugsweise ist der materielle Griffkörper zumindest zu einem Großteil, insbesondere vollständig, aus mindestens einem Papierwerkstoff ausgebildet. Insbesondere umfasst das Griffelement vorteilhaft zumindest einen Daumengriffbereich bzw. Fingerablagebereich und/oder zumindest einen Handgriffbereich. Vorteilhaft ist der Daumengriffbereich bzw. Fingerablagebereich auf der Vorderseite oder seitlich am Körperpflegeprodukt und insbesondere auf einer Vorderseite oder seitlich am Griffelement angeordnet. Es ist denkbar, dass der Daumengriffbereich und/oder der Handgriffbereich zumindest ein Element und/oder eine Oberflächenstrukturierung aus mindestens einem Papierwerkstoff, aus mindestens einer Weichkomponente und/oder mindestens einer Hartkomponente aufweisen/aufweist.

Die für die Herstellung eingesetzten Kunststoffe aus Hart- und/oder Weichkomponenten, welche mittels Spritzguss verarbeitet werden, können insbesondere wie folgt eingeteilt werden:
- Konventionelle Materialien bzw. Materialkomponenten: Materialien, im Wesentlichen Neumaterialien, die größtenteils erdölbasiert sind.
- Nachhaltige Materialien bzw. nachhaltige Materialkomponenten: wie nachfolgend aufgezählt und später beschrieben vorzugsweise biobasiert, abbaubar und/oder recycliert.
   ∘ Biobasierte Materialien: Material, welches insbesondere zu mehr als 60 %, vorzugsweise zu mehr als 80 % und besonders bevorzugt zu 100 % aus nachwachsenden Rohstoffen hergestellt ist. Eine weitere mögliche zusätzliche Eigenschaft biobasierter Materialien ist insbesondere, dass die biobasierten Materialien biologisch abbaubar sind. Vorzugsweise basieren die Materialien nicht auf Nahrungsmitteln, wie insbesondere Mais etc..
   ∘ Biologisch abbaubare Materialien: Material, das gemäß den gängigen Normen biologisch abbaubar ist. Hierzu zählt insbesondere die Kompostierbarkeit (industriell oder nicht-industriell). Dabei können Materialien aus nachwachsenden Rohstoffen diese Eigenschaft aufweisen.
   ∘ Recyclierte Materialien: Materialien, die aus einem Recycling-Prozess stammen, wie beispielsweise Post Consumer Recycled Materialien, Post Industrial Recycled Materialien, Ocean Waste Plastic oder Social Plastic. Besonders bevorzugt wird eine recyclierte Hartkomponente wie recycliertes Polypropylen (PP) oder recycliertes Polyethylenterephthalat (PET) verwendet. Die eingesetzten Materialien können recyclebare Materialien sein. Für recyclierbare Materialien besteht nach dem Gebrauch vorteilhaft eine Recyclingmöglichkeit.

Im Rahmen dieser Offenbarung kommen nahezu beliebige Hartkomponenten und Weichkomponenten infrage, die der Fachmann zweckgemäß geeignet kombinieren und/oder auswählen wird.

Als Hartkomponente kommen beispielsweise Styrolpolymerisate wie Styrolacrylnitril (SAN), Polystyrol (PS), Acrylnitrylbutadienstyrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephthalat (PET), insbesondere in Form von säuremodifiziertem

Polyethylenterephthalat (PETA) oder glykolmodifiziertem Polyethylenterephthalat (PETG), Polybutylenterephthalat (PBT), säuremodifiziertes Polycyclohexylendimethylenterephthalat (PCT-A), glykolmodifiziertes Polycyclohexylendimethylenterephthalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphthalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Als Hartkomponente wird bevorzugt Polypropylen (PP) eingesetzt. Mindestens gewisse als Hartkomponente genannte Materialien können nachhaltige Materialien sein. Insbesondere Materialien mit Celluloseanteil sind zumindest teilweise biobasiert.

Vorteilhaft werden Hartkomponenten für stabile und/oder strukturtragende Elemente, insbesondere in dem Griffelement und/oder in einem Verbindungselement der Anwendungseinheit oder dergleichen eingesetzt. Vorteilhaft ist denkbar, dass eine verwendete Hartkomponente und eine verwendete Weichkomponente unterschiedliche Farben aufweisen, sodass Oberflächenstrukturen, Beschriftungen, Motive und dergleichen mittels geeigneter Gestaltung von Grundkörper und Weichelement realisierbar sind.

Als Weichkomponenten kommen beispielsweise thermoplastische Styrol-Elastomere (TPE-S) wie etwa ein Styrol-Ethylen-Butylen-Styrol-Copolymer (SEBS), ein StyrolButadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar. Weiterhin kann eine Weichkomponente beispielsweise zumindest ein Silikon umfassen. Vorteilhaft weist eine Weichkomponente eine Shore-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss. Die unter der Weichkomponente genannten Materialien können nachhaltige Materialien sein. Hartkomponente, Weichkomponente oder Material für gespritzte Borsten bilden mit dem Papierwerkstoff keinen Materialschluss.

Das Körperpflegeprodukt weist bei einer Ausbildung als Zahnbürste insbesondere eine Vorderseite und eine Rückseite auf, die insbesondere einander abgewandt angeordnet sind. Vorzugsweise ist der Reinigungsbereich bzw. der Behandlungsbereich der Anwendungseinheit auf der Vorderseite des Körperpflegeprodukts angeordnet. Die Vorderseite ist insbesondere eine in einer Betrachtungsrichtung senkrecht zu der Längsachse des Körperpflegeprodukts und senkrecht zu der Breitenachse des Körperpflegeprodukts sichtbare Seite des Körperpflegeprodukts. Als Vorderseite des Körperpflegeprodukts ist insbesondere jene Seite der Bürste bezeichnet, auf welcher der Daumen aufgelegt wird. Die Vorderseite ist normalerweise auch jene Seite, auf welche das Borstenfeld gerichtet ist. Die Rückseite entspricht vorteilhaft einer in einer entgegengesetzten Betrachtungsrichtung sichtbaren Seite des Körperpflegeprodukts. Als Rückseite des Körperpflegeprodukts wird die dem Borstenfeld entgegengesetzte Seite der Zahnbürste bezeichnet. Als linke Seite des Körperpflegeprodukts wird insbesondere eine Seite bezeichnet, welche links liegt, wenn man senkrecht auf die Vorderseite des Körperpflegeprodukts blickt und der Reinigungsbereich oben liegt. Als rechte Seite des Körperpflegeprodukts wird insbesondere eine Seite bezeichnet, welche rechts liegt, wenn man senkrecht auf die Vorderseite des Körperpflegeprodukts blickt. Als Oberseite wird insbesondere ein Ende des Körperpflegeprodukts bezeichnet, an welchem der Reinigungsbereich angeordnet ist. Als Unterseite wird insbesondere ein der Oberseite entgegengesetztes Ende des Körperpflegeprodukts bezeichnet, welches dem Griffbereich am nächsten liegt.

Unter einer "Verbindungseinheit" soll in diesem Zusammenhang insbesondere eine Einheit verstanden werden, welche zu einer Bereitstellung einer festen und/oder lösbaren Verbindung zwischen zwei Einheiten, insbesondere Bauteilen, vorgesehen ist. Vorzugsweise verbindet die Verbindungseinheit die Anwendungseinheit mit der Griffeinheit. Bevorzugt sind die Anwendungseinheit und die Griffeinheit zumindest für eine Benutzung miteinander verbunden. Vorzugsweise kann die Verbindungseinheit sowohl von einer separaten Einheit gebildet sein, als auch zumindest teilweise fest mit der Griffeinheit und/oder der Anwendungseinheit verbunden sein. Die Verbindungseinheit weist insbesondere das Verbindungselement auf, welches fest mit der Anwendungseinheit verbunden ist, und das weitere Verbindungselement auf, welches fest mit der Griffeinheit verbunden ist. Darunter, dass zumindest ein erstes Element mit zumindest einem weiteren Element "verbunden" ist, soll insbesondere verstanden werden, dass das erste Element vorteilhaft über zumindest einen Kraftschluss und/oder zumindest einen Formschluss und/oder zumindest einen Stoffschluss mit dem weiteren Element verbunden ist. Ein Kraft- und/oder Formschluss ist dabei beispielsweise über eine Vernietung und/oder eine Rastverbindung und/oder eine Nut-Feder-Verbindung und/oder eine Nietverbindung und/oder eine Klemmverbindung und/oder eine Steckverbindung und/oder eine weitere, dem Fachmann als sinnvoll erscheinende Verbindung, realisierbar. Ein Stoffschluss ist dabei beispielsweise durch einen Schweißprozess und/oder einen Siegelprozess und/oder einen Klebeprozess, einen Umspritz- bzw. Anspritzprozess und/oder einen Verformungsprozess und/oder einen anderen, dem Fachmann als sinnvoll erscheinenden Prozess, realisierbar. Unter einer "formschlüssigen Verbindung" soll in diesem Zusammenhang insbesondere eine Verbindung verstanden werden, bei welcher aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Vorzugsweise ist insbesondere zwischen der Anwendungseinheit und der Griffeinheit ein Formschluss, wie beispielsweise durch aneinander angepasste Geometrien, und/oder ein Form- und/oder Stoffschluss, wie insbesondere durch ein Umspritz- bzw. Anspritzprozess, vorgesehen. So können insbesondere an der Anwendungseinheit, der Griffeinheit und/oder der Verbindungseinheit Vertiefungen, Ausnehmungen, Kämme und/oder Formschlusselemente vorgesehen sein. Insbesondere kann die formschlüssige Verbindung auch lediglich einer Orientierung der Verbindungsmöglichkeiten dienen, um bei einer Montage eine einfache Verbindung zu ermöglichen oder um beispielsweise bei einer Klebeverbindung schädliche Querkräfte abzufangen. Die Orientierung der Verbindungsmöglichkeiten kann insbesondere rund um die Griffeinheit erfolgen, wie beispielsweise bei einem Pinsel auf der Vorderseite, der Rückseite oder den kurzen Seiten. Wenn bei dem Körperpflegeprodukt lange und kurze Seiten vorhanden sind, erfolgt eine Orientierung der Verbindungsmöglichkeiten insbesondere an einer langen Seite.

Alternativ oder zusätzlich bestehen zusätzlich Befestigungsmöglichkeiten für eine Verbindung der Verbindungseinheit. Eine Befestigungsmöglichkeit stellt das Heißnieten dar. Hierbei wird das Verbindungselement mit einer Nietgeometrie gestaltet und an dem weiteren Verbindungselement montiert. Anschließend wird mittels eines heißen Stempels der Nietkörper verdrückt. Dies ist insbesondere auch bei einer Ausgestaltung des Körperpflegeprodukts als Flosser möglich, wenn jede Kappe mit einer Nieteinheit ausgestattet ist, welche sich beispielsweise durch eine Ausnehmung im Arm erstrecken kann. Eine weitere Befestigungsmöglichkeit stellt das Kleben dar. Eine weitere Befestigungsmöglichkeit stellt eine Schnappverbindung dar.

Eine weitere Befestigungsmöglichkeit stellt das Schweißen dar. Hierfür kann der Papierwerkstoff, insbesondere das weitere Verbindungselement, mit einer Folie aus Hartkomponente laminiert werden und ein Borstenfeld hergestellt aus einer kompatiblen Hartkomponente (z.B. mit dem AFT Verfahren) mit Schweißen, insbesondere Ultraschallschweißen oder Reibschweißen, verbunden werden.

Z.B. kann der Papierwerkstoff, insbesondere das weitere Verbindungselement, mit einer Folie aus Hartkomponente z.B. einer PA-Folie laminiert und/oder ein Borstenfeld aus PA Borsten (z.B. mit AFT hergestellt) mit Schweißen, insbesondere Ultraschallschweißen oder Reibschweißen, verbunden werden.

Z.B. kann der Papierwerkstoff mit einer PBT-Folie laminiert und/oder einem Borstenfeld aus PBT Borsten (z.B. mit AFT hergestellt) mit Schweißen, insbesondere Ultraschallschweißen oder Reibschweißen, verbunden werden.

Z.B. kann der Papierwerkstoff mit einer PP- oder PE-Folie laminiert und/oder ein dünner Bürstenkopf aus PP mittels Schweißen verbunden werden. Der Bürstenkopf aus PP oder PE kann mittels Ankerstanzen oder auch mittels ankerlosen Verfahren mit Borsten besetzt werden (z.B. AFT-, PTt-, Inmouldverfahren, etc.).

Z.B. kann der Papierwerkstoff mit einer PU-Folie laminiert und/oder ein dünner, gespritzter Bürstenkopf aus PU mittels Schweißen verbunden werden.

Alternativ kann der Papierwerkstoff mit einer Folie aus einer Kunststoffkomponente laminiert und dann mit einer kompatiblen Kunststoffkomponente umspritzt werden.

Z.B. kann der Papierwerkstoff mit einer PP- oder PE-Folie laminiert und/oder eine Verbindungseinheit bzw. Anwendungseinheit aus PP oder PE umspritzt, bzw. angespritzt werden.

Z.B. kann der Papierwerkstoff mit einer PU-Folie laminiert und mit gespritzten PU Borsten Komponenten umspritzt werden. Die gespritzten Borsten können im gleichen Arbeitsprozess mit dem Umspritzen ausgebildet werden.

Bei diesen Schweißprozessen sind die eingesetzten Materialien für den Schweißprozess affin bzw. kompatibel und gehen durch den Schweißprozess einen Stoffschluss ein.

Die für die Verbindungseinheit genannten Befestigungsmöglichkeiten bzw. Materialkombinationen können ebenfalls verwendet werden, falls die Anwendungseinheit direkt auf der Griffeinheit befestigt werden soll.

Die Verbindungseinheit weist insbesondere die Funktion auf, die Anwendungseinheit oder eine Schnittstelle der Anwendungseinheit mit der Griffeinheit zu verbinden. Die Verbindungseinheit weist insbesondere mehrere Funktionen auf. Insbesondere ist die Verbindungseinheit dazu vorgesehen, die Griffeinheit zu verbinden und die Anwendungseinheit zu halten. Die Verbindungseinheit bildet insbesondere eine Schnittstelle zu der Griffeinheit aus. Ferner kann die Verbindungseinheit insbesondere ein Wechselsystem enthalten, mit welchem die Anwendungseinheit ausgetauscht werden kann. Die Verbindungseinheit kann die Anwendungseinheit auch beweglich lagern.

Zudem kann die Verbindungseinheit beispielsweise eine Haltegeometrie zu einem Greifen bzw. Halten des Körperpflegeprodukts beispielsweise während der Anwendung aufweisen. Insbesondere kann die Verbindungseinheit über eine Fingerauflage(n) bzw. Daumenauflage verfügen. Diese Fingerauflage(n) kann über Strukturelemente verfügen, welche das Halten erleichtern. Die Griffeinheit ist vorzugsweise eher dünn und flächig geformt ausgestaltet, dies muss für die Verbindungseinheit nicht zutreffen, da sie aus einem Formteil gebildet wird. Die Verbindungseinheit kann daher steifer bzw. weniger flexibel (z.B. bezüglich Biegung, Torsion) ausgestaltet werden als das Griffeinheit. Die Komponente für die Verbindungseinheit wird vorzugsweise härter gewählt als die Komponente der Griffeinheit. Dadurch kann die Verbindungseinheit mittels derer Fingerauflage(n) bzw. Daumenauflage in der Anwendung eine wesentliche Rolle zum Führen bzw. Manövrieren des Produktes übernehmen.

Die Verbindungseinheit kann über Mittel verfügen, um eine Trennung von der Griffeinheit bzw. Anwendungseinheit zu erleichtern (z.B. für eine fachgerechte Entsorgung). Z.B. können Abzugslaschen, Sollbruchstellen, Trennhilfen, etc. vorgesehen sein.

So ist insbesondere eine Kombination aus verschiedenen genannten Funktionen denkbar, wie beispielsweise innen einer Einführungsgeometrie oder einer Stützgeometrie und außen eines Halteelements.

Ferner wird vorgeschlagen, dass das Verbindungselement der Verbindungseinheit zumindest teilweise einstückig mit der Anwendungseinheit ausgebildet ist. Vorzugsweise ist das Verbindungselement zumindest teilweise einteilig mit der Anwendungseinheit ausgebildet. Bevorzugt ist das Verbindungselement an einem der Griffeinheit zugewandten Ende der Anwendungseinheit angeordnet. Vorzugsweise bildet das Verbindungselement der Verbindungseinheit ein Teil der Anwendungseinheit. Bevorzugt bildet das weitere Verbindungselement der Verbindungseinheit ein Teil der Griffeinheit. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Dadurch kann insbesondere eine vorteilhaft zuverlässige Verbindungseinheit bereitgestellt werden. Ferner kann eine Anzahl an Bauteilen vorteilhaft gering gehalten werden.

Des Weiteren wird vorgeschlagen, dass das weitere Verbindungselement der Verbindungseinheit zumindest teilweise einstückig mit der Griffeinheit ausgebildet ist. Vorzugsweise ist das weitere Verbindungselement zumindest teilweise einteilig mit der Griffeinheit ausgebildet. Bevorzugt ist das weitere Verbindungselement an einem der Anwendungseinheit zugewandten Ende der Griffeinheit angeordnet. Bevorzugt bildet das weitere Verbindungselement der Verbindungseinheit ein Teil der Griffeinheit. Dadurch kann insbesondere eine vorteilhaft zuverlässige Verbindungseinheit bereitgestellt werden. Ferner kann eine Anzahl an Bauteilen vorteilhaft gering gehalten werden.

Es wird ferner vorgeschlagen, dass das Verbindungselement der Verbindungseinheit zumindest teilweise stoffschlüssig mit dem weiteren Verbindungselement der Verbindungseinheit verbunden ist, wobei das weitere Verbindungselement der Verbindungseinheit zumindest teilweise, insbesondere zumindest zu einem Großteil, aus einem Papierwerkstoff besteht. Vorzugsweise besteht das weitere Verbindungselement zumindest zu einem Großteil aus einem Papierwerkstoff, während das Verbindungselement zumindest zu einem Großteil aus einem Polymer, insbesondere einem Kunststoff, besteht. Bevorzugt ist das weitere Verbindungselement von dem Verbindungselement umspritzt ausgebildet. Es wird ferner vorgeschlagen, dass das weitere Verbindungselement der Verbindungseinheit mit dem Verbindungselement der Verbindungseinheit umspritzt ist. Vorzugsweise ist das Verbindungselement in einem Spritzgussverfahren direkt an dem weiteren Verbindungselement hergestellt. Bevorzugt ist das Verbindungselement in einem Spritzgussverfahren hergestellt, wobei sich das weitere Verbindungselement bei einer Herstellung des Verbindungselements insbesondere zumindest teilweise in einer Form des Verbindungselements befindet. Dadurch kann insbesondere eine vorteilhaft stabile Verbindungseinheit bereitgestellt werden.

Mit Umspritzen kann beispielsweise die Verbindungseinheit bzw. die Verbindung zwischen der Anwendungseinheit und der Griffeinheit realisiert werden. Zur Verarbeitung wird das weitere Verbindungselement in ein Spritzgusswerkzeug eingebracht, wo es im Anschluss umspritzt wird. Beim Einbringen des weiteren Verbindungselements in das Spritzgusswerkzeug wird das Element bzw. der Griffkörper im Werkzeug gehalten und in Grenzbereichen zwischen dem umspritzten und dem nicht umspritzten Teil abgedichtet. Ein Abdichten kann beispielsweise durch ein Vorspannen bzw. Drücken passieren, indem das Werkzeug auf das weitere Verbindungselement bzw. den Griffkörper drückt und ihn auf diese Weise etwas verdrückt. Der Druck, der sich so auf das weitere Verbindungselement und/oder den Griffkörper aufbaut und zwischen dem weiteren Verbindungselement und dem Spritzgusswerkzeug wirkt, dient dem Abdichten. Dadurch wird verhindert, dass sich die plastifizierte Kunststoffkomponente entlang dem Griffkörper ausdehnt und dadurch Überspritzungen ungewollt entstehen.

Der Druck, der durch das Spritzgusswerkzeug bzw. die Kavitätenwand ausgeübt wird, wird durch eine Differenz der Masse des eingelegten weiteren Verbindungselements und/oder des Griffkörpers und der Kavitätenwand geschaffen. Im Fall eines runden zylindrischen oder hohlzylindrischen weiteren Verbindungselements beträgt die Differenz im Durchmesser zwischen 0,05 mm und 0,5 mm, vorzugsweise zwischen 0,1 mm und 0,3 mm. Generell taucht die Kavitätenwand pro Fläche zwischen 0,025 mm und 0,25 mm, vorzugsweise zwischen 0,05 mm und 0,15 mm in die Oberfläche des weiteren Verbindungselements und/oder des Griffkörpers ein und bildet den entsprechenden Vorspann.

Die Verbindung zwischen dem weiteren Verbindungselement und dem Verbindungselement, das durch Umspritzen geschaffen wird, kann auf verschiedene Weise passieren. Das weitere Verbindungselement kann beispielsweise mittels eines Form- bzw. Kraftschlusses mit dem Verbindungselement verbunden werden. Dabei kann sich der Formschluss auf verschiedene Weise ausprägen. Beispielsweise kann sich das weitere Verbindungselement beim Einspritzen aufgrund der Einspritzdrücke deformieren, sodass sich ein oder mehrere Hinterschnitte ausbildet(n), welche(r) die Verbindung stabilisiert. Die Deformation ist geplant und geht nur soweit, dass keine Defekte am weiteren Verbindungselement entstehen. Der Formschluss kann sich auch dadurch ausbilden, dass sich der eingespritzte Kunststoff an die Oberfläche anschmiegt und auch in Poren und Hohlräume in der Oberfläche eindringt und sich so ein Formschluss und/oder Reibschluss ausbildet. Der Formschluss kann sich auch dadurch ausbilden, dass der eingespritzte Kunststoff mittels Spritzdruck die vorab im Wesentlichen glatte Oberfläche mindestens teilweise deformiert bzw. rauer wird und sich so ein Formschluss und/oder Reibschluss ausbildet.

Weiter ist es auch möglich, an dem weiteren Verbindungselement Ausnehmungen beispielsweise in Form von Sacklöchern, Durchgangslöchern, Nuten, Rillen zu schaffen, die vom Kunststoff umflossen oder durchflossen werden. Es bildet sich eine feste, formschlüssige Verbindung aus. Der Griffkörper kann auch soweit vorbereitet werden, dass die Oberfläche im Kontaktbereich - in welchem die Umspritzung realisiert wird - vorab aufgeraut wird und die Kunststoffkomponente mindestens teilweise leicht in die Oberfläche eindringen kann. Dadurch kann die Verbindung auf der Oberfläche mittels Reibschluss verbessert werden.

Weiter können auf der Oberfläche des Papierwerkstoffs im Bereich der späteren Umspritzung Mikrostrukturen geschaffen werden. Beim Umspritzen kann so die Kunststoffkomponente die Mikrostrukturen umfließen und so für eine Haftung/mechanische Verbindung schaffen.

Wie bereits erwähnt kann zusätzlich oder alternativ die Griffeinheit aus Papierwerkstoff mit einer Folie aus Kunststoffkomponente ein- oder beidseitig laminiert sein. Beim Umspritzen mit der gleichen oder einer kompatiblen, bzw. affinen Kunststoffkomponente entsteht dann der gewünschte Materialschluss. Dieses Vorgehen bietet sich bei mit der laminierten Folienkomponente kompatiblen Hart-, Weichkomponenten, nachhaltigen Kunststoffkomponenten oder auch Komponenten für gespritzte Borsten an.

Das Umspritzen und Verbinden mittels Form- und/oder Kraftschluss gemäß vorheriger Beschreibung kann auch mit einem minimierten umspritzten Körper passieren. Die Möglichkeit kann genutzt werden, um eine Basis für die weitere Verarbeitung zu schaffen. Beispielsweise um eine Weichkomponente aufzubringen, welche sich schwer mit dem weiteren Verbindungselement aus Papierwerkstoff verbinden lässt. So kann eine Hartkomponente angespritzt werden, welche am Papierwerkstoff angebracht ist, auf welche im Anschluss die Weichkomponente angebracht wird. Wobei die Hart- und die Weichkomponente einen Materialschluss eingehen. Die Hartkomponente wird somit dazu verwendet indirekt eine Weichkomponente mit guter Haftung auf dem Papierwerkstoff anzubringen.

Beispielsweise kann der Papierwerkstoff mittels PP oder PE Form schlüssig umspritzt werden und anschließend die Weichkomponente aus TPE auf den Umspritzkörper aus PP oder PE erneut aufgespritzt werden. Das PP geht dann mit dem Papierwerkstoff eine formschlüssige, jedoch keine materialschlüssige Verbindung ein. Die Weichkomponente aus TPE kann jedoch anschließend eine materialschlüssige Verbindung mit dem PP eingehen. Selbstverständlich sind zusätzlich auch formschlüssige Verbindungen möglich.

Analog zum oben beschriebenen Verfahren mittels Laminieren einer Folie aus Kunststoffkomponente auf dem Papierwerkstoff kann auch eine kompatible

Weichkomponente auf dem Papierwerkstoff bzw. der darauf laminierten Folie materialschlüssig aufgespritzt werden.

Weiter ist es möglich den Papierwerkstoff vorzubehandeln, um ein Umspritzen zu ermöglichen. So kann eine Kunststofffolie im Rahmen eines Standardprozesses der Papierverarbeitung auf den Papierwerkstoff aufgebracht werden. Diese auf dem Papierwerkstoff laminierte Kunststofffolie ist dann vorzugsweise kompatibel mit der aufgespritzten Weich- und/oder Hartkomponente und diese kann damit materialschlüssig aufgespritzt werden. Die Verbindung zwischen der Umspritzkomponente und der Kunststoff-Oberfläche ist in diesem Fall eine Materialverbindung und bildet einen Materialschluss. Beispielsweise kann auf dem Papierwerkstoff ein oder zweiseitig eine Folie aus PP oder PE laminiert sein. Falls anschließend mit einer Hartkomponente aus PP oder PE oder einer Weichkomponente aus TPE umspritzt wird entsteht der gewünschte Materialschluss und eine vorteilhafte Haftung.

Die Oberfläche des Papierwerkstoffs kann aber auch derart behandelt werden, dass sie mit einem Haftvermittler versehen wird, und auf diese Weise ansonsten nicht mögliche Materialkombinationen ermöglicht. Dieser Haftvermittler, auch Adhäsionsförderer genannt, verstärkt oder ermöglicht erst die Bindung zwischen der Kunststoffkomponente und dem Papierwerkstoff und wird auf die Oberfläche des Papierwerkstoffs aufgebracht.

Weiter alternativ ist es möglich, Hilfsstoffe, welche die Verbindung beim Umspritzen unterstützen, direkt im Papierwerkstoff zu integrieren. Damit wird die Verbindung erst ermöglicht. Beispielsweise kann ein Haftvermittler oder eine kompatible Kunststoffkomponente direkt im Papierwerkstoff integriert bzw. eingearbeitet sein. Es kann eine Mischung aus einer Kunststoffkomponente und Papierfasern zu einer Folie verarbeitet sein.

Das Umspritzen kann insbesondere für Papierwerkstoffe und wie erwähnt auch für Holz und Bambus genutzt werden. Insbesondere gelten die oben erwähnten Verbindungsmöglichkeiten analog für Bambus und Holz, alternativ zum flächigen Papierwerkstoff wird flächiger Holzwerkstoff oder Bambuswerkstoff verwendet.

Beim Umspritzen wird die Hart- und/oder Weichkomponente mit einem Spritzdruck von 600 bar bis 1500 bar, vorzugsweise von 800 bar bis 1300 bar eingespritzt.

Die Körper, die umspritzt werden, können eine spezielle Oberflächenbehandlung erfahren, bevor sie verarbeitet werden oder nicht.

Die aus flächigen Papierwerkstoff geformten Körper, die umspritzt werden, können beliebige Formen aufweisen. Beispielsweise können sie mindestens teilweise oder komplett flach, flächig geformt, gefaltet, etc. sein und in einem Teilbereich ganz oder teilweise umspritzt werden.

Weiter kann der Körper mindestens teilweise einen Zylinder oder einen Hohlzylinder (ein Rohr), einen Kegel bzw. einen Hohlkegel, eine Pyramide bzw. eine Hohlpyramide bilden. Die Querschnitte dieser Körper können beliebige Formen ausbilden, beispielsweise (kreisrund, elliptisch, n-eckig, vorzugsweise 3-eckig oder 4-eckig. Diese Körper können mindestens teilweise mit einer Kunststoffkomponente umspritzt sein.

In diesem Fall ist es bevorzugt, dass die Umspritzung an einem Ende des Körpers erfolgt und im Fall des Hohlkörpers ist es möglich, dass die Kunststoffkomponente des Umspritz-Materials einen Teil des Hohlraums füllt. Werden Hohlkörper umspritzt, so werden die Hohlkörper vorzugsweise im Innenbereich (Hohlraum) mittels eines Stempels bzw. Kerns im Spritzgusswerkzeug gestützt. Der Stempel wird in den Hohlraum eingefahren, stützt den Körper und begrenzt am Ende auch die Umspritzung, falls die Material-Komponente in den Hohlraum eindringt. Es ist alternativ auch möglich den Papierwerkstoff im flachen Zustand zu umspritzen und anschließend zum Körper zu formen.

Insbesondere bei Körpern, die im Wesentlichen im flachen Zustand umspritzt werden, kann es nötig sein, den Körper zu stützen bzw. zu positionieren, damit die Kunststoffkomponente, die eingespritzt wird, das weitere Verbindungselement bzw. den Körper an dieser Stelle nicht verschiebt und das Umspritzen um den ganzen Körper passieren kann. Dazu können beispielsweise in der jeweiligen Kavität des Spritzgusswerkzeugs kleine Stützen eingebracht sein, die das weitere Verbindungselement bzw. den Körper in der vorgesehenen Position halten. Die Stützen sind beispielsweise kleine Zylinder oder Stifte, die später von der Kunststoffkomponente umflossen werden.

Weiter wäre es möglich, den Körper in mehreren Schritten zu umspritzen. Dies ist beispielsweise bereits vorgängig erwähnt, mit dem Anspritzen einer zweiten Komponente an eine erste Komponente, welche mit dem Papierwerkstoff verbunden ist. Neben diesem flächigen Fall ist es auch möglich, in einem ersten Schritt isolierte Noppen aus Hartkomponente anzuspritzen, welche einerseits für einen weiteren Umspritz-Schritt als Distanzhalter zur Kavitätenwand dienen, zum anderen aber auch als Halte-, bzw. Fixierpunkte für Weichkomponenten dienen können. Die Weichkomponente würde in einem zweiten Schritt an die erste Komponente und das Papier angespritzt. Der Materialschluss würde zwischen Hart- und Weichkomponente entstehen.

Weiter kann der umspritzte Körper nachbehandelt werden. Beispielsweise kann der Körper beflockt werden.

Im vorliegenden Fall kann die Anwendung auch mit einem Griffkörper aus Holz oder Bambus realisiert werden.

Die beschriebene flache Form des Griffkörpers kann insbesondere auch für Zahnbürsten und Rasierer genutzt werden. Ein flacher Griffkörper wird in das Spritzgusswerkzeug eingelegt und umspritzt. Als Variante kann der Körper beispielsweise nachträglich noch gefaltet werden, um ihm dennoch eine 3D-Form zu geben, beispielsweise einer Form analog des beschriebenen gefalteten Griffs mit einem dreieckigen Querschnitt für Zahnbürsten oder auch Rasierer.

Das umschriebene Umspritzen des Papierwerkstoffs bzw. eines Holz- oder Bambuswerkstoffes kann auch für andere Produkte wie Verbrauchsmaterial für die Zahnarztpraxis, wie z.B. Zungenniederhalter oder für Besteck wie z.B. Messer, Gabel, Löffel, Kaffeerührsticks, Eislöffel etc. verwendet werden. Ferner kann ein Kunststoffteil an einem Papierwerkstoff angespritzt werden, indem der plastifizierte Kunststoff (z.B. ein Thermoplast) form- und/oder kraftschlüssig an den Papierwerkstoff angespritzt wird.

Es wird weiter vorgeschlagen, dass die Anwendungseinheit zumindest einen Zahnseidefaden, insbesondere eine Zahnseide, aufweist, wobei der Zahnseidefaden von dem Verbindungselement der Verbindungseinheit umspritzt ist. Der Zahnseidefaden ist insbesondere von einer Zahnseide gebildet.

Die Garnstärke beträgt insbesondere zwischen 500 und 2000 Dtex, vorzugsweise zwischen 800 und 1200 Dtex. Die Verwendung von einem Zahnseidefaden mit geringem Querschnitt bringt insbesondere weniger Kraft in der Anwendung, was weniger Kraft auf den Griffkörper beziehungsweise auf die Verbindungselemente bzw. die Verbindungseinheit mit sich bringt. Hierdurch kann die Gefahr des Knickens oder Brechens des Griffkörpers bzw. das Ausreißen des Fadens vermindert werden.

Der Zahnseidefaden besteht vorzugsweise aus einer Hartkomponente insbesondere Polypropylen, Polyethylen, z.B. ein HMWPE (High Molecular Weight Polyethylene), Polyamid oder Polyester.

Der Zahnseidefaden kann aus einer nachhaltigen Kunststoffkomponente bestehen, beispielsweise aus PA10.10 (auf Basis von Rizinusöl), PLA, , Cellulose.

Vorzugsweise ist die Kunststoffkomponente des Zahnseidefadens mit dem Material des Verbindungselements kompatibel bzw. affin und bildet beim Umspritzen einen Materialschluss. Gleiches gilt insbesondere auch beim Schweißen des Zahnseidefadens auf eine Oberfläche des Papierwerkstoffes. Der Papierwerkstoff ist in diesem Fall mit einer Kunststofffolie laminiert oder besteht aus einem Gemisch der Kunststoffkomponente und Papierfasern.

So kann ein PE-Faden beispielsweise auf eine mit einer PP oder PE Folie beschichtete Oberfläche aus Papierwerkstoff gesiegelt, geschweißt oder mit PP oder PE umspritzt werden. Weiter kann ein PA-Faden beispielsweise auf eine mit einer PA Folie beschichtete Oberfläche aus Papierwerkstoff gesiegelt, geschweißt oder mit PA umspritzt werden. Weiter kann ein Polyester-Faden beispielsweise auf eine mit einer Polyester Folie beschichtete Oberfläche aus Papierwerkstoff gesiegelt, geschweißt oder mit Polyester umspritzt werden. Weiter kann ein PLA-Faden beispielsweise auf eine mit einer PLA Folie beschichtete Oberfläche aus Papierwerkstoff gesiegelt, geschweißt oder mit PLA umspritzt werden.

Mögliche Kombinationen sind beispielsweise Zahnseidefaden aus PE und Verbindungselement aus PE oder PP, Zahnseidefaden aus PA und Verbindungselement aus PA oder Zahnseidefaden aus Polyester und Verbindungselement ebenfalls aus Polyester.

Der Griffkörper für ein als Flosser ausgebildetes Körperpflegeprodukt kann insbesondere als Einzelstück oder im Bogen bereitgestellt werden. Bei einer Bereitstellung als Einzelstück ist der Griffkörper fertig aus dem Papierwerkstoff gestanzt, d.h. der Körper aus Papierwerkstoff braucht keine Nachbearbeitung bezüglich weiterem Abtrennen von Papierwerkstoff an der Peripherie.

Bei einer Bereitstellung als Bogen erfolgt entweder keine Vorstanzung, wobei ein Stanzen später inline mit dem Spritzgießen erfolgt, oder der Bogen wird vorgestanzt. Der Bogen kann dabei lediglich teilweise vorgestanzt sein, wobei beispielsweise nur eine Schnittstellengeometrie im Umspritzbereich, also die Geometrie, die später umspritzt wird, vorgestanzt wird. Der Griffkörper wird durch die Vorstanzung für die Umspritzung vorbereitet, wobei der Bogen soweit freigestellt wird, dass die Umspritzung möglich ist. Alternativ wäre auch denkbar, dass der Bogen bis auf Haltepunkte am Bogen komplett gestanzt ist. Der Griffkörper kann daher soweit ausgestanzt sein, dass einerseits die Schnittstellengeometrie freigestellt ist und zum anderen der weitere Körper bis auf Haltepunkte am Bogen freigestellt ist. Die Haltepunkte sind dabei dafür da, dass ein einfaches Handling mit dem Bogen möglich ist, indem die Körperpflegeprodukte noch im Bogen zusammengehalten werden. Die Haltepunkte sind dabei insbesondere nicht im Bereich der Umspritzung. Vorzugsweise kann eine Breite der Haltepunkte in Schnittrichtung von 1 mm bis 4 mm, vorzugsweise von 1,5 mm bis 3 mm betragen. Die Abstände zwischen den Haltepunkten betragen insbesondere von 10 mm bis 50 mm, vorzugsweise von 15 mm bis 30 mm. Die Abstände sind vorzugsweise möglichst groß, sodass so wenig wie möglich Haltepunkte existieren, da jeder Haltepunkt eine potentielle Quelle für Fehler bzw. eine unschöne Fortsetzung bzw. Diskontinuität der Kontur nach dem Ausstanzen sein kann, da alles toleranzbehaftet ist. Abhängig von der Geometrie des finalen Körperpflegeprodukts und vom Material können die Abstände insbesondere variieren. Beispielsweise sind die Abstände größer, wenn stärkeres Material verwendet wird, während die Abstände kürzer sind, wenn eine finale Geometrie filigraner ist, insbesondere damit der Griffkörper sauber eingelegt werden kann und das Material nicht flattert, d. h. instabil ist beim Umlegen. Der Vorteil von Bögen ist insbesondere das Handling mehrerer Griffkörper gleichzeitig. Es können insbesondere mehrere Griffkörper in einem bewegt werden. Ferner ist auch das Einlegen ins Werkzeug aufgrund der Größe einfacher und die Fehlerquelle somit geringer. Die Anzahl pro Griffkörper nebeneinander auf einem Bogen beträgt insbesondere von 2 bis 20, vorzugsweise von 4 bis 12.

Eine Problematik beim Stanzen ist insbesondere, dass eine Schnittkante auf der Messer-Eintrittsseite gerundet wird. Beim Eindringen wird das Material durch die Klinge in Stanzrichtung eingedrückt und somit auf der Seite des eindringenden Messers gerundet. Gleichzeitig wird eine Schnittkante auf der Messer-Austrittsseite scharfkantig. Auf der Austrittsseite des Stanzmessers entsteht eine scharfe Schnittkante, welche für die Anwendung im Mundhygienebereich problematisch sein kann. Dem kann durch Nachbearbeitung entgegengewirkt werden, um die Schnittkante zu verrunden. So kann eine Schnittkante nachträglich entgratet, gepresst und/oder umspritzt werden. Der Radius beträgt von 0,1 mm bis 2 mm, vorzugsweise von 0,2 mm bis 0,7 mm. Weiter ist es möglich das gestanzte Teil zu schleifen, trowalisieren, entgraten, erhitzen, pressen, formen und/oder zerdrücken, um die Schnittkante zu entschärfen. Falls ein Teil umspritzt wird, kann das Pressen, Formen oder Zerdrücken direkt im Spritzgusswerkzeug passieren.

Bei nicht vorgestanzten Bögen kann eine Stanzung vor dem Umspritzen nötig sein, da die Schnittstelle für das Spritzgießen freigestellt sein muss. Das Stanzen kann hierfür inline mit dem Spritzgießen erfolgen. Inline heißt, dass verschiedene Herstellungsprozesse miteinander auf einer Maschine oder mittels gekoppelten Maschinen in einer Fließfertigung verbunden sind.

Bei einer Ausbildung als Flosser weist der Papierwerkstoff des Griffkörpers insbesondere von 1 bis 10 Lagen, vorzugsweise von 1 bis 5 Lagen und besonders bevorzugt drei Lagen auf. Diese Lagen bilden eine Schicht. Die Anzahl der Lagen hängt insbesondere von der gewünschten Endstärke bzw. Stabilität des Griffkörpers ab. Es können insbesondere viele dünne Lagen oder wenige dickere Lagen realisiert werden. Die Lagen werden vorzugsweise verbunden. Durch das Realisieren des Griffkörpers in mehreren Lagen ergeben sich Stabilitätsvorteile gegenüber einem Körper aus einer oder weniger Lagen. Der Papierwerkstoff weist insbesondere eine Materialstärke von 0,8 mm bis 2,5 mm, vorzugsweise von 1 mm bis 1,8 mm, auf. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Der Papierwerkstoff kann ferner durch Lackierung, Bedruckung oder das Aufbringen einer wasserabweisenden Beschichtung behandelt sein.

Bei einer Ausbildung als Flosser ist die Form des Griffkörpers im Bereich des Zahnseidefadens insbesondere U-förmig gestaltet, um eine Zugänglichkeit zu den Zähnen zu gewährleisten. Ein Griffbereich des Griffkörpers kann gerade, also insbesondere senkrecht zu einer Erstreckung der Zahnseide, oder schräg d. h. in einem Winkel zu dem Zahnseidefaden verlaufen. Der Winkel beträgt 15° bis 70°, vorzugsweise 25° bis 45°. Das Körperpflegeprodukt weist bei einer Ausbildung als Flosser insbesondere eine Länge von 40 mm bis 100 mm, vorzugsweise von 60 mm bis 90 mm, auf. Eine Breite der Arme beträgt insbesondere wenigstens 5 mm, vorzugsweise wenigstens 6 mm, besonders bevorzugt wenigstens 8 mm. Eine dünnste Stelle der Arme ist insbesondere im Bereich gegen das freie Ende der Arme. Ein Verhältnis der Dicke des Papierwerkstoffs des Griffkörpers zu Breite der Arme beträgt insbesondere von 1:3 bis 1:7, vorzugsweise von 1:3.5 bis 1:5. Der Abstand der Arme beträgt insbesondere von 10 mm bis 25 mm, vorzugsweise von 12 mm bis 20 mm und entspricht der freien Länge des Zahnseidefadens.

Das weitere Verbindungselement aus Papierwerkstoff kann beispielsweise mit einem Verbindungselement aus Kunststoff (Hart- oder Weichkomponente) umspritzt werden, um einen Flosser auszubilden und mit dem Umspritzen den Zahnseidefaden zu fixieren. Der Zahnseidefaden wird im Endbereich des Griffkörpers, d.h. im Kopfbereich in einer U-förmigen Geometrie mit zwei Schenkeln bzw. Armen gehalten. Die jeweiligen Schenkel sind dabei in ihren Endbereichen mit Kunststoff versehen, in welcher der Zahnseidefaden fixiert ist. Der Kunststoff umspritzt dabei einerseits einen Teil des Griffkörpers bzw. des weiteren Verbindungselements und andererseits einen Teil des Zahnseidefadens, jeweils auf beiden Schenkeln, und schafft so eine Verbindung zwischen Zahnseidefaden und Griffkörper.

In der Herstellung wird dazu ein Griffkörper, der mit zwei Teil-Schenkeln im späteren Kopfbereich ausgestattet ist, und/oder das weitere Verbindungselement aus Papierwerkstoff bereitgestellt. Die Enden der Teilschenkel sind für ein Umspritzen vorbereitet, vorzugsweise sind sie symmetrisch vorbereitet und gleich ausgestattet.

Beim Umspritzen des Zahnseidefadens wird dieser vorzugsweise von den Enden der Teilschenkel leicht beabstandet, damit die Kunststoffkomponente den Zahnseidefaden in diesem Teilbereich vollständig umfließen kann und damit eine optimale Verankerung bildet. Weniger bevorzugt berührt der Zahnseidefaden die Enden der Teilschenkel mindestens teilweise. Die Kunststoffkomponente zum Umspritzen sowie die Kunststoffkomponente des Zahnseidefadens gehen vorzugsweise einen Materialschluss ein.

Die Enden des Zahnseidefadens können vorzugsweise nach dem Umspritzprozess angeschmolzen werden. Dies kann die Haftung des Zahnseidefadens in der Kunststoffkomponente weiter verstärken, weil das Kugel-, bez. pilzförmige Ende des angeschmolzenen Zahnseidefadens eine zusätzliche mechanische Verankerung bildet.

Der Vorteil dieser Ausgestaltung bzw. des Herstellprozesses des Flossers liegt darin, dass der Papierwerkstoff vorzugsweise in nur einer Schicht (allenfalls bestehend aus mehreren Lagen) bereitgestellt werden muss und nicht mehrere Schichten verbunden werden, zwischen welchen der Zahnseidefaden fixiert wird. Dies vereinfacht die Herstellung maßgeblich. Der Kunststoffanteil soll so gering wie möglich gehalten werden. Der Anteil von Kunststoff und Zahnseidefaden am gesamten Produkt soll idealerweise 5% des Gewichts nicht überschreiten, damit ein Recycling des Produkts im Papier- bzw. Karton-Recycling möglich ist. Idealerweise wird zudem ein Kunststoff auf nachhaltiger Basis eingesetzt. Bevorzugt wird eine nachhaltige Kunststoffkomponente für den Zahnseidefaden und/oder für das Umspritzen verwendet, welche biologisch abbaubar ist.

Ferner wird vorgeschlagen, dass das Verbindungselement der Verbindungseinheit aus einem Hartkunststoff besteht. Vorzugsweise ist der Hartkunststoff in einem Spritzgussverfahren verarbeitbar. Bevorzugt ist das Verbindungselement dazu vorgesehen, in einem Spritzgussverfahren hergestellt zu werden. Das Verbindungselement besteht insbesondere aus einer Hartkomponente.

Das Verbindungselement besteht bevorzugt aus Polypropylen (PP) und/oder einem nachhaltigen und/oder abbaubaren Material. Eine weitere Variante wäre die Verwendung von Polyethylen (PE). Wie bereits beschrieben kann der Papierwerkstoff mit einer Folie laminiert werden. Die Folie wird ein oder beidseitig als äußere Lage angebracht. Alternativ ist die Kunststoffkomponente mit den Papierfasern zu einer Folie verarbeitet. Die Kunststoffkomponente zum Umspritzen des Papierwerkstoffes bzw. zur Herstellung des Verbindungselementes geht mit der Kunststoffkomponente der Folie einen Materialschluss ein.

Neben dem Grundaufbau mit den erwähnten Komponenten ist selbstverständlich auch ein Überspritzen mit einer weiteren Kunststoffkomponente möglich. So könnte insbesondere eine weitere Kunststoffkomponente auf die erste Kunststoffkomponente des Verbindungselements aufgebracht werden. Vorzugsweise bilden die beiden Kunststoffkomponenten einen Materialschluss. Alternativ oder zusätzlich könnte die weitere Kunststoffkomponente auch mindestens teilweise auf den Papierwerkstoff aufgebracht werden, wobei hierbei eine entsprechende technische Gestaltung für die Verbindung nötig ist. Alternativ oder zusätzlich sind auch alternative Materialien denkbar. So ist beispielsweise ein Spritzgussmaterial auf Papier-Basis denkbar, wobei grundsätzlich die Eigenschaften ähnlich der erwähnten Hartkomponenten sein müssen.

Ferner sind weitere Funktionen des Körperpflegeprodukts denkbar. So können beispielsweise weitere Teile des Griffkörpers umspritzt sein. Es kann insbesondere beispielsweise eine Geometrie zum Halten, wie beispielsweise Noppen durch Ausnehmungen im Griffkörper vorgesehen sein. Ferner kann eine Zahnstocherspitze durch Umspritzen ausgebildet sein. Ferner wäre auch denkbar, dass eine Umspritzung weiter verbessert wird. So kann beispielsweise das Haften des Verbindungselements am Griffkörper durch Verwendung affiner/kompatibler Materialien verbessert werden. Alternativ kann der Griffkörper eine Beschichtung aus einem kompatiblen Material aufweisen. Eine entsprechende Beschichtung könnte beispielsweise eine PE-Beschichtung für eine PE-Umspritzung sein. Ferner wäre auch eine Nachbearbeitung des Körperpflegeprodukts denkbar. So kann beispielsweise eine Schicht/Beschichtung auf das ganze Körperpflegeprodukt oder einen Teil des Körperpflegeprodukts aufgebracht werden. Mögliche Positionen der Schicht könnten beispielsweise eine Zahnstocherspitze sein, auf der ein Mundpflegemittel auftragen ist. Alternativ könnte das ganze Körperpflegeprodukt, beispielsweise mit einem Lack, beschichtet sein, wobei die Beschichtung beispielsweise eine Stabilität und/oder Wasserfestigkeit des Körpers verbessert oder eine Oberflächenbeschaffenheit verändert. Als Medium für eine entsprechende Schicht kommen beispielsweise Mundpflegemittel, Lacke oder dergleichen in Frage. Ein Auftrag kann beispielsweise mittels Tauchen, wobei Teile des Körperpflegeprodukts in ein Tauchbad getunkt werden, mittels Bedrucken, Besprühen oder mittels Bestreichen erfolgen.

Ein Zahnstocher kann insbesondere beispielsweise auf einer der Anwendungseinheit abgewandten Seite durch eine spezielle Behandlung dieses Bereiches erzeugt werden. Beispielsweise kann dieser Bereich mittels Verpressen des Papierwerkstoffes verdichtet werden. Es können weitere, dem Fachmann bekannte Verfahren genutzt werden, um in diesem Bereich den Papierwerkstoff steifer und stabiler zu machen als im restlichen Griffkörper. Es wird insbesondere durch eine zulaufende Geometrie eine Spitze geschaffen.

Ferner können Heiß- oder Kalt-Prägungen oder Stanzungen im Griffkörper geschaffen werden. Die Prägungen oder Stanzungen können beispielsweise zu einer Verbesserung der Haptik, für Logos oder für Grafiken wie Smileys genutzt werden. Ebenso können die Prägungen im Bereich des Zahnstochers Oberflächenstrukturen schaffen, die die Reinigung unterstützen.

Des Weiteren wird vorgeschlagen, dass der materielle Griffkörper zu der Anwendungseinheit hin zumindest zwei Arme aufweist, wobei das weitere Verbindungselement an einem Ende der Arme zumindest zwei Verbindungsbereiche, d. h. pro Arm einen Verbindungsbereich, ausbildet. Das weitere Verbindungselement ist insbesondere in einem Endbereich des Griffkörpers ausgebildet. Der Griffkörper läuft in einem der Anwendungseinheit zugewandten Endbereich insbesondere in einer U-förmigen Geometrie mit zwei Schenkeln bzw. Armen aus. Die jeweiligen Arme bilden dabei in ihren Endbereichen das weitere Verbindungselement aus, an welchem die Anwendungseinheit fixiert ist. Das weitere Verbindungselement bildet dabei insbesondere ein Teil des Griffkörpers aus. Das weitere Verbindungselement ist einteilig mit dem Griffkörper ausgebildet. Dadurch kann insbesondere ein vorteilhaftes, insbesondere als Flosser ausgebildetes, Körperpflegeprodukt bereitgestellt werden. Es kann insbesondere eine vorteilhafte Anbindung der Anwendungseinheit bereitgestellt werden. Ferner kann eine vorteilhafte Verbindungseinheit bereitgestellt werden.

Es wird ferner vorgeschlagen, dass das Verbindungselement der Verbindungseinheit zumindest eine Kappe aufweist, welche das weitere Verbindungselement der Verbindungseinheit zumindest teilweise übergreift. Vorzugsweise weist das Verbindungselement insbesondere zwei Kappen auf, welche jeweils die Arme des Griffkörpers im Bereich des weiteren Verbindungselements übergreifen. Vorzugsweise übergreift das Verbindungselement das weitere Verbindungselement zumindest derart, dass zumindest ein Punkt des weiteren Verbindungselements existiert, welcher in zumindest einer Ebene, insbesondere in einer Ebene senkrecht zu einer Haupterstreckungsebene des Griffkörpers, in einem Winkelbereich von zumindest 120°, vorzugsweise zumindest 180°, von dem Verbindungselement umschlossen ist. Vorzugsweise übergreift das Verbindungselement zumindest eine freie Spitze des weiteren Verbindungselements. Das Verbindungselement erstreckt sich insbesondere wie eine Kappe um die Arme, sodass nur eine Seite, wo der Arm aus der Kappe kommt, offen ist. Alternativ kann sich das Verbindungselement auch jeweils klammerartig um die Arme erstrecken. Das Verbindungselement kann dabei insbesondere zwei Klammern ausbildet, welche sich von der Zahnseidefadenseite her über die Arme erstrecken. Das Körperpflegeprodukt besteht insbesondere zu weniger als 5 Gew.% aus Kunststoff, insbesondere Kunststoff und Zahnseidefaden sowie Papierwerkstoff und Beschichtung kumuliert, um eine nachhaltige Entsorgung zu ermöglichen. Das Körperpflegeprodukt ist vorzugsweise nach gängigen Normen mindestens teilweise oder vollständig biologisch abbaubar. Vorzugsweise wird ein biologisch abbaubarer Papierwerkstoff und/oder eine biologisch abbaubare Kunststoffkomponente zum Umspritzen und/oder ein biologisch abbaubarer Zahnseidefaden verwendet.

Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere eine vorteilhaft stabile Verbindungseinheit bereitgestellt werden. Ferner kann insbesondere eine vorteilhafte Abdeckung eines Endes der Griffeinheit bereitgestellt werden. Hierdurch können wiederum Verletzungen durch scharfe Kanten vermieden werden.

Es wird weiter vorgeschlagen, dass das Verbindungselement der Verbindungseinheit zumindest zwei Kappen aufweist, welche die zwei Verbindungsbereiche des weiteren Verbindungselements der Verbindungseinheit zumindest teilweise übergreift, wobei das Verbindungselement zumindest einen Verbindungsbügel aufweist, welcher die zumindest zwei Kappen verbindet. Der Verbindungsbügel ist einteilig mit den Kappen ausgebildet. Der Verbindungsbügel erstreckt sich insbesondere über den Griffkörper. Vorzugsweise folgt der Verbindungsbügel einem U-förmigen Verlauf des Griffkörpers in einem der Anwendungseinheit zugewandten Endbereich. Bevorzugt ist der Verbindungsbügel auf den Griffkörper, insbesondere in einem Spritzgussverfahren, aufgespritzt. Der Verbindungsbügel ist insbesondere dazu vorgesehen, eine Stabilität des Griffkörpers zu unterstützen. Das Material des Verbindungsbügels ist insbesondere auf den Grundkörper aufgebracht und über die Arme zum Ende der Arme geführt. Eine Materialhaftung des Verbindungsbügels auf dem Griffkörper kann durch Hinterschnitte und Durchbrüche erreicht werden. Das Kunststoffmaterial des Verbindungsbügels kann insbesondere auch über die seitlichen Kanten geführt und so beidseitig ausgeprägt sein. Hierdurch kann eine bessere Haftung erreicht werden. Ferner kann der Verbindungsbügel eine Stanzkante überdecken und als Schutz dienen. Hierzu kann das Material des Verbindungsbügels auf der schmalen Kante im U-förmigen Bogen zwischen den Armen geführt sein und eine scharfe Kante des Griffkörpers überdecken. Der Verbindungsbügel kann insbesondere als ein Bumper (Schutzkissen bzw. Schutzschicht) ausgebildet sein, welcher in der Anwendung das Zahnfleisch eines Benutzers von einer Verletzung an einer Kante des Griffkörpers schützt. Eine Materialhaftung zwischen dem Griffkörper und dem Verbindungsbügel kann mit bereits erwähnten Mitteln erreicht werden wie z.B. auch durch Hinterschnitte und/oder Durchbrüche erreicht werden. Alternativ oder zusätzlich wird der Griffkörper teilweise von dem Verbindungsbügel umspritzt. Der Verbindungsbügel kann dabei Design-Elemente, einen Bumper und/ oder eine Haltegeometrie für das Umspritzmaterial, insbesondere ohne Durchbrüche und Hinterschnitte, bereitstellen. Von dem Verbindungsbügel wird dabei eine Stanzkante teilweise überdeckt. Ferner kann an dem Verbindungsbügel gleichzeitig ein Anspritzpunkt des Verbindungselements realisiert werden.

Ferner wäre denkbar, dass an dem Verbindungselement eine Abzugslasche ausgebildet ist. Die Abzugslasche hat insbesondere das Ziel, ein Entfernen der Kunststoffteile bzw. ein Trennen von Papierwerkstoff und Kunststoff zu ermöglichen. Die Abzugslasche kann beispielsweise als vorstehendes Element an dem Verbindungselement, insbesondere an einer Kappe des Verbindungselements, ausgebildet sein, das das Lösen vereinfacht. Es ist insbesondere ein Abtrennen des Kunststoffs durch Abziehen von dem Griffkörper vorgesehen. Die Verbindung von Kunststoff und Papierwerkstoff ist dabei insbesondere nicht über Durchgangslöcher gestaltet, sondern über seitliche Kerben, damit ein Abziehen möglich ist. Alternativ wäre auch denkbar, dass zusätzlich mit dem Verbindungselement, das weitere Verbindungselement abgetrennt wird. Es kann daher insbesondere ein Abtrennen von Papierwerkstoff, Kunststoff und Zahnseidefaden von dem Griffkörper aus Papierwerkstoff ermöglicht werden. Ferner wäre auch eine Anordnung der Abzugslasche an dem Verbindungsbügel denkbar. Beispielsweise wäre denkbar, die Abzugslasche an einem Anspritzpunkt des Verbindungsbügels vorzusehen, insbesondere wenn ein Kunststoff nur einseitig an dem Griffkörper angebracht ist.

Des Weiteren wird vorgeschlagen, dass das Verbindungselement zumindest einen Anspritzpunkt aufweist, welcher an der Kappe angeordnet ist. Ein Anspritzpunkt eines Spritzgussverfahrens ist vorzugsweise in einem Nahbereich des Zahnseidefadens, insbesondere in einem Nahbereich eines Verbindungspunkts zwischen dem Zahnseidefaden und der Kappe. Unter einem "Nahbereich" soll in diesem Zusammenhang insbesondere ein gedachter kugelförmiger Bereich verstanden werden, welcher sich insbesondere um einen Verbindungspunkt zwischen dem Zahnseidefaden und der Kappe erstreckt, und welcher einen Radius von maximal 1,5 cm, vorzugsweise maximal 1 cm und besonders bevorzugt maximal 0,5 cm aufweist. Dadurch kann insbesondere ein vorteilhaft unauffälliger Anspritzpunkt bereitgestellt werden.

Es wird ferner vorgeschlagen, dass das Verbindungselement zumindest einen Anspritzpunkt aufweist, welche an dem Verbindungsbügel angeordnet ist. Vorzugsweise ist der Anspritzpunkt an dem Verbindungsbügel zwischen der ersten Kappe und der zweiten Kappe angeordnet. Bevorzugt ist der Anspritzpunkt an einem Tiefpunkt des Verbindungsbügels des U-förmigen Verlaufs des Griffkörpers angeordnet. Dadurch kann insbesondere ein vorteilhaft unauffälliger Anspritzpunkt bereitgestellt werden. Ferner kann insbesondere ein Anspritzpunkt bereitgestellt werden, welcher während einer Anwendung vorteilhaft entfernt von einem Zahnfleisch eines Benutzers angeordnet ist.

Es wird weiter vorgeschlagen, dass das Verbindungselement der Verbindungseinheit zumindest teilweise formschlüssig mit dem weiteren Verbindungselement der Verbindungseinheit verbunden ist, wobei das weitere Verbindungselement der Verbindungseinheit zumindest teilweise, insbesondere zumindest zu einem Großteil, aus einem Papierwerkstoff besteht. Ein Formschluss ist dabei beispielsweise über eine Vernietung und/oder eine Rastverbindung und/oder eine Nut-Feder-Verbindung und/oder eine Nietverbindung, eine Steckverbindung und/oder eine weitere, dem Fachmann als sinnvoll erscheinende formschlüssige Verbindung, realisierbar.

Das weitere Verbindungselement bildet insbesondere einen Teil des Griffkörpers, welcher insbesondere zu einem Großteil aus einem Papierwerkstoff besteht. Es wird ferner vorgeschlagen, dass das weitere Verbindungselement der Verbindungseinheit zumindest eine Formschlusskontur aufweist, welche dazu vorgesehen ist, einen Formschluss mit dem Verbindungselement auszubilden. Die Formschlusskontur ist insbesondere derart gestaltet, dass keine Rotation des Verbindungselements möglich ist. Es wird weiter vorgeschlagen, dass die Formschlusskontur des weiteren Verbindungselements zu einer Verdrehsicherung des Verbindungselements vorgesehen ist. Im Fall von zwei Armen ist die Formschlusskontur insbesondere auf beiden Armen nötig. Insbesondere muss der Kunststoff des Verbindungselements auf beiden Seiten, insbesondere an beiden Armen halten. Die Formschlusskontur kann beispielsweise in Form einer seitlichen Einkerbung ausgebildet sein. Vorzugweise sind die Einkerbungen dabei von Einkerbungen gebildet, welche seitlich außen an den Armen angeordnet sind. Die Einkerbungen sind dabei insbesondere beidseits jeweils außen. Im Falle von Kappen lässt der Druck auf den Zahnseidefaden die Kappe mehr in die Ausnehmung ziehen, was ein besseres Halten der Zahnseidefaden am Griffkörper bewirkt. Die Einkerbungen weisen bevorzugt eine Breite von 1 mm bis 5 mm, vorzugsweise von 2 mm bis 4 mm auf. Die Tiefe entspricht bevorzugt maximal 1 mm bis 5 mm, vorzugsweise von 2 mm bis 4 mm. Bevorzugt muss eine Rest-Wandstärke der Arme von 2 mm bis 4 mm betragen. Die Einkerbung der Formschlusskontur ist bevorzugt zu einer Drehvermeidung vorgesehen. Dadurch kann insbesondere eine vorteilhaft zuverlässige Verbindungseinheit bereitgestellt werden.

Eine weitere Möglichkeit zur Drehsicherung des Kunststoffs am Papierwerkstoff besteht darin, auf den Armen Prägungen bzw. Rillen zu realisieren, die parallel oder in einem Winkel von maximal 45° zur Längsrichtung des Zahnseidefadens ausgerichtet sind. Die Dicke des Griffkörpers wird durch das Prägen/Rillen reduziert und es muss geprüft werden, ob nicht eine Bruck-/Knickstelle entsteht, ansonsten muss die Tiefe der Prägung/Rillung reduziert werden. Die Prägungen/Rillen werden mittels Spritzgießen umspritzt und bringen so einen Formschluss und eine bessere Fixierung des Zahnseidefadens mittels den Verbindungselementen.

Zudem wird vorgeschlagen, dass die Formschlusskontur des weiteren Verbindungselements zumindest eine Durchgangsausnehmung aufweist, wobei sich das Verbindungselement durch die Durchgangsausnehmung erstreckt. Vorzugsweise weist die Formschlusskontur des weiteren Verbindungselements zwei Durchgangsausnehmungen auf, welche sich durch jeweils einen der Arme des Griffgrundkörpers erstrecken. Die zumindest eine Durchgangsausnehmung kann insbesondere die Form eines runden Lochs oder eines länglichen Schlitzes aufweisen. Alternativ wäre auch ein nicht rundes Loch, wie beispielsweise ein quadratisches Loch, ein rechteckiges Loch und/oder ein Loch mit einer anderen, einem Fachmann als sinnvoll erscheinenden Geometrie, die insbesondere eine Drehsicherung erzeugt, denkbar. Der Durchmesser der Durchgangsausnehmung beträgt insbesondere von 1 mm bis 5 mm, vorzugsweise von 2 mm bis 4 mm. Der Abstand zu einem Rand des Griffgrundkörpers, d.h. eine Rest-Wandstärke pro Seite, beträgt insbesondere von 1 mm bis 4 mm. Es wäre auch denkbar, dass die Formschlusskontur eine Durchgangsausnehmung und eine Einkerbung kombiniert. Die Oberfläche bzw. die Stanzfläche der Einkerbung erstreckt sich insbesondere senkrecht zum Zahnseidefaden. Die Einkerbung ist insbesondere oben auf den Armen angeordnet, damit ein Drehen nicht möglich ist. Die Tiefe der Einkerbung beträgt dabei insbesondere von 1 mm bis 3 mm, vorzugsweise 1,2 mm bis 2 mm. Die Durchgangsausnehmung der Formschlusskontur ist bevorzugt zu einer Drehvermeidung vorgesehen. Die Durchgangsausnehmung ist hierfür bevorzugt nicht rund, sodass ein Material des Verbindungselements in der Durchgangsausnehmung nicht drehen kann. Hierdurch kann sich der Zahnseidefaden nicht entspannen durch das Drehen der Verankerung. Die Durchgangsausnehmung ist insbesondere beispielsweise von einem Langloch und/oder einem runden Loch mit seitlichen Kerben gebildet. Dadurch kann insbesondere eine vorteilhaft zuverlässige Verbindungseinheit bereitgestellt werden.

Das fertige Körperpflegeprodukt kann insbesondere Kräfte, insbesondere senkrecht zum Zahnseidefaden wirkend, von 4 kg bis 12 kg, vorzugsweise von 5 kg bis 10 kg, aufnehmen. Die Verankerung des Zahnseidefadens kann so balanciert sein, dass nicht der Zahnseidefaden reißt bzw. ausreißt, sondern der Griffkörper knickt. Der Zahnseidefaden liegt insbesondere nicht am Griffkörper an. Zwischen dem Zahnseidefaden und dem Griffkörper besteht insbesondere ein Abstand von 0,2 mm bis 3 mm, vorzugsweise von 0,35 mm bis 0,8 mm. Ein Kunststoff des Verbindungselements muss insbesondere um den Faden fließen, um optimale Ausreißkräfte zu erreichen. Nach dem Spritzprozess und aufgrund des Spritzdruckes kann sich der Zahnseidefaden in Teilbereichen sogar näher am Griffkörper befinden oder weniger bevorzugt diesen sogar berühren.

Der Zahnseidefaden ist insbesondere oben auf dem Arm, insbesondere in Verlängerung zu den Armen angeordnet. Es wäre jedoch auch denkbar, dass der Zahnseidefaden seitlich der Arme angeordnet ist. Hierbei können jedoch Schwierigkeiten bei der Entformung im Spritzgusswerkzeug entstehen. Der Zahnseidefaden ist insbesondere nur mit dem Kunststoff des Verbindungselements in Berührung. Das Verbindungselement ist wiederum mit dem Papierwerkstoff des Griffkörpers und dem Zahnseidefaden in Kontakt. Der Papierwerkstoff des Griffkörpers, d. h. das weitere Verbindungselement ist vorzugsweise lediglich in Kontakt mit dem Kunststoff des Verbindungselements. Der Zahnseidefaden muss insbesondere bei der Herstellung im Spritzgusswerkzeug in der Formtrennung liegen.

Es wird ferner vorgeschlagen, dass die Formschlusskontur des weiteren Verbindungselements zumindest eine Einkerbung aufweist, welche von dem Verbindungselement hinterfüllt ist. Vorzugsweise wird die Einkerbung, insbesondere die Einkerbung und/oder die Durchgangsausnehmung der Formschlusskontur vollständig mit einem Material, insbesondere der Kunststoffkomponente des Verbindungselements gefüllt. Die Einkerbung bildet insbesondere einen Hinterschnitt aus. Ein Hinterfüllen erfolgt insbesondere während einer Herstellung des Verbindungselements. Dadurch kann insbesondere eine vorteilhaft zuverlässige Verdrehsicherung erreicht werden.

Die Arme des Griffkörpers werden in einem Spritzgusswerkzeug insbesondere teilweise anliegend an die Kavitätenwand gestaltet, sodass in diesen dichtenden Bereichen keine Freistellung besteht. Die Arme müssen insbesondere abdichten, damit die Kunststoffkomponente beim Einspritzen nicht ausläuft und eine Überspritzung am Papierwerkstoff bildet. Durch die Form und das Anliegen an den Kavitätenwänden verrutscht der Griffkörper nicht. Der Griffkörper wird mit den Armen in die entsprechende Ausnehmung des Spritzgusswerkzeugs unter Vorspann hinein gedrückt, insbesondere in Richtung Zahnseidefaden. Die Flächen werden insbesondere im Winkel in das Spritzgusswerkzeug reingedrückt. Ein Andrücken passiert insbesondere nicht über normale Kavitätenwände, es werden Mittel benötigt, z.B. ein Verpressmechanismus, der den Griffkörper unter Vorspann effektiv in Richtung des Zahnseidefadens drückt und in Position hält. Allenfalls wird eine Kontur in den Griffkörper integriert, die ein Andrücken verbessert. Beispielsweise kann eine Abflachung hinten am Bogen, insbesondere parallel zum Zahnseidefaden, vorgesehen sein. Die Arme des Griffkörpers sind insbesondere seitlich in einem Winkel. Die Arme liegen bevorzugt innen mindestens teilweise an einer Kavitätenwand des Bogens an. Bevorzugt liegen die Arme auch seitlich an. Die Enden der Arme sind dazu insbesondere abgeschrägt und stehen so in einem Winkel gegeneinander. Schenkel gegen Schenkel bildet sich so ein Winkel von 30° bis 70°, vorzugsweise 40° bis 60° aus.

Es wird weiter ein Körperpflegeprodukt vorgeschlagen, welches eine Griffeinheit aufweist, welche winklig gebogen ist. Ein erster Teil des Griffkörpers steht in einem Winkel zu einem zweiten Teil des Griffkörpers. Der zweite Teil des Griffkörpers ist mit der Verbindungseinheit ausgestattet. Das Körperpflegeprodukt kann insbesondere als Interdental- oder Kosmetikbürste ausgestaltet sein.

Die Anwendungseinheit dieses Körperpflegeprodukts besteht vorzugsweise aus einer eingedrehten Bürsten, welche sich von der Verbindungseinheit her parallel erstreckt.

Der materielle Griffkörper besteht aus einem gerollten, im Wesentlichen zylindrischen Papierkörper.

Zwischen dem Kopfbereich und dem Griffbereich ist der Griffkörper gewinkelt ausgebildet. Der Griffkörper ist mit einem Biege-Radius von 1,5 cm bis 4,5 cm, vorzugsweise 2 cm bis 3,5 cm, abgewinkelt ausgebildet. Der Winkel zwischen dem Kopfbereich und dem Griffbereich beträgt insbesondere von 120° bis 160°, vorzugsweise 130° bis 150°. Die Länge des Kopfbereichs nach der Krümmung beträgt insbesondere maximal 2 cm, vorzugsweise maximal 1 cm. Ein Durchmesser des Griffkörpers beträgt insbesondere von 2,5 mm bis 5 mm, vorzugsweise 2,5 mm bis 4 mm bei der Anwendung im Mundhygienebereich. Bei einer Anwendung des Körperpflegeprodukts in der Kosmetik wäre insbesondere auch denkbar, dass ein Durchmesser des Griffkörpers von 2,5 mm bis 5 mm, vorzugsweise 3 mm bis 4 mm, beträgt. Der abgewinkelte Bereich des Griffkörpers ist durch nachträgliches Drücken, insbesondere Verpressen stabilisiert. Der Griffkörper ist in einem Bereich zwischen dem Kopfbereich und dem Griffbereich partiell verpresst, sodass der Griffkörper in diesem Bereich einen annähernd rechteckigen Querschnitt aufweist. Insbesondere ist in dem Bereich eine Quererstreckung des Griffkörpers verringert. Ein Biegen des abgewinkelten Bereichs des Griffkörpers kann bei der Herstellung insbesondere durch Befeuchten, Benetzen, Dampf und/oder Wärme verbessert werden. Der Bereich des Griffkörpers, welcher den Winkel aufweist, ist flachgepresst, um dessen mechanische Stabilität zu erhöhen. Die gepresste Dicke des Bereichs des Griffkörpers, welcher den Winkel aufweist, beträgt insbesondere von 1,5 mm bis 3 mm, vorzugsweise von 1,7 mm bis 2,3 mm sowohl bei der Anwendung im Mundhygiene- wie auch Kosmetikbereich.

Es wird weiter vorgeschlagen, dass das weitere Verbindungselement der Verbindungseinheit einteilig mit dem Griffkörper ausgebildet ist und aus einem Papierwerkstoff besteht, wobei das weitere Verbindungselement in einem Querschnitt senkrecht zu einer Haupterstreckungsrichtung in eine polygonale Form gefaltet ist, welche einen Aufnahmebereich begrenzt. Vorzugsweise ist das Körperpflegeprodukt dabei insbesondere dreiteilig aufgebaut, und zwar mit dem Griffkörper mit einem Grundkörper der Anwendungseinheit und mit einem Funktionsteil der Anwendungseinheit, welches beispielhaft von einem Borstenfeld gebildet ist. Der Griffkörper mit dem weiteren Verbindungselement besteht insbesondere aus einem Zuschnitt zum Falten. Der Griffkörper bildet im montierten Zustand insbesondere einen dreieckigen Querschnitt aus. Der Griffkörper bildet im montierten Zustand mindestens abschnittsweise eine hohle Pyramide aus.

Bevorzugt sind dazu zumindest zwei Schenkel des dreieckigen Querschnitts im Endprodukt mindestens teilweise doppellagig ausgebildet. Zumindest eine, insbesondere beide, der Doppellagen sind insbesondere verbunden, beispielsweise geklebt gesiegelt, geschweißt oder dergleichen, jedoch insbesondere zumindest die äußere Doppellage. Der Griffkörper ist insbesondere in Längsrichtung konisch gestaltet und bildet mindestens abschnittsweise eine hohle Pyramide. Im gefalteten Zustand ist der Griffkörper vorzugsweise zumindest auf der Bürstenkopf-Seite offen, damit später das Verbindungselement eingefahren werden kann. Bevorzugt ist der Griffkörper auch an einem unteren, freien Ende offen gestaltet. Vorzugsweise ist die Vorderseite des Griffkörpers länger als die beiden Rückseiten. Es bildet sich insbesondere ein Verlauf von einer Vorderseite des freien Endes hin zu den Seitenflächen aus, welche insbesondere zurückspringen. Die Längserstreckung des Griffkörpers reduziert sich insbesondere zur hinteren Faltkante hin. Ferner ist der Griffkörper und/oder das weitere Verbindungselement zu der Anwendungseinheit hin offen gestaltet. Dabei ist die Vorderseite des Griffkörpers insbesondere länger als die Seiten, sodass sich eine Einführgeometrie für das Verbindungselement ausbildet. Eine Körperstabilität des Griffkörpers wird insbesondere durch die Faltung bzw. durch das dadurch entstehende Fachwerk im Querschnitt erreicht. Ein Winkel zwischen der Vorderseite und den Seiten des Grundkörpers ist insbesondere links und rechts symmetrisch, insbesondere zwischen 45° und 85°, vorzugsweise zwischen 55° und 75°. Zwischen den Seiten des Griffkörpers beträgt der Winkel insbesondere zwischen 30° und 70°, vorzugsweise zwischen 40° und 60°. Die Länge des Griffkörpers beträgt insbesondere über alles von 130 mm bis 210 mm, vorzugsweise von 180 mm bis 200 mm. Die Breite des Griffkörpers beträgt insbesondere am freien Ende von 10 mm bis 22 mm, vorzugsweise von 12 mm bis 19 mm, und im Bereich der Anwendungseinheit von 5 mm bis 13 mm, vorzugsweise von 7 mm bis 11 mm. Die Höhe des Griffkörpers beträgt am freien Ende insbesondere von 10 mm bis 20 mm, vorzugsweise von 13 mm bis 17 mm, und in einem Bereich der Anwendungseinheit von 3 mm bis 9 mm, vorzugsweise von 4 mm bis 7 mm. Der Griffkörper besteht vorzugsweise aus einem Papierwerkstoff, Holz, Bambus oder einer Folie aus nachhaltiger Kunststoffkomponente. Bevorzugt beträgt eine Anzahl an Lagen des Griffkörpers im Endprodukt von 1 bis 10 Lagen, vorzugsweise von 1 bis 5 Lagen. Vorzugsweise besteht der Griffkörper aus genau einer Lage. Diese Lage bildet die Schicht. Die Anzahl an Lagen hängt insbesondere von der gewünschten Endstärke des Griffkörpers ab. Es können viele dünne Lagen oder wenige dickere Lagen realisiert werden. Die Lagen werden vorzugsweise verbunden. Durch das Realisieren des Körpers in mehreren Lagen ergeben sich Stabilitätsvorteile gegenüber einem Körper aus einer Masse. Eine Materialstärke des Griffkörpers beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Ferner kann ein Material des Griffkörpers behandelt sein. Beispielsweise kann der Griffkörper eine Lackierung und/oder Bedruckung und/oder eine wasserabweisende Beschichtung aufweisen und/oder aus einer Mischung von Papierfasern und einer Kunststoffkomponente bestehen und/oder eine Folie aus Kunststoffkomponente aufweisen. Dadurch kann insbesondere eine vorteilhafte Anbindung der Anwendungseinheit an die Griffeinheit erreicht werden. Es kann insbesondere eine vorteilhafte Verbindungseinheit bereitgestellt werden. Es kann ein vorteilhafter Schutz der Griffeinheit im Nassbereich gewährleistet werden.

Ferner wird vorgeschlagen, dass das Verbindungselement einen Kernfortsatz aufweist, welcher dazu vorgesehen ist, in den Aufnahmebereich des weiteren Verbindungselements einzugreifen. Vorzugsweise weist die Anwendungseinheit einen Grundkörper auf, wobei das Verbindungselement einteilig mit dem Grundkörper der Anwendungseinheit ausgebildet ist. Der Grundkörper der Anwendungseinheit ist insbesondere von einem Schuh gebildet, welcher dazu vorgesehen ist, auf ein Ende des Griffkörpers aufgeschoben zu werden - selbstverständlich können auch andere Formen eines Aufschubes abweichend von der Schuhform vorgesehen sein. Der Kernfortsatz dient insbesondere als Stützgeometrie im Inneren des Griffkörpers. Der Kernfortsatz folgt insbesondere dem Querschnitt innen im Griffkörper bzw. in dem weiteren Verbindungselement. Der Kernfortsatz ist insbesondere von einem Zylinder mit einer dreieckigen Grundseite gebildet. Der Kernfortsatz ist insbesondere einseitig freigestellt, damit der Griffkörper eingefahren werden kann. Der Kernfortsatz ist insbesondere kürzer als eine den Kernfortsatz teilweise umgreifende Hülle des Griffkörpers gestaltet. Der Kernfortsatz kann aber gerade bei den Fixierungsalternativen auch länger als die Hülle gestaltet sein. Die Hülle des Grundkörpers liegt insbesondere außen an dem Griffkörper der Griffeinheit an. Vorzugsweise ist der Griffkörper in einem montierten Zustand zwischen der Hülle und dem Kernfortsatz geklemmt. Ferner weist der Grundkörper der Anwendungseinheit insbesondere zwischen dem Kernfortsatz und der Hülle insbesondere eine Schnittstelle zu einer Anordnung eines Borstenfelds, insbesondere eines Borstenplättchens auf. Der Grundkörper der Anwendungseinheit weist insbesondere einen Aufnahmebereich zu einer Aufnahme eines Borstenplättchens auf. Dadurch kann insbesondere eine vorteilhaft stabile und leicht herzustellende Verbindung zwischen der Anwendungseinheit und der Griffeinheit bereitgestellt werden. Es kann insbesondere ein Abknicken der Griffeinheit in einem der Anwendungseinheit zugewandten Bereich vermieden werden.

Die Herstellung und/oder Montage eines entsprechenden Körperpflegeprodukts erfolgt insbesondere durch Erstellen eines Zuschnitts für den Griffkörper, insbesondere durch Stanzen und Rillen, und anschließendes Falten und Fixieren bzw. Verbinden des Papierwerkstoffes des Griffkörpers. Daraufhin kann die Anwendungseinheit mit dem Verbindungselement an dem Griffkörper montiert werden. Hierzu wird der Kernfortsatz in den Griffkörper eingefahren und ggf. verrastet und/oder verklebt evtl. mit einem Hinterschnitt.

Anschließend wird ein Borstenplättchen der Anwendungseinheit hergestellt, beispielsweise durch Spritzen des Plättchens, anschließendes Versehen mit Borsten, insbesondere in einem AFT-Verfahren konventionellen Anker-Stanzverfahrens, PTt Verfahrens, etc. und/oder beispielsweise durch Spritzen des gesamten Borstenplättchens mit gespritzten Borsten und/oder Bilden des Borstenplättchens mittels Aufschmelzen der Borsten.

Anschließend kann das Borstenplättchen in den Aufnahmebereich des Grundkörpers der Anwendungseinheit eingebracht werden. Ein Papierwerkstoff des Griffkörpers wird dabei zwischen dem Kernfortsatz und dem Borstenplättchen bzw. dem Grundkörper und dem Borstenplättchen geklemmt. Eine Verbindung zwischen dem Borstenplättchen und dem Grundkörper erfolgt insbesondere durch Kleben, Schweißen, Rasten und/oder Nieten oder andere, dem Fachmann bekannte Verbindungsverfahren, welche eine form- und/oder stoffschlüssige Verbindung zwischen Kunststoffkomponenten zulassen. Allenfalls ergibt sich parallel bzw. zusätzlich noch die Verbindung zur Griffeinheit im Bereich der Vorderseite des Griffkörpers. Dabei kann beispielsweise die Verbindung zu dem Griffkörper gesichert werden, insbesondere durch das Verbinden des Kernfortsatzes und des Borstenplättchens. Diese Verbindung kann mit den in dieser Schrift bereits beschriebenen form- und/oder stoffschlüssigen Verbindungsverfahren zwischen Papierwerkstoff und einer Kunststoffkomponente bereitgestellt werden.

Insbesondere ist es auch denkbar die Stützgeometrie des Kernfortsatzes derart zu gestalten, dass sie zumindest einen vorstehenden Nocken in Richtung der Vorderseite des Griffkörpers aufweist, wobei der Griffkörper eine korrespondierende Ausnehmung und/oder korrespondierende Schlitze aufweist, in welche der zumindest eine Nocken eingreift und/oder einrastet. Der zumindest eine Nocken kann dabei von einem Steg oder einem zylindrischen Nocken gebildet sein. Alternativ wäre auch die Ausbildung zumindest eines Nockens auf einer oder mehreren Seiten des Kernfortsatzes denkbar. Eine Verbindungsgeometrie wäre dann eben nicht mehr auf der Vorderseite realisiert, sondern auf zumindest einer der Seiten des Griffkörpers, wobei eine mögliche mehrlagige Ausbildung des Griffkörpers berücksichtigt werden müsste.

Ferner wäre auch denkbar, dass ein Borstenfeld und/oder ein Borstenplättchen einteilig mit dem Grundkörper der Anwendungseinheit ausgebildet ist.

Des Weiteren wird vorgeschlagen, dass die Anwendungseinheit zumindest einen Bürstenkopf aufweist. Der Bürstenkopf umfasst insbesondere ein Borstenfeld. Das Borstenfeld ist insbesondere an einem Borstenplättchen, insbesondere hergestellt mittels AFT-, PTt, konventionellem Anker Stanzverfahren, IMT Verfahren mit konventionellen, extrudierten Filamenten angeordnet. Das Borstenplättchen kann auch mittels Borstenschmelze geformt werden. Es wäre jedoch auch ein Borstenplättchen mit gespritzten Borsten denkbar. In diesem Fall wären die gespritzten Borsten und das Borstenplättchen aus derselben Kunststoffkomponente gefertigt.

Das Körperpflegeprodukt ist insbesondere als Bürste, insbesondere Zahnbürste ausgebildet. Bei einer Ausgestaltung des Körperpflegeprodukts als Zahnbürste weist die Anwendungseinheit insbesondere ein Borstenfeld auf. Das Borstenfeld kann dabei insbesondere aufgesetzt sein. Alternativ wäre auch denkbar, dass die Anwendungseinheit genietet ist, wobei das Borstenfeld so gestaltet ist, dass die Anordnung eines Gegenhalters im Bereich von Formschlusselementen möglich ist. Die Anwendungseinheit weist insbesondere ein Borstenplättchen auf. Das Borstenfeld kann dabei beispielsweise in einem Ankerstanz-, IMT, PTt oder AFT-Verfahren hergestellt sein. Dabei ist insbesondere auch denkbar, dass das Borstenplättchen aus einem Papierwerkstoff besteht, wobei eine Verbindung zu der Verbindungseinheit beispielsweise mittels Kleben herstellbar ist. Alternativ wäre denkbar, dass das Borstenplättchen aus Kunststoff, insbesondere zumindest aus einer Hartkomponente besteht, wobei eine Verbindung zu der Verbindungseinheit beispielsweise mittels Schweißen, Siegeln, Kleben, Nieten, Rasten, Verformen, Schnappen oder einer Kombination davon erfolgen kann. Das Borstenplättchen kann dabei insbesondere direkt eine Verbindungsstruktur, wie beispielsweise Niete, zu einer Verbindung mit der Verbindungseinheit und/oder direkt mit der Griffeinheit aufweisen. Alternativ wäre jedoch auch eine Ausgestaltung der Anwendungseinheit ohne Borstenplättchen denkbar, wobei das Borstenfeld weiterhin in einem AFT-Verfahren hergestellt werden kann. Hierbei kann insbesondere das Schmelzbad (welches auf der Befestigungsseite, d.h. der Nutzung abgewandten Seite der Borsten entsteht) zur Verankerung des Borstenfeldes genutzt werden. Die Anwendungseinheit kann hier mittels Kleben, Einklemmen oder Siegeln bzw. Schweißen, Nieten, Rasten, Schnappen oder einer Kombination davon mit der Verbindungseinheit und/oder direkt mit der Griffeinheit verbunden werden. Alternativ können die Borsten in das Borstenplättchen mittels Anker gestanzt oder ankerlos mittels IMT oder PTt im Borstenplättchen verankert werden. Dabei sind konventionelle Verfahren, bei welchen das Borstenplättchen mit Borstenlöchern und Borsten versehen wird, bekannt (z.B. Ankerstanzverfahren, IMT, PTt, etc.). Die Anwendungseinheit kann hier mittels Kleben, Nieten oder Siegeln bzw. Schweißen oder einer Kombination davon mit der Verbindungseinheit und/oder direkt mit der Griffeinheit verbunden werden. Das Borstenplättchen kann dabei insbesondere direkt eine Verbindungsstruktur, wie beispielsweise Niete, zu einer Verbindung mit der Verbindungseinheit und/oder direkt mit der Griffeinheit aufweisen. Alternativ können die Borsten direkt an einen Grundkörper der Anwendungseinheit angespritzt werden (d.h. gespritzte Borsten aus Material für gespritzte Borsten). Die Borsten und die Anwendungseinheit können dabei einstückig ausgebildet sein. Es können dabei eine oder mehrere Materialkomponenten verwendet werden. Beispielsweise kann eine Hartkomponente und/oder eine Weichkomponente und/oder ein Material bzw. eine Kunststoffkomponente für gespritzte Borsten verwendet werden. Die Anwendungseinheit kann hier beispielsweise mittels Siegeln bzw. Schweißen, Nieten, Schnappen, Rasten und/oder Umspritzen oder einer Kombination davon mit der Verbindungseinheit und/oder direkt mit der Griffeinheit verbunden werden. Der Grundkörper der Anwendungseinheit kann dabei insbesondere direkt eine Verbindungsstruktur, wie beispielsweise Nieten, zu einer Verbindung mit der Verbindungseinheit und/oder direkt mit der Griffeinheit aufweisen, welche direkt auf einer Unterseite des Grundkörpers der Anwendungseinheit angespritzt ist.

Die Anwendungseinheit weist vorteilhaft zumindest eine Reinigungseinheit, bzw. einen Bürstenkopf, insbesondere einen Zahnbürstenkopf, mit Borsten auf. Die Reinigungseinheit weist zudem vorteilhaft zumindest einen Borstenträger, beispielsweise einen Bürstenkopfgrundkörper, insbesondere den Grundkörper, auf. Ferner wird vorgeschlagen, dass ein Grundkörper der Anwendungseinheit vollständig aus einer Hartkomponente ausgebildet ist und einen Borstenträger ausbildet. Alternativ oder zusätzlich wird vorgeschlagen, dass das Körperpflegeprodukt ein von dem Grundkörper aufgenommenes Borstenplättchen aufweist, welches eine Mehrzahl Borsten, insbesondere eine Mehrzahl von Borstenbündeln umfasst. Hierzu werden (beispielhaft für das AFT Verfahren) zunächst mittels Spritzgießen Borstenplättchen mit Durchgangslöchern gefertigt, durch welche anschließend Borsten geführt werden. Vorzugsweise werden die Borsten anschließend auf einer Rückseite mindestens bündelweise verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere der Verbindungseinheit, verbunden, z.B. verschweißt, gesiegelt und/oder verklebt werden, oder mechanisch mittels Nieten, Verstemmen, vorzugsweise mittels eines Ultraschallschweißens, form- und/oder stoffschlüssig verbunden werden. Hierzu weist der Grundkörper vorzugsweise eine entsprechende Struktur zur Aufnahme / Verbindung auf, welche zur Verbindung des Borstenplättchens genutzt werden kann. Alternativ kann das Borstenplättchen mit in dieser Schrift genannten Verbindungs-Verfahren direkt, d.h. ohne zusätzlichen Grundkörper mit dem Griffkörper verbunden werden. Das Borstenplättchen kann alternativ auch mittels anderer Verfahren mit Borsten besetzt werden (Anker-Stanzen, PTt, IMT etc.). Damit eine möglichst gute Verbindung mit dem Griffkörper aus Papierwerkstoff entsteht sind in dieser Schrift entsprechende Verfahren genannt.

Ferner wäre denkbar, dass das Borstenplättchen aus einem Papierwerkstoff, Holz, Bambus oder Folie aus einer nachhaltigen Kunststoffkomponente hergestellt ist. Das Borstenplättchen kann aus einem Papierwerkstoff gestanzt sein. Dazu können eine oder mehrere Lagen bzw. Schichten aus Papierwerkstoff bereitgestellt werden, die den Körper des Borstenplättchens bilden. Die Ausnehmungen werden anschließend gebildet, dafür kann ein Stanzprozess, Schneiden z.B. Laserschneiden, Fräsen/Bohren oder ein anderes geeignetes Verfahren zur Bearbeitung von Papierwerkstoff eingesetzt werden. Die Borsten werden wiederum im AFT-Verfahren mit dem Borstenplättchen verbunden, wobei dieses dann im Anschluss in der entsprechenden Ausnehmung in der Griffeinheit oder auf der Griffeinheit fixiert werden kann.

Die Anwendungseinheit weist vorteilhaft zumindest eine Reinigungseinheit, insbesondere einen Zahnbürstenkopf, mit Borsten auf. Die Reinigungseinheit weist zudem vorteilhaft zumindest einen Borstenträger, beispielsweise einen Bürstenkopfgrundkörper, auf. Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT, PET, PTT) gefertigt, wobei beliebige andere Materialien (wie z.B. die aufgeführten Hartkomponenten) denkbar sind und auch in dieser Schrift aufgeführte nachhaltige Materialien bzw. Kunststoffkomponenten insbesondere abbaubare (wie z.B. PLA oder PTT) möglich sind. Ferner ist denkbar, dass zumindest einige der Borsten am nutzungsseitigen Ende eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten aus mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Im Gegensatz zu gespritzten Borsten oder gummielastischen Massage- und Reinigungselementen, welche mittels Spritzguss hergestellt sind, werden konventionelle Borsten extrudiert, geschnitten, bearbeitet (z.B. deren Enden geschliffen und/oder abgerundet) und am Zahnbürstengriff mittels eines angepassten Verfahrens eingesetzt, wie beispielsweise mittels des Ankerstanz-Verfahrens oder eines ankerlosen Verfahrens.

Insbesondere kommen zylindrische oder zugespitzte Borsten mit rundem Querschnitt infrage, wobei beliebige andere Querschnitte wie beispielsweise polygonale, dreieckige, rechteckige, quadratische, elliptische, sternförmige, trapezförmige, kreuzförmige, parallelogrammförmige, rhombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig, aber auch unregelmäßig angeordnet sein. Insbesondere können sich in Gruppen und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten einen Durchmesser, insbesondere senkrecht zu ihrer Längsachse, von wenigstens 0,075 mm und/oder von höchstens 0,25 mm auf. Vorteilhaft weisen die Borsten eine Querschnittsfläche, insbesondere senkrecht zu ihrer Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden, insbesondere Borsten mit einem Durchmesser, insbesondere senkrecht zu ihrer Längsachse, von wenigstens 0,025 mm und/oder von höchstens 0,2 mm und/oder mit einer Querschnittsfläche, insbesondere senkrecht zu ihrer Längsachse, von wenigstens 0,001 mm² und/oder von höchstens 0,15 mm². Im Fall von zugespitzten Borsten ist insbesondere Polyester (z.B. PBT, PET, PTT) als Material geeignet, wobei auch nachhaltige Materialien möglich sind, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch in Längsrichtung auch gewellte und/oder gedrillte und/oder wendelförmige und/oder gedrehte Borsten denkbar sowie insbesondere auch Kombinationen unterschiedlicher Borsten. Ferner sind Borsten mit einer glatten Oberfläche denkbar, ebenso wie Borsten mit strukturierter und/oder texturierter Oberfläche.

Ferner sind die Borsten, insbesondere als Borstenbündel, vorzugsweise mittels zumindest eines Ankerstanz-Verfahrens oder eines ankerlosen Verfahrens z.B. AFT, PTt, IMT oder dergleichen verarbeitet, insbesondere an dem Borstenträger befestigt. Vorzugsweise weist der Borstenträger eine Mehrzahl von, insbesondere gebohrten und/oder im Spritzgussverfahren geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren (wie z.B. AFT, PTt, IMT, etc.) denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist hierbei denkbar, dass die Borstenbündel zunächst vereinzelt verschmolzen und/oder ihre Borstenenden, insbesondere anschließend, zu deren Befestigung z.B. umspritzt oder mittels Materialverdichtung des Bürstenkopfes fixiert werden können. Hierbei können vorteilhaft Borstenbündel zusammengeführt werden.

Ferner ist denkbar, dass die Anwendungseinheit aus einem Grundkörper und einem Borstenplättchen, welches mit Borsten und/oder alternativen Reinigungselementen besetzt ist, zusammengesetzt ist. Hierzu werden zunächst mittels Spritzgießens Borstenplättchen mit Durchgangslöchern gefertigt, durch welche anschließend Borsten geführt werden. Vorzugsweise werden die Borsten anschließend auf einer Rückseite mindestens bündelweise verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verbunden, z.B. verschweißt, gesiegelt und/oder verklebt werden, und/oder mechanisch, mittels Nieten, Verstemmen, vorzugsweise mittels eines Ultraschallschweißens oder einer Kombination davon, verbunden werden. Hierzu weist der Grundkörper, insbesondere der Bürstenkopf, vorzugsweise eine Ausnehmung auf, in welche das Borstenplättchen eingesetzt werden kann. Alternativ kann das Borstenplättchen auch auf der Oberfläche des Grundkörpers aufgesetzt werden. Als bekanntes Herstellungsverfahren ist in diesem Zusammenhang das Anchor-Free-Tufting-Verfahren (AFT) zu nennen, das insbesondere ein Zusammenführen von Borstenbündeln ermöglicht. Als Unterseite des Borstenplättchens wird insbesondere eine Seite bezeichnet, welche in eine Ausnehmung des Grundkörpers bzw. auf den Grundkörper gelegt wird und in Richtung Rückseite des Körperpflegeprodukts zeigt. Entsprechend zeigt die Oberseite des Borstenplättchens in Richtung der Vorderseite des Körperpflegeprodukts. Der Grundkörper kann aus einer Hartkomponente aus einem nachhaltigen Material oder einem Papierwerkstoff bestehen. Bevorzugt besteht der Grundkörper aus einer Hartkomponente.

Alternativ kann das Borstenplättchen aus einem Papierwerkstoff oder einem Werkstoff aus Fasern, bzw. Zellstoff oder aus Holz hergestellt werden. Das Borstenplättchen aus Papierwerkstoff ist außerhalb des Borstenfeldes mit einem Randbereich versehen, welcher mit einem Verbindungsmittel wie Siegellack, Leim oder Ähnlichem versehen ist und welcher eine Siegelung bzw. Verankerung des Borstenplättchens mit einer Griffeinheit oder einem Grundkörper z.B. aus einem Papierwerkstoff oder einer Hartkomponente oder einem nachhaltigen Material bzw. Kunststoffkomponente ermöglicht. Dabei wird insbesondere der genannte Randbereich mit der Griffeinheit bzw. mit dem Grundkörper verbunden. Weiter kann der Randbereich des Borstenplättchens auch mit einem effektiven Absatz versehen sein, sodass sich auf der Rückseite des Borstenplättchens eine Ausnehmung ausbildet, die sicherstellt, dass die Schmelze der Borsten nicht über den Rand des Borstenplättchens reicht bzw. auch den Randbereich nicht bedeckt.

Ein Borstenplättchen aus Papierwerkstoff, Holz, Bambus oder Folie aus nachhaltigem Material bzw. Kunststoffkomponente wird mittels eines geeigneten Verfahrens aus flächigem Papier, Holzblättern (z.B. Furnier) oder Folie gebildet. Mögliche Verfahren sind z.B. Stanzen, Laserschneiden oder Schneiden. Der flächige Bereich des Borstenplättchens hat eine Dicke von 0,1 mm - 3,0 mm, vorzugsweise 0,3 mm - 2,0 mm, besonders bevorzugt 0,5 mm - 1,5 mm.

Alternativ kann ein mit den Borsten / Reinigungselementen zusammen hergestelltes, vorzugsweise einstückiges Borstenplättchen realisiert werden. Dabei kann alles (z.B. Bürstenkopf und/oder Aufnahme für ein Borstenplättchen und/oder Borstenplättchen und/oder Borsten) in einem Spritzvorgang hergestellt werden. Bevorzugt wird dafür Material bzw. eine Kunststoffkomponente für gespritzte Borsten verwendet. Zusätzlich kann auch eine Hartkomponente und/oder eine Weichkomponente eingesetzt werden. Auch dieses Borstenplättchen kann wiederum mit den verschiedensten in dieser Schrift erwähnten Verbindungstechniken mit dem Grundkörper verbunden werden, beispielsweise mittels Kleben, Siegeln, Schweißen, Verstemmen, Vernieten oder eine Kombination davon.

Alternativ kann die Herstellung eines beborsteten Elements ohne Borstenplättchen vorgesehen sein. Die Herstellung bzw. Beborstung dieses Elements geschieht ähnlich zur Herstellung eines bestückten Borstenplättchens. Borsten werden in der nötigen Konfiguration bereitgestellt und an ihren befestigungsseitigen Enden verschmolzen. Die Verschmelzung muss in diesem Fall so sein, dass sich über alle Borstenbündel und allfälligen weiteren Elementen ein Schmelzeteppich aus der Borstenkomponente ausbildet welches ein Borstenplättchen bildet. Das beborstete Element wird im Anschluss auf einen Bürstenkörper/Grundkörper montiert bzw. damit verbunden. Hierbei ist das Element in einer Ausgestaltungsvariante nicht mit einem zusätzlichen, separat gefertigten Borstenplättchen ausgestattet, sondern ist in sich selbst über den eigenen Schmelzeteppich stabil, wobei der Schmelzteppich das Borstenplättchen bildet. Der Schmelzeteppich wird aus den befestigungsseitigen, aufgeschmolzenen Enden der Borsten gebildet. Der Schmelzeteppich bildet im Wesentlichen eine Fläche bzw. eine Platte und dient so als Basis für die Verbindung mit dem Grundkörper. Der Schmelzeteppich kann auch so geformt werden, dass er Verbindungselemente in Form von Vorsprüngen, Nieten, Kämmen oder anderen formschlüssigen Elementen aufweist.

Der Schmelzeteppich mit den Borstenbündeln kann mittels AFT oder mit einem anderen ankerlosen Beborstungsverfahren hergestellt werden. Auch dieses Element kann wiederum mit den verschiedensten in dieser Schrift erwähnten Verbindungstechniken mit dem Grundkörper verbunden werden, beispielsweise mittels Kleben, Siegeln, Schweißen, Verstemmen, Vernieten oder Kombinationen davon. Der Grundkörper kann hierbei mit einer Ausnehmung versehen sein, damit der Schmelzeteppich in dieser versenkt befestigt werden kann. Damit eine möglichst gute Verbindung mit dem Griffkörper aus Papierwerkstoff entsteht sind in dieser Schrift entsprechende Verfahren genannt.

Anstelle eines Borstenplättchens können die Borsten / Reinigungselemente auch direkt am Grundkörper angespritzt werden.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs.

Alternativ zum separaten Borstenplättchen ist das Borstenplättchen als ein Teil des Grundkörpers ausgebildet, bzw. damit einstückig verbunden. Analog wird der Bürstenkopf auch in dieser Variante als eine mögliche Ausgestaltungsvariante mit Durchgangslöchern versehen. Die Borsten können auch in diesem Fall durch die Durchgangslöcher geführt werden und auf der Rückseite mindestens bündelweise verschmolzen werden, dies insbesondere miteinander und/oder mit dem Bürstenkopf.

Zudem ist denkbar, zunächst einen Bürstenkopf mit Sacklöchern, beispielsweise mittels Spritzgießens und/oder mittels eines Bohrens der Sacklöcher und/oder mittels Schneiden/Stanzen, zu fertigen. Borsten werden in diesem Fall insbesondere zu Bündeln zusammengelegt und an einem Ende verschmolzen und/oder anderweitig verbunden. Der Bürstenkopf wird anschließend erwärmt und/oder mit Wasser oder Wasserdampf befeuchtet. Sodann können vorteilhaft Borstenbündel auf der verbundenen Seite in die Sacklöcher eingeführt und mittels eines Andrückens bzw. Komprimierens des Bürstenkopfs verankert werden. Insbesondere verformen bzw. komprimieren sich hierbei die erwärmten und/oder befeuchteten Sacklöcher bzw. der Bürstenkopf, sodass die Borstenbündel in denselben verankert werden. Gleichzeitig kann auch der Bürstenkopf verformt werden. Dieses Verfahren kann für Hartkomponenten, vorzugsweise mittels zusätzlicher Befeuchtung, aber auch für Papierwerkstoff bzw. Holz eingesetzt werden.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten und/oder Papierwerkstoff und/oder Holz und/oder Bambus und/oder anderen Materialien des Körperpflegeprodukts ein. Bevorzugt werden gespritzte Borsten vielmehr mittels eines Formschlusses, beispielsweise mittels zumindest eines Hinterschnitts und/oder zumindest eines Durchbruchs am Grundkörper der Anwendungseinheit und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Des Weiteren kann der Kunststoff zusätzlich oder alternativ beim Umspritzen aufgrund der Wärme und des Spritzdrucks zumindest teilweise in die Oberfläche des Papier-, Holz- oder Bambuswerkstoffs eindringen und/oder diese zumindest aufrauen und damit eine feste Verbindung schaffen.

Es ist jedoch auch eine Verbindung mittels zumindest eines Materialschlusses insbesondere mit affinen bzw. kompatiblen Kunststoff-Materialien bzw. -Komponenten denkbar.

Ein weiteres mögliches Verfahren zur Beborstung des Bürstenkopfs stellt das Eindrehen dar. Hierbei wird beispielsweise Filament von einer Rolle zugeführt, wobei insbesondere mehrere Filamentstränge auf einer Rolle aufgewickelt sind. Für die Maschinenbeschickung sind jeweils mehrere Rollen vorgespannt, denn jedes Filament in der Bürste entspricht einem Filamentstrang. Die Filamente werden in der Breite korrekt ausgebreitet, damit sie die Breite haben, in welcher sie in die Bürste eingeführt werden. Die Filamente werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche größer ist als die abgewickelte Länge der eingedrehten Bürste, das endgültige Ablängen erfolgt nach dem Eindrehen. Der Draht wird zu einem U gebogen, damit die offene Seite anschließend über die Filamente geschoben werden kann, um die Borsten einzufädeln. Der Draht wird am Boden des U's gehalten. Darauffolgend wird das offene Drahtende geklemmt, damit die Filamente zwischen den Drahtstücken halten. Die Filamente werden auf eine Länge geschnitten, welche größer ist als die Endlänge in der Bürste, damit die Bürste anschließend, wenn die Filamente eingedreht sind, korrekt geschnitten werden kann. Der Draht wird gedreht, sodass die Filamente zwischen dem Draht eingeklemmt und damit fixiert werden. Nachdem die Filamente im Draht fixiert sind, werden sie auf die korrekte Länge geschnitten und profiliert. Nachdem der Bürstenteil fertiggestellt ist, wird der überschüssige Draht abgeschnitten. Die auf diese Weise bereitgestellte Anwendungseinheit, eine eingedrehte Bürste, kann wiederum mit den entsprechenden Verbindungselementen mit dem Griffkörper/der Griffeinheit verbunden werden.

Für sämtliche erwähnten möglichen Spritzgussprozesse ist grundsätzlich ein Ein-, Zwei- und/oder Mehrkomponentenspritzguss denkbar. Verwendete Materialien, insbesondere unterschiedliche Weichkomponenten und/oder Hartkomponenten und/oder Material für gespritzte Borsten, können hierbei, wie erwähnt, stoffschlüssig und/oder formschlüssig verbunden werden und/oder sein. Auch eine Ausbildung von gelenkigen bzw. beweglichen oder flexiblen Verbindungen mittels geeigneter Spritzgussschritte ist denkbar. Es kommen grundsätzlich beispielsweise Heißkanalverfahren, Kaltkanalverfahren und/oder Co-Injektionsverfahren in Frage.

Alternativ oder zusätzlich zu einem mit Borsten besetzten Bürstenkopf kann die Anwendungseinheit auch zumindest einen Zungenreiniger und/oder zumindest ein alternatives Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein.

Material bzw. Kunststoffkomponente für gespritzte Borsten: Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien für gespritzte Borsten denkbar, beispielsweise thermoplastische Polyester-Elastomere (TPE-E), thermoplastische Polyamid-Elastomere (TPE-A), Polyethylen (PE), beispielsweise in den Formen low density Polyethylen (LDPE) oder linear low density Polyethylen (LLDPE), oder dergleichen. Je nach gewünschten Borsteneigenschaften können grundsätzlich auch die aufgeführten Hartkomponenten bzw. Weichkomponenten als Material für gespritzte Borsten dienen.

Materialien für gespritzte Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-D-Härte eines Materials gespritzter Borsten vorteilhaft höher als eine Shore-D-Härte übriger verwendeter Weichkomponenten, beispielsweise für Griffelemente, Massageelemente, weitere Reinigungselemente oder dergleichen. Die für die Herstellung von gespritzten Borsten eingesetzten Materialien können nachhaltige Materialien bzw. Kunststoffkomponenten sein.

Grundsätzlich ist ferner eine Verwendung wasserlöslicher Polymere denkbar, beispielsweise für Hartkomponenten, Weichkomponenten, gespritzte Borsten, Zungenreiniger oder andere Elemente des Körperpflegeprodukts.

Ebenso können für die Hartkomponente, die Weichkomponente und/oder das Material für gespritzte Borsten nachhaltige Kunststoffkomponenten bzw. Biokunststoffe herangezogen werden, welche insbesondere mindestens teilweise aus nachwachsenden Rohstoffen gewonnen sein können und/oder biologisch abbaubar, insbesondere kompostierbar, sein können und/oder aus einem recycelten und/oder recycelbaren Material bestehen können. Vorzugsweise ist das Material insbesondere aus einem Kunststoff gebildet. Vorzugsweise ist das biologisch abbaubare, insbesondere kompostierbare, und/oder recycelte und/oder recycelbare Material von einem Biokunststoff, insbesondere aus einem Kunststoff auf Basis nachwachsender Rohstoffe und/oder aus einem biologisch abbaubaren Kunststoff, gebildet. Das Material kann daher insbesondere fossil-basiert und bioabbaubar sein, wie beispielsweise PVOH, PCL, PBAT, PET oder PBS, auf nachwachsenden Rohstoffen basieren und bioabbaubar sein, wie beispielsweise PLA, PHA, Cellophan oder Stärke-Blends, oder auf nachwachsenden Rohstoffen basieren und nicht bioabbaubar sein, wie beispielsweise Ca, Bio-PE, Bio-PP, Bio-PA, Bio-PET. Es sind verschiedene, einem Fachmann als sinnvoll erscheinende Biokunststoffe denkbar, wie beispielsweise stärkebasierte Biokunststoffe, cellulosebasierte Biokunststoffe, Polyhydroxy-Alkanoate, wie insbesondere Polyhydroxybuttersäure (PHB), Polymilchsäure (PLA), aliphatische und/oder aromatische Copolyester, oder weitere Biokunststoffe wie beispielsweise Ligninbasierte Biokunststoffe. Bevorzugt kann die Anwendungseinheit bzw. die Griffeinheit zu einem Großteil aus einem biologisch abbaubaren, insbesondere kompostierbaren, und/oder aus einem recycelten Material bestehen. Vorzugsweise besteht das Körperpflegeprodukt nur aus einer Komponente. Insbesondere weist das Körperpflegeprodukt eine Hartkomponente auf. Der materielle Griffkörper der Griffeinheit kann mindestens teilweise aus der Hartkomponente bestehen. Die Hartkomponente und/oder die Weichkomponente und/oder das Material für gespritzte Borsten besteht vorteilhaft aus einem Biokunststoff, welcher insbesondere aus nachwachsenden Rohstoffen gewonnen sein kann. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

Des Weiteren wird vorgeschlagen, dass die Anwendungseinheit zumindest einen Klingenkopf aufweist. Bei einer Ausgestaltung des Körperpflegeprodukts als Rasierer weist die Anwendungseinheit insbesondere einen Klingenkopf auf, wobei der Klingenkopf sowohl direkt mit der Verbindungseinheit verbunden hergestellt sein kann, als auch wechselbar ausgeführt sein kann, wobei die wechselbare Montage des Klingenkopfs an der Verbindungseinheit erfolgt. Vorzugsweise ist die Anwendungseinheit zumindest teilweise einstückig mit der Verbindungseinheit ausgebildet. Die Verbindung kann drehbeweglich ausgestaltet sein. Vorzugsweise sind bei einer Ausgestaltung des Körperpflegeprodukts als Rasierer mehrere Verankerungspunkte zwischen dem Verbindungselement und der Griffeinheit bzw. dem weiteren Verbindungselement vorgesehen. Dabei sind insbesondere drei Verbindungsmöglichkeiten einzeln oder kombiniert denkbar, und zwar Nieten, Einklemmen und/oder seitliches Halten, zusätzlich oder alternativ sind auch Kleben, Schweißen oder Siegeln, Umspritzen oder weitere in dieser Schrift genannte Verbindungstechniken denkbar. Damit eine möglichst gute Verbindung mit dem Griffkörper aus Papierwerkstoff entsteht sind in dieser Schrift entsprechende Verfahren genannt.

Eine universelle Schnittstellengestaltung lässt dabei insbesondere einen einfachen Modellwechsel zu, sodass eine Verbindungseinheit mit Anwendungseinheit für verschiedene Griffe genutzt werden kann. Die verschiedenen Griffe können wiederum mit derselben Verbindungseinheit kombiniert werden.

Bei einer Ausgestaltung des Körperpflegeprodukts als Rasierer besteht der Griffkörper vorzugsweise aus Papierwerkstoff, Holz, Bambus oder Folie aus nachhaltigem material bzw. Kunststoffkomponente. Bevorzugt beträgt eine Anzahl an Lagen des Griffkörpers im Endprodukt von 1 bis 10 Lagen, vorzugsweise von 1 bis 5 Lagen, welche eine Schicht bilden. Vorzugsweise besteht der Griffkörper aus genau einer Schicht. Die Anzahl an Lagen hängt insbesondere von der gewünschten Endstärke des Griffkörpers ab. Es können viele dünne Lagen oder wenige dickere Lagen realisiert werden. Die Lagen werden vorzugsweise verbunden. Durch das Realisieren des Körpers in mehreren Lagen ergeben sich Stabilitätsvorteile gegenüber einem Körper aus einer oder weniger Lagen. Eine Materialstärke des Griffkörpers beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Ferner kann ein Material des Griffkörpers behandelt sein. Beispielsweise kann der Griffkörper eine Lackierung und/oder Bedruckung und/oder eine wasserabweisende Beschichtung und/oder eine ein- oder beidseitig laminierte Folie aus Kunststoffkomponente aufweisen oder aus einem Gemisch von Papierfaser und Kunststoffkomponente hergestellt sein. Der Griffkörper mit dem weiteren Verbindungselement besteht insbesondere aus einem Zuschnitt zum Falten. Der Griffkörper bildet im montierten bzw. verbundenen Zustand insbesondere einen dreieckigen Querschnitt aus. Bevorzugt sind dazu zumindest zwei Schenkel des dreieckigen Querschnitts im Endprodukt mindestens teilweise doppellagig ausgebildet. Zumindest eine, insbesondere beide, der Doppellagen sind verbunden, insbesondere geklebt, jedoch insbesondere zumindest die äußere Doppellage. Die Faltungen und Rillungen des Griffkörpers sind insbesondere einerseits so gestaltet, dass einerseits der eigentliche Griff geformt wird, und andererseits das eine Verbindungselement fixiert wird. Der Griffkörper verjüngt sich in Richtung zum freien, unteren Ende. Der Griffkörper bildet mindestens abschnittsweise eine hohle Pyramide mit 3-eckigem Querschnitt. Eine Stabilität des Griffkörpers wird insbesondere durch die Faltung erlangt. Die Fixierung des Verbindungselements an dem Griffkörper bzw. dem weiteren Verbindungselement erfolgt insbesondere durch Formschluss. Alternativ oder zusätzlich wäre jedoch auch eine Fixierung durch Klebung denkbar. Es können auch weitere in dieser Schrift genannte Verbindungsverfahren eingesetzt werden.

Bei einer Ausgestaltung des Körperpflegeprodukts als Rasierer ist das Verbindungselement der Verbindungseinheit insbesondere voluminös, d.h. eher weniger flächig gestaltet. Das Verbindungselement kann dabei sowohl fachwerkartig, d.h. mit Leerräumen im Inneren oder aus einem Vollmaterial gebildet sein. Bevorzugt ist insbesondere eine fachwerkartige Ausgestaltung des Verbindungselements, um den Materialeinsatz tief zu halten. Vorzugsweise besteht das Verbindungselement aus einer Kunststoffkomponente, insbesondere aus einer Hartkomponente. Alternativ sind jedoch auch andere, nachhaltige Materialien wie beispielsweise Holz oder nachhaltige Kunststoffkomponente denkbar. Eine Materialisierung des Verbindungselements ist insbesondere derart, dass die Schnittstelle zu dem Klingenkopf einweg oder mehrweg funktioniert. Vorzugsweise wird das Verbindungselement im montierten Zustand von dem Griffkörper auf drei Flächen mindestens teilweise umschlungen. Das Verbindungselement ist dabei insbesondere dazu vorgesehen, den Griffkörper von innen zu stützen und den Griffkörper mit dem Klingenkopf zu verbinden, damit dieser nicht verdrückt werden kann. Das Verbindungselement weist insbesondere mehrere Anlageflächen für den Griffkörper auf. Eine erste Anlagefläche ist auf der oberen Seite angeordnet. Auf dieser Seite weist das Verbindungselement insbesondere eine Einfahrnut und einen Rast-Kamm zu einer Verbindung mit dem Griffkörper auf. Die erste Anlagefläche weist insbesondere eine Umfangsgröße, bei der Ausnehmungen nicht abgezogen sind, von 500 mm² bis 850 mm², vorzugsweise von 600 mm² bis 750 mm² auf. Eine zweite und dritte Anlagefläche sind insbesondere symmetrisch zur Grifflängsachse geformt. Die zweite und dritte Anlagefläche laufen insbesondere aufeinander zu bzw. stehen in einem Winkel zueinander. Die zweite und dritte Anlagefläche können mit Ausnehmungen versehen sein und liegen in einem Winkel von 25° bis 75°, vorzugsweise von 35° bis 55° zu der ersten Anlagefläche, wobei die Winkel identisch aber gegenüberliegend sind. Die zweite und dritte Anlagefläche weisen jeweils insbesondere eine Umfangsgröße, bei der Ausnehmungen nicht abgezogen sind, von 100 mm² bis 180 mm², vorzugsweise von 110 mm² bis 150 mm², auf. Das Verbindungselement ist insbesondere dazu vorgesehen, während einer Montage in die Ausnehmung des Griffkörpers eingefahren und eingerastet zu werden. Der Griffkörper hält, wenn montiert und fixiert, das Verbindungselement und damit die Anwendungseinheit. Das Verbindungselement und der Griffkörper bzw. das weitere Verbindungselement haben in einer Ausgestaltungsvariante keine Materialverbindung, sie liegen nur aneinander an bzw. es gibt einen Formschluss. Es wäre jedoch auch denkbar, dass zusätzlich eine Klebung, Schweißung vorgesehen ist. Es können weiter in dieser Schrift genannte Verbindungsverfahren verwendet werden.

Es ist möglich, dass der Griffkörper über Ausnehmungen verfügt, welche zur mechanischen Verbindung mittels Formschluss dienen. Diese Ausnehmungen können dazu dienen haptische Elemente aus Kunststoffkomponente am Rasierer zu bilden. Diese wird vorzugsweise im vorderen Bereich des Griffkörpers im Bereich der Anlageflächen oben, und/oder unten und/oder seitlich gebildet.

Der Klingenkopf wird insbesondere über eine Standardschnittstelle an dem Verbindungselement bzw. dem Grundkörper der Anwendungseinheit montiert. Das Verbindungselement ist insbesondere einteilig mit dem Grundkörper der Anwendungseinheit ausgebildet.

Die Herstellung und/oder Montage eines entsprechenden Körperpflegeprodukts, welches insbesondere als Rasierer ausgebildet ist, erfolgt insbesondere durch Erstellen eines Zuschnitts für den Griffkörper, insbesondere durch Stanzen und Rillen, und anschließendes Falten und Verbinden, bzw. Fixieren, insbesondere Kleben, Siegeln, Schweißen, des Griffkörpers. Daraufhin kann die Anwendungseinheit mit dem Verbindungselement durch Einstecken in den Griffkörper an dem Griffkörper montiert bzw. eingeschnappt werden. Hierzu wird das Verbindungselement in den Griffkörper eingefahren und ggf. verrastet. Der Klingenkopf kann anschließend montiert oder bereits vorab mit dem Verbindungselement bzw. dem Grundkörper der Anwendungseinheit montiert sein.

Eine alternative Montage könnte auch derart gestaltet sein, dass der Zuschnitt für den Griffkörper, insbesondere durch Stanzen und Rillen, bereitgestellt wird. Anschließend wird das Verbindungselement an dem Zuschnitt des Griffkörpers mittels bereits in dieser Schrift erwähnten Verbindungsverfahren fixiert und darauffolgend der Zuschnitt des Griffkörpers zu einer Ausbildung des Griffkörpers gefaltet und fixiert. Der Klingenkopf kann anschließend montiert oder bereits vorab mit dem Verbindungselement bzw. dem Grundkörper der Anwendungseinheit montiert sein.

Alternativ wäre auch denkbar, dass das Verbindungselement, anstelle, dass dieses in den Griffkörper eingefahren wird, an den Griffkörper angespritzt wird. Ferner kann eine Demontagemöglichkeit mittels Abzugslasche bestehen. Es kann insbesondere eine Abzugslasche an dem Griffkörper vorgesehen sein, damit der Griffkörper geöffnet und das Verbindungselement und/oder der Grundkörper der Anwendungseinheit entfernt und die Teile separat entsorgt werden können. Ein einfaches Auseinanderschneiden ohne Hilfsmittel am Griffkörper entlang der Griff-Längsachse ist ebenfalls möglich.

Ferner geht die Erfindung aus von einem Verfahren zur Herstellung des Körperpflegeprodukts. Es wird vorgeschlagen, dass in einem Bereitstellungsschritt die Griffeinheit mit dem weiteren Verbindungselement der Verbindungseinheit bereitgestellt wird und in einem Verbindungsschritt die Anwendungseinheit über das Verbindungselement der Verbindungseinheit mittels Umspritzen mit der Griffeinheit verbunden wird. Vorzugsweise wird zu einem Umspritzen insbesondere ein Griffkörper der Griffeinheit in eine Kavität eines Spitzgusswerkzeugs zur Herstellung des Verbindungselements und/oder der Anwendungseinheit eingelegt. Die Kavität kann insbesondere für einzelne Griffkörper oder für ein bogenweises Einlegen des Griffkörpers ausgelegt sein. Ein Werkzeug für einzelne Griffkörper bringt insbesondere eine komplizierte Formgebung mit mehr Geometrie mit sich, die den Griffkörper in Position hält. Dabei ist insbesondere ein Halten des Griffkörpers in einem Bogenbereich, an der Seite an verschiedenen Positionen und im Endbereich gegenüberliegend zum Zahnseidefaden durch das Werkzeug erforderlich. Bei einem Werkzeug zum bogenweisen Einlegen mehrerer Griffkörper benötigt das Werkzeug insbesondere Haltegeometrien zum Halten im Bogenbereich der Griffkörper und zum Halten in Bereich der späteren Endbereiche gegenüberliegend zum Zahnseidefaden. Ein Papierwerkstoff des Griffkörpers muss insbesondere fest in der Kavität gehalten sein und darf sich durch den Spritzdruck nicht verschieben. Das Werkzeug weist daher insbesondere zum Abdichten der Kavität gegenüber dem Papierwerkstoff im Bereich der Arme des Griffkörpers eine einlaufende Geometrie auf, durch welche das Material des Griffkörpers beim Einlegen und Schließen mit Vorspann leicht verdrückt wird. Beim "Verdrücken" beim Einlegen mittels Vorspann kann allenfalls eine benötigte runde Kante erreicht werden, ohne weiteren Zusatzschritt.

Für Produkte mit einem Griffkörper in nicht flacher Form kann ein Umspritzen insbesondere derart erfolgen, dass ein flacher, nicht vorgeformter Zuschnitt in das Spritzgusswerkzeug eingelegt und bei der Schließung des Spritzgusswerkzeugs geformt wird. Alternativ wäre auch denkbar, dass der Zuschnitt bereits vorgeformt eingelegt wird.

Das Spritzgussverfahren erfolgt insbesondere mittels eines Heißkanal-Angusssystems oder mittels eines Kaltkanal-Angusssystems. Beim Kaltkanal-Angusssystem führt eine Kanalausnehmung von der Nadel zum Flosser, welche während dem Spritzgussprozess mit der Kunststoffkomponente zum Kaltkanalanguss gefüllt wird und so die Kavitäten bedient. Ein entstehender Kaltkanalanguss bleibt folglich am Körperpflegeprodukt, wenn das Körperpflegeprodukt aus dem Werkzeug entfernt wird. Für den Anspritzpunkt am Produkt sind verschiedene, einem Fachmann als sinnvoll erscheinende Positionen denkbar. Bevorzugt ist insbesondere eine Position beim Faden bzw. in der Nähe des Fadens. Die Temperatur der Schmelze beträgt für die Verarbeitung insbesondere von 150°C bis 290°C, vorzugsweise 190°C bis 250°C. Der Zahnseidefaden, insbesondere die Zahnseide, besteht vorzugsweise aus Polyamid (PA) und weist einen Schmelzpunkt von rund 220°C auf. Das Kunststoffmaterial des Verbindungselements ist vorzugsweise ein Polypropylen (PP) mit einem Schmelzpunkt von rund 170°C. Polyamid hat daher einen höheren Schmelzpunkt als Polypropylen. Bei dem Spritzgussprozess herrschen insbesondere Drücke von 600 bar bis 1500 bar, vorzugsweise von 800 bar bis 1300 bar.

Des Weiteren wird vorgeschlagen, dass in dem Bereitstellungschritt mehrere Griffeinheiten zur Herstellung mehrerer Körperpflegeprodukte zusammenhängend aus zumindest einem Papierbogen bereitgestellt werden. Das Spritzgusswerkzeug ist dabei insbesondere zu einer Aufnahme des gesamten Papierbogens vorgesehen. Dadurch kann insbesondere eine vorteilhaft gute Abdichtung ermöglicht werden. Es kann insbesondere ein Verrutschen einzelner Griffkörper vermieden werden. Ferner kann ein einfaches Handling ermöglicht werden.

Es wird ferner vorgeschlagen, dass in einem auf den Verbindungsschritt folgenden Trennschritt die Griffeinheiten voneinander getrennt werden. Nach einem Umspritzen kann der Papierbogen insbesondere aus dem Spritzgusswerkzeug entfernt und gestanzt werden. Ein Stanzen kann nach der Umspritzung inline oder offline d.h. direkt verknüpft oder nicht verknüpft erfolgen. Ein Stanzen umfasst insbesondere die folgenden Schritte. In einem ersten Schritt wird der Zahnseidefaden, insbesondere die Zahnseide abgestanzt und die Zahnseidenfadenenden ansengt. Das Trennen zwischen Körperpflegeprodukten und an den Enden erfolgt insbesondere mit einem Stanzmesser. Alternativ wäre auch denkbar, dass ein Trennen durch Abbrennen bzw. Ansengen und Nicht-Schneiden erfolgt. Das Ansengen der Zahnseidenfadenenden erfolgt insbesondere mittels Wärme berührungslos. Die Wärmeerzeugung erfolgt dabei insbesondere mittels Heißluft oder mittels der Abwärme eines geheizten Stabs. Durch das Ansengen bildet sich eine kugelartige Struktur am Ende der Zahnseide, welche dem Rückhalt des Zahnseidefadens hilft. Der Zahnseidefaden wird daher weniger aus dem Grundkörper ausgerissen. Die kugelartige Struktur bettet sich insbesondere zwischen dem Verbindungselement und dem Griffkörper ein. Dadurch steht die kugelartige Struktur nicht vor und stört in der Anwendung nicht. Die Temperaturen zum Ansengen betragen insbesondere von 200°C bis 280°C, vorzugsweise 220°C bis 260°C. Zum Ansengen sind die Körperpflegeprodukte insbesondere noch im Bogen gehalten, um ein einfacheres Handling und damit eine genauere Positionierung zu ermöglichen. Anschließend wird in einem weiteren Schritt ein Anguss entfernt. Es erfolgt insbesondere ein Abstanzen des Kunststoff-Anguss-Systems. Ferner kann eine Anguss-Nachbearbeitung, beispielsweise durch eine Wärmebehandlung, erfolgen. Der Anguss wird insbesondere möglichst spät entfernt, da er das ganze Konstrukt zusammenhält. In einem weiteren Schritt wird der Griffkörper fertig ausgestanzt. Dabei kann der gesamte Griffkörper ausgestanzt werden oder lediglich noch verbleibende Haltepunkte ausgestanzt werden.

Es wird weiter vorgeschlagen, dass in dem Bereitstellungsschritt ein zusammenhängender Zahnseidefaden, insbesondere eine Zahnseide, für mehrere Anwendungseinheiten bereitgestellt und in ein Spritzgusswerkzeug eingelegt wird. In dem Bereitstellungsschritt wird insbesondere der Griffkörper und der Zahnseidefaden bereitgestellt und in das Spritzgusswerkzeug eingelegt. Der Abstand zwischen Zahnseidefaden und Griffkörper beträgt insbesondere von 0,2 mm bis 3 mm, vorzugsweise von 0,35 mm bis 0,8 mm. Die Anzahl Griffkörper nebeneinander in dem Spritzgusswerkzeug beträgt insbesondere von 2 bis 20, vorzugsweise von 4 bis 12. Die Länge des eingezogenen Zahnseidefadens über die Körperpflegeprodukte, insbesondere Flosser, hinweg beträgt insbesondere von 100 mm bis 800 mm, vorzugsweise von 140 mm bis 500 mm. Der Zahnseidefaden erstreckt sich dabei insbesondere über mehrere Flosser hinweg inkl. Stücke zwischen den Flossern und am Ende. Ein Teil der Länge wird insbesondere lediglich zum Halten des Zahnseidefadens während dem Spritzgießen und vorherigem/anschließendem Bewegen benötigt. In dem Spitzgusswerkzeug ist der Zahnseidefaden insbesondere in einer Rille gehalten und/oder geführt. Ein Halten des Zahnseidefadens erfolgt grundsätzlich an den Enden, insbesondere außerhalb des Werkzeugs, der Zahnseidefaden ist in dem Werkzeug gespannt aufgenommen.

Das erfindungsgemäße Körperpflegeprodukt soll hierbei nicht auf die oben beschriebenen Anwendungen und Ausführungsformen beschränkt sein. Insbesondere kann das erfindungsgemäße Körperpflegeprodukt zu einer Erfüllung einer hierin beschriebenen Funktionsweise eine von einer hierin genannten Anzahl von einzelnen Elementen, Bauteilen und Einheiten abweichende Anzahl und/oder eine beliebige sinnvolle Kombination derselben aufweisen. Zudem sollen bei den in dieser Offenbarung angegebenen Wertebereichen auch innerhalb der genannten Grenzen liegende Werte als offenbart und als beliebig einsetzbar gelten.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1A: ein erfindungsgemäßes Körperpflegeprodukt mit einer Griffeinheit, mit einer Anwendungseinheit und mit einer Verbindungseinheit in einer schematischen 3D-Ansicht von vorne,
- Fig. 1B: das erfindungsgemäße Körperpflegeprodukt mit der Griffeinheit, der Anwendungseinheit und der Verbindungseinheit in einer schematischen Vorderansicht,
- Fig. 1C: das erfindungsgemäße Körperpflegeprodukt mit der Griffeinheit, der Anwendungseinheit und der Verbindungseinheit in einer schematischen Seitenansicht,
- Fig. 1D: das erfindungsgemäße Körperpflegeprodukt mit der Griffeinheit, der Anwendungseinheit und der Verbindungseinheit in einer schematischen Seitenansicht,
- Fig. 1E: die Griffeinheit des erfindungsgemäßen Körperpflegeprodukts in einer schematischen 3D-Ansicht von vorne,
- Fig. 1F: die Griffeinheit des erfindungsgemäßen Körperpflegeprodukts in einer schematischen Vorderansicht,
- Fig. 1G: die Griffeinheit des erfindungsgemäßen Körperpflegeprodukts in einer schematischen Seitenansicht,
- Fig. 1H: die Griffeinheit des erfindungsgemäßen Körperpflegeprodukts in einer schematischen Seitenansicht,
- Fig. 1I: einen Teilausschnitt der Verbindungseinheit des erfindungsgemäßen Körperpflegeprodukts in einer schematischen 3D-Ansicht von vorne,
- Fig. 1J: ein Spritzgusswerkzeug zur Herstellung des erfindungsgemäßen Körperpflegeprodukts in einer schematischen 3D-Ansicht von vorne,
- Fig. 1K: das Spritzgusswerkzeug zur Herstellung des erfindungsgemäßen Körperpflegeprodukts, mit zwei eingelegten Papierbögen sowie zwei eingelegten Zahnseidefäden vor einem Spritzgussprozess in einer schematischen 3D-Ansicht von vorne,
- Fig. 1L: das Spritzgusswerkzeug zur Herstellung des erfindungsgemäßen Körperpflegeprodukts, mit den zwei eingelegten Papierbögen sowie den zwei eingelegten Zahnseidefäden nach einem Spritzgussprozess in einer schematischen 3D-Ansicht von vorne,
- Fig. 1M: einen Teilausschnitt der Verbindungseinheit des erfindungsgemäßen Körperpflegeprodukts in dem Spritzgusswerkzeug, mit einem Teil eines Kaltkanalangusses in einer schematischen 3D-Ansicht von vorne,
- Fig. 1N: die zwei Papierbögen, die zwei Zahnseidefäden, mehrere Verbindungselemente mehrerer Verbindungseinheiten und einem Kaltkanalanguss des Spritzgusswerkzeugs nach einem Spritzgussprozess in einer schematischen 3D-Ansicht von vorne,
- Fig. 1O: ein schematisches Ablaufdiagramm eines Verfahrens zu einer Herstellung des erfindungsgemäßen Körperpflegeprodukts,
- Fig. 2: ein Spritzgusswerkzeug zur Herstellung des erfindungsgemäßen Körperpflegeprodukts, mit mehreren in dem Spritzgusswerkzeug eingelegten Griffkörpern, mit zwei in dem Spritzgusswerkzeug eingelegten Zahnseidefäden nach einem Spritzgussprozess in einer schematischen 3D-Ansicht von vorne,
- Fig. 3: eine Griffeinheit eines alternativen erfindungsgemäßen Körperpflegeprodukts in einer schematischen Vorderansicht,
- Fig. 4: eine Griffeinheit eines weiteren alternativen erfindungsgemäßen Körperpflegeprodukts in einer schematischen Vorderansicht,
- Fig. 5: ein weiteres alternatives erfindungsgemäßes Körperpflegeprodukt mit einer Griffeinheit, mit einer Anwendungseinheit und mit einer Verbindungseinheit in einer schematischen Vorderansicht,
- Fig. 6: ein weiteres alternatives erfindungsgemäßes Körperpflegeprodukt mit einer Griffeinheit, mit einer Anwendungseinheit und mit einer Verbindungseinheit in einer schematischen Vorderansicht,
- Fig. 7: ein weiteres alternatives erfindungsgemäßes Körperpflegeprodukt mit einer Griffeinheit, mit einer Anwendungseinheit und mit einer Verbindungseinheit in einer schematischen Vorderansicht,
- Fig. 8A: eine Griffeinheit eines weiteren alternativen erfindungsgemäßen Körperpflegeprodukts in einem ungefalteten Zustand in einer schematischen Vorderansicht,
- Fig. 8B: die Griffeinheit des weiteren alternativen erfindungsgemäßen Körperpflegeprodukts in einem gefalteten Zustand in einer schematischen 3D-Ansicht von hinten,
- Fig. 8C: einen Grundkörper einer Anwendungseinheit und ein Verbindungselement einer Verbindungseinheit des weiteren alternativen erfindungsgemäßen Körperpflegeprodukts in einer schematischen 3D-Ansicht von vorne,
- Fig. 8D: den Grundkörper der Anwendungseinheit und das Verbindungselement der Verbindungseinheit des weiteren alternativen erfindungsgemäßen Körperpflegeprodukts in einer schematischen Unteransicht,
- Fig. 8E: einen Teilausschnitt des weiteren alternativen erfindungsgemäßen Körperpflegeprodukts mit der Griffeinheit, mit der Anwendungseinheit, ohne ein Borstenplättchen, und mit der Verbindungseinheit in einer schematischen 3D-Ansicht von vorne,
- Fig. 8F: einen Teilausschnitt des weiteren alternativen erfindungsgemäßen Körperpflegeprodukts mit der Griffeinheit, mit der Anwendungseinheit, ohne ein Borstenplättchen, und mit der Verbindungseinheit in einer schematischen 3D-Ansicht von hinten,
- Fig. 8G: das weitere alternative erfindungsgemäße Körperpflegeprodukt mit der Griffeinheit, mit der Anwendungseinheit, und mit der Verbindungseinheit in einer schematischen 3D-Ansicht von vorne,
- Fig. 9A: eine Griffeinheit eines weiteren alternativen erfindungsgemäßen Körperpflegeprodukts in einem ungefalteten Zustand in einer schematischen Vorderansicht,
- Fig. 9B: einen Grundkörper einer Anwendungseinheit und ein Verbindungselement einer Verbindungseinheit des weiteren alternativen erfindungsgemäßen Körperpflegeprodukts in einer schematischen 3D-Ansicht von vorne,
- Fig. 9C: den Grundkörper der Anwendungseinheit und das Verbindungselement der Verbindungseinheit des weiteren alternativen erfindungsgemäßen Körperpflegeprodukts in einer schematischen 3D-Ansicht von hinten,
- Fig. 9D: das weitere alternative erfindungsgemäße Körperpflegeprodukt mit der Griffeinheit, mit der Anwendungseinheit, und mit der Verbindungseinheit in einer schematischen 3D-Ansicht von vorne,
- Fig. 9E: das weitere alternative erfindungsgemäße Körperpflegeprodukt mit der Griffeinheit, mit der Anwendungseinheit, und mit der Verbindungseinheit in einer schematischen 3D-Ansicht von hinten,
- Fig. 10A: ein weiteres alternatives erfindungsgemäßes Körperpflegeprodukt mit einer Griffeinheit, mit einer Anwendungseinheit und mit einer Verbindungseinheit in einer schematischen Rückansicht,
- Fig. 10B: das weitere alternative erfindungsgemäße Körperpflegeprodukt mit einer Griffeinheit, mit einer Anwendungseinheit und mit einer Verbindungseinheit in einer schematischen 3D-Ansicht,
- Fig. 10C: das weitere alternative erfindungsgemäße Körperpflegeprodukt mit einer Griffeinheit, mit einer Anwendungseinheit und mit einer Verbindungseinheit in einer schematischen Seitenansicht und
- Fig. 11: ein weiteres alternatives erfindungsgemäßes Körperpflegeprodukt mit einer Griffeinheit, mit einer Anwendungseinheit und mit einer Verbindungseinheit in einer schematischen 3D-Ansicht.

### Beschreibung der Ausführungsbeispiele

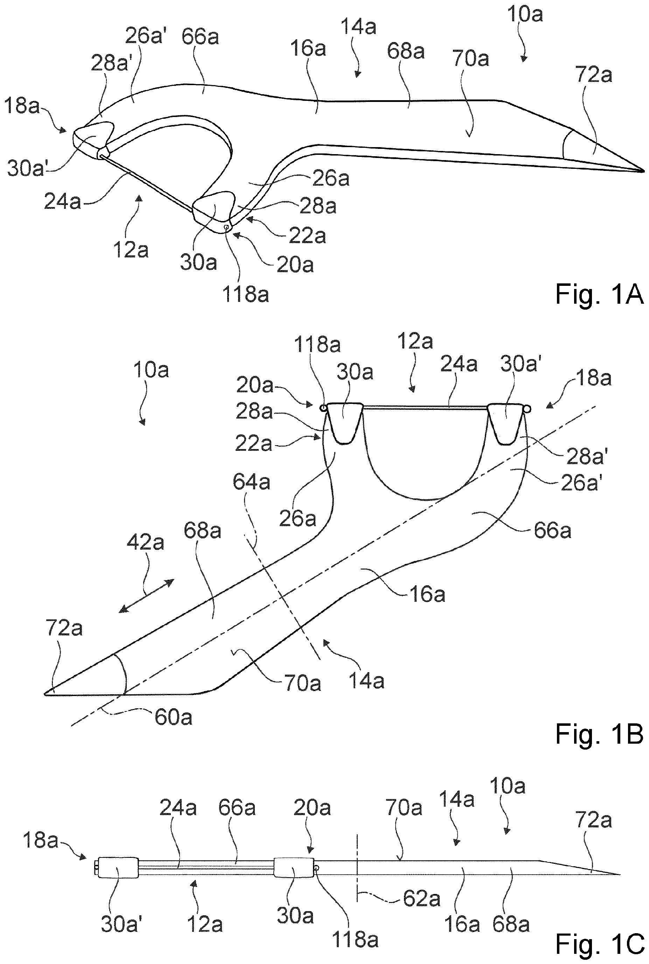

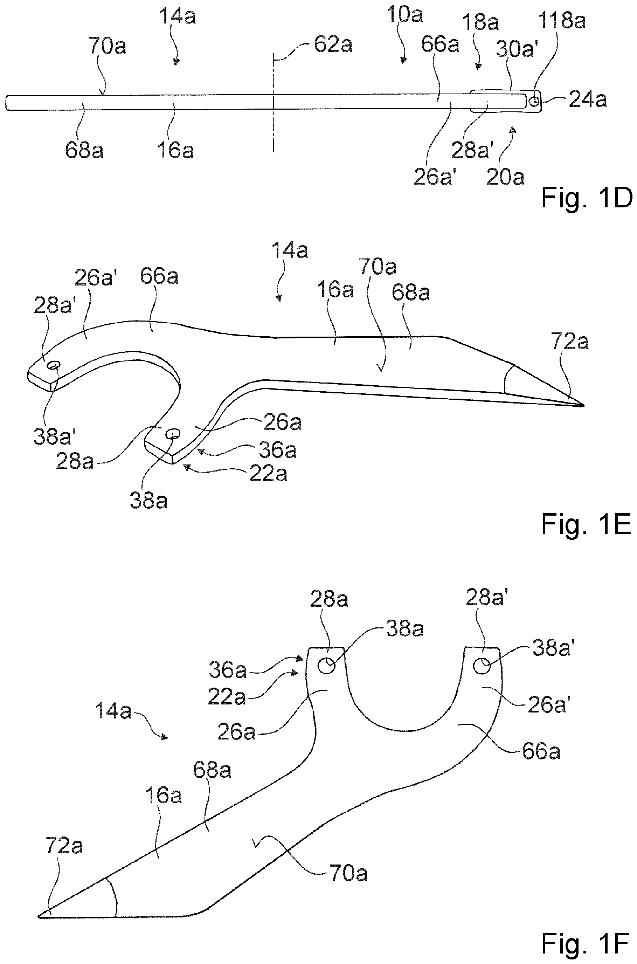

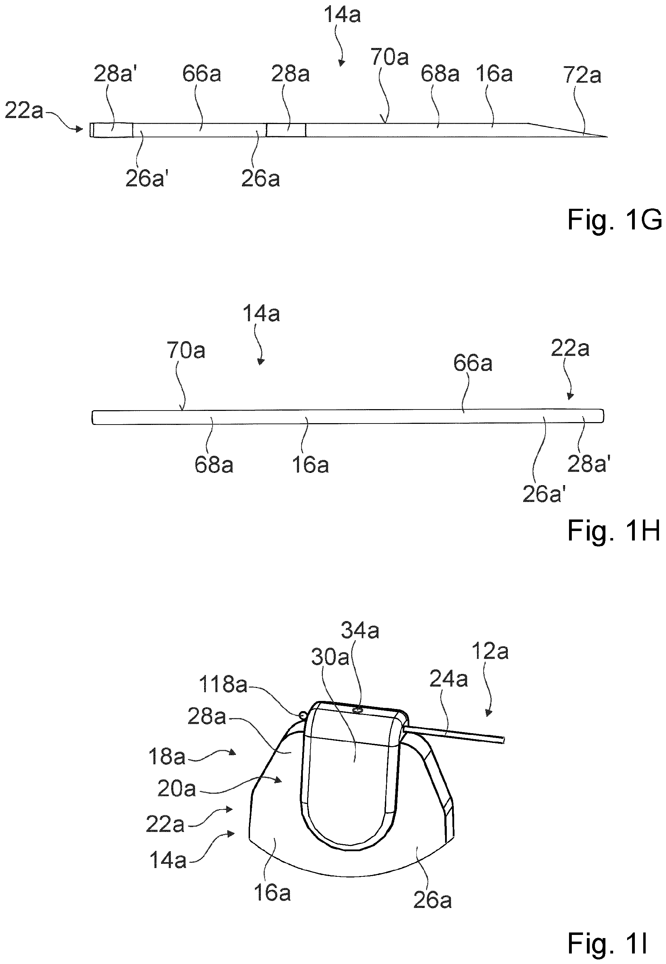

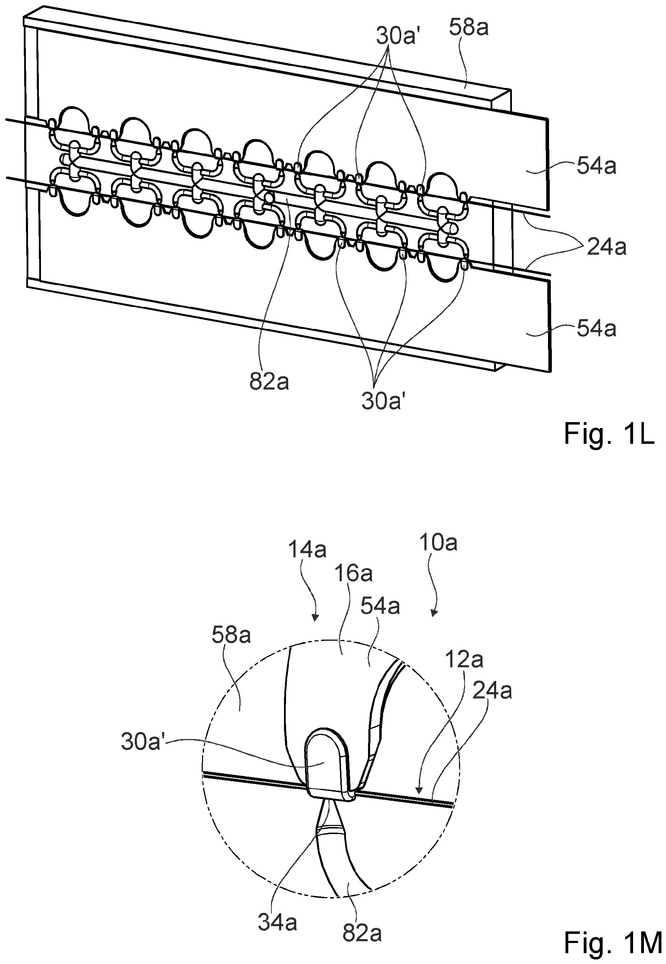

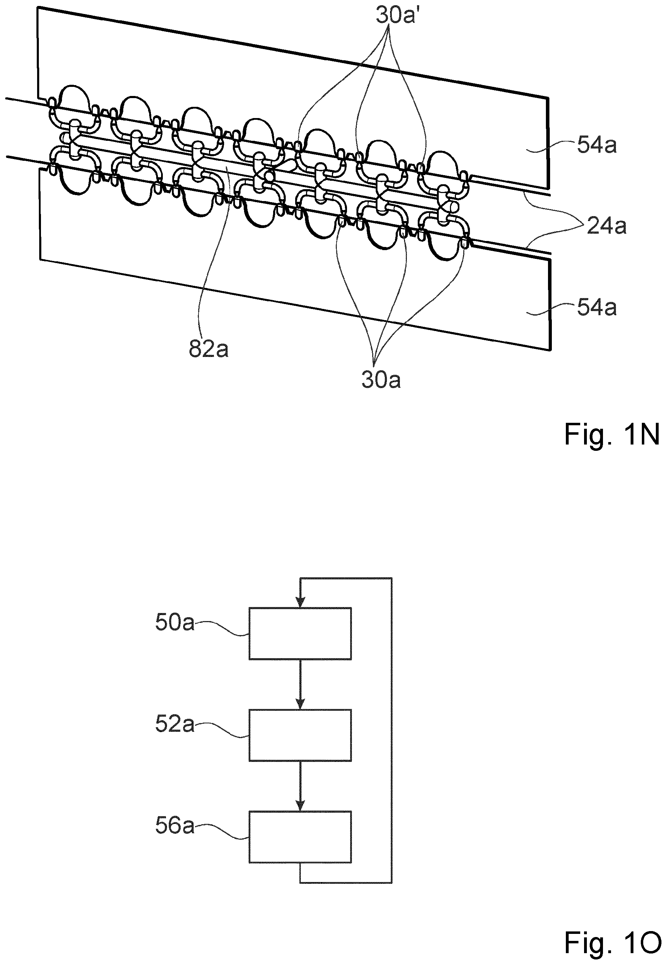

Im Folgenden wird auf die Figuren 1A bis 1O Bezug genommen, welche unterschiedliche Ansichten und Fertigungsstufen eines Körperpflegeprodukts 10a zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 1A zeigt ein Körperpflegeprodukt 10a in einer schematischen perspektivischen Darstellung. Das Körperpflegeprodukt 10a ist von einem Mundhygienemittel gebildet. Das Körperpflegeprodukt 10a ist im vorliegenden Fall als ein Flosser ausgebildet.

Das Körperpflegeprodukt 10a weist eine Anwendungseinheit 12a auf. Ferner weist das Körperpflegeprodukt 10a eine Griffeinheit 14a auf, welche einen materiellen Griffkörper 16a aufweist. Des Weiteren weist das Körperpflegeprodukt 10a eine Verbindungseinheit 18a auf, welche die Anwendungseinheit 12a mit der Griffeinheit 14a verbindet.

Das Körperpflegeprodukt 10a weist eine Längsachse 60a, eine Höhenachse 62a und eine Breitenachse 64a auf. Die Längsachse 60a ist parallel zu einer

Haupterstreckungsrichtung 42a des Körperpflegeprodukts 10a angeordnet. Ist das Körperpflegeprodukt 10a auf eine ebene Oberfläche gelegt, sodass die Längsachse 60a parallel zu der Oberfläche angeordnet ist, ist die Höhenachse 62a senkrecht zu der Längsachse 60a und senkrecht zu der Oberfläche und der Breitenachse 64a angeordnet. Die Breitenachse 64a ist senkrecht zu der Längsachse 60a und senkrecht zu der Höhenachse 62a angeordnet. Im vorliegenden Fall weist das Körperpflegeprodukt 10a eine Länge, insbesondere parallel zu der Längsachse 60a von 40 mm bis 100 mm, vorzugsweise von 60 mm bis 90 mm auf.

Die Anwendungseinheit 12a bildet einen Flosserkopf des Körperpflegeprodukts 10a. Die Anwendungseinheit 12a weist zumindest einen Zahnseidefaden 24a auf. Der Zahnseidefaden 24a ist von einer Zahnseide gebildet. Im vorliegenden Fall ist die Anwendungseinheit 12a als ein Zahnseidefaden ausgebildet. Der Zahnseidefaden 24a bildet eine Verbindung mit der Verbindungseinheit 18a.

Die Griffeinheit 14a ist zu einem Greifen durch den Bediener vorgesehen. Die Griffeinheit 14a weist den materiellen Griffkörper 16a auf. Der materielle Griffkörper 16a der Griffeinheit 14a weist einen Kopfbereich 66a auf. Ferner weist der materielle Griffkörper 16a der Griffeinheit 14a einen Griffbereich 68a auf. Der Kopfbereich 66a ist zu einer Anbindung der Anwendungseinheit 12a vorgesehen. Die Griffeinheit 14a weist zumindest eine Grifffläche 70a auf, welche eine Oberfläche des materiellen Griffkörpers 16a ausbildet. Die Grifffläche 70a erstreckt sich über den Griffbereich 68a des materiellen Griffkörpers 16a. Die Grifffläche 70a ist von einer Oberfläche des Griffbereichs 68a des Griffkörpers 16a gebildet. In einem mittleren oder hinteren Bereich der Grifffläche 70a könnte insbesondere ein Schriftzug und/oder ein Logo angeordnet sein. Der materielle Griffkörper 16a weist zu der Anwendungseinheit 12a hin zumindest zwei Arme 26a, 26a' auf. Der Kopfbereich 66a ist als U-förmige Geometrie mit zwei Armen 26a, 26a' ausgebildet. Der Griffbereich 68a des Griffkörpers 16a verläuft schräg zu dem Kopfbereich 66a. Der Griffbereich 68a des Griffkörpers 16a verläuft schräg zu einer Haupterstreckungsrichtung des Zahnseidefadens 24a. Der materielle Griffkörper 16a weist in einem Endzustand eine flache Grundform auf, welche sich zu der Anwendungseinheit 12a hin in die zwei Arme 26a, 26a' aufteilt. Die Arme 26a, 26a' bilden jeweils Schenkel aus.

Eine Breite der Arme 26a, 26a' beträgt wenigstens 5 mm, vorzugsweise wenigstens 6 mm, besonders bevorzugt wenigstens 8 mm. Eine dünnste Stelle der Arme 26a, 26a' ist im Bereich gegen das freie Ende der Arme 26a, 26a'. Ein Verhältnis der Dicke des Papierwerkstoffs des Griffkörpers 16a zu Breite der Arme 26a, 26a' beträgt von 1:3 bis 1:7, vorzugsweise von 1:3.5 bis 1:5. Der Abstand der Arme 26a, 26a' beträgt von 10 mm bis 25 mm, vorzugsweise von 12 mm bis 20 mm. Dieser Abstand ist gleichbedeutend mit der freien Länge des Zahnseidefadens 24a bzw. der Zahnseide.

Der materielle Griffkörper 16a besteht zumindest zu einem Großteil aus einem Papierwerkstoff. Der materielle Griffkörper 16a besteht beispielhaft vollständig aus einem Papierwerkstoff. Der materielle Griffkörper 16a der Griffeinheit 14a kann zumindest eine Schicht aus einem Papierwerkstoff aufweisen. Die Schicht kann dreidimensional geformt ausgebildet sein. Der materielle Griffkörper 16a weist von 1 bis 10 Lagen, vorzugsweise von 1 bis 5 Lagen, auf. Die Lagen bilden eine Schicht. Die Anzahl der Lagen hängt insbesondere von der gewünschten Endstärke bzw. Stabilität des materiellen Griffkörpers 16a ab. Es können insbesondere viele dünne Lagen oder wenige dicke Lagen realisiert werden. Die Lagen werden vorzugsweise verbunden. Durch das Realisieren des materiellen Griffkörpers 16a in mehreren Lagen ergeben sich Stabilitätsvorteile gegenüber einem Körper aus einer oder weniger Lagen. Der materielle Griffkörper 16a weist beispielhaft genau drei Lagen auf, die eine Schicht bilden. Der Papierwerkstoff weist insbesondere eine Materialstärke von 0,8 mm bis 2,5 mm, vorzugsweise von 1 mm bis 1,8 mm, auf. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Der Griffkörper 16a weist ferner eine im Wesentlichen konstante Materialstärke auf.

Ferner bildet der Griffkörper 16a auf einer der Anwendungseinheit 12a abgewandten Seite eine Zahnstocherspitze 72a aus. Die Zahnstocherspitze 72a ist durch partielles Verpressen des Griffkörpers 16a hergestellt. Der Griffbereich 68a läuft auf einer dem Kopfbereich 66a abgewandten Seite zu einer Spitze hin spitz aus. Die Spitze ist zu der Spitze hin verpresst, sodass eine zulaufende Geometrie mit einer Spitze geschaffen wird, welche die Zahnstocherspitze 72a ausbildet. Alternativ wäre auch denkbar, dass die Zahnstocherspitze 72a durch Schneiden, Fräsen oder Umspritzen mit Hartkomponente hergestellt wird. Durch das Verpressen kann jedoch eine verbesserte Stabilität erreicht werden.

Das Körperpflegeprodukt 10a weist ferner die Verbindungseinheit 18a auf. Die Verbindungseinheit 18a weist ein mit der Anwendungseinheit 12a verbundenes Verbindungselement 20a und ein mit der Griffeinheit 14a verbundenes weiteres Verbindungselement 22a auf. Das Verbindungselement 20a und das weitere Verbindungselement 22a sind korrespondierend ausgebildet. Ferner ist das Verbindungselement 20a der Verbindungseinheit 18a einstückig mit der Anwendungseinheit 12a ausgebildet. Das Verbindungselement 20a bildet insbesondere einen Teil der Anwendungseinheit 12a. Das weitere Verbindungselement 22a der Verbindungseinheit 18a ist zumindest teilweise einstückig mit der Griffeinheit 14a ausgebildet. Das weitere Verbindungselement 22a der Verbindungseinheit 18a ist einstückig mit dem Griffkörper 16a ausgebildet. Das weitere Verbindungselement 22a der Verbindungseinheit 18a ist einteilig mit dem Griffkörper 16a ausgebildet. Das weitere Verbindungselement 22a der Verbindungseinheit 18a bildet daher einen Teil des Griffkörpers 16a. Das weitere Verbindungselement 22a der Verbindungseinheit 18a besteht daher ebenfalls zu einem Großteil, insbesondere vollständig, aus einem Papierwerkstoff.

Das Verbindungselement 20a der Verbindungseinheit 18a besteht zu einem Großteil aus einem Polymer, insbesondere aus einem Kunststoff. Das Verbindungselement 20a der Verbindungseinheit 18a besteht aus einem Hartkunststoff. Das Verbindungselement 20a besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22a ist in einem Endbereich des Griffkörpers 16a ausgebildet. Die Arme 26a, 26a' des Griffkörpers 16a bilden in ihren Endbereichen das weitere Verbindungselement 22a aus, an welchem die Anwendungseinheit 12a fixiert ist. Das weitere Verbindungselement 22a bildet an den Enden der Arme 26a, 26a' zwei Verbindungsbereiche 28a, 28a' aus. An jedem der Arme 26a, 26a' ist jeweils ein Verbindungsbereich 28a, 28a' ausgebildet.

Das Verbindungselement 20a der Verbindungseinheit 18a ist zumindest teilweise stoffschlüssig mit dem weiteren Verbindungselement 22a der Verbindungseinheit 18a verbunden. Das Verbindungselement 20a der Verbindungseinheit 18a ist zumindest teilweise formschlüssig mit dem weiteren Verbindungselement 22a der Verbindungseinheit 18a verbunden. Das weitere Verbindungselement 22a der Verbindungseinheit 18a ist mit dem Verbindungselement 20a der Verbindungseinheit 18a umspritzt. Ferner ist der Zahnseidefaden 24a der Anwendungseinheit 12a von dem Verbindungselement 20a der Verbindungseinheit 18a umspritzt. Das Verbindungselement 20a der Verbindungseinheit 18a weist zumindest eine Kappe 30a, 30a' auf, welche das weitere Verbindungselement 22a der Verbindungseinheit 18a übergreift. Das Verbindungselement 20a der Verbindungseinheit 18a weist zwei Kappen 30a, 30a' auf, welche jeweils einen der Arme 26a, 26a' in einem Bereich des weiteren Verbindungselements 22a übergreifen. Die Kappen 30a, 30a' erstrecken sich jeweils klammerartig um die Arme 26a, 26a'. Die Kappen 30a, 30a' des Verbindungselements 20a erstrecken sich jeweils klammerartig von der Zahnseidefadenseite her über die Arme 26a, 26a'. Die Kappen 30a, 30a' des Verbindungselements 20a weisen in einer Ebene senkrecht zu einer Richtung des Zahnseidefadens 24a jeweils einen U-förmigen Querschnitt auf. Der Zahnseidefaden 24a ist dabei von den Kappen 30a, 30a' des Verbindungselements 20a umspritzt. Das Verbindungselement 20a verbindet den Zahnseidefaden 24a mit den Armen 26a, 26a' des Griffkörpers 16a. Der Zahnseidefaden 24a liegt nicht am Griffkörper 16a an. Zwischen dem Zahnseidefaden 24a und dem Griffkörper 16a besteht ein Abstand von 0,2 mm bis 3 mm, vorzugsweise von 0,35 mm bis 0,8 mm. Ein Kunststoff des Verbindungselements 20a muss um den Zahnseidefaden 24a der Anwendungseinheit 12a fließen, um den benötigten Ausreißkräften standzuhalten.

Das Verbindungselement 20a ist in einem Spritzgussverfahren hergestellt. Das Verbindungselement 20a weist zumindest einen Anspritzpunkt 34a auf, welcher an den Kappen 30a, 30a' angeordnet ist. Das Verbindungselement 20a weist zwei Anspritzpunkte 34a auf, welche jeweils an einer der Kappen 30a, 30a' angeordnet sind. Die Anspritzpunkte 34a des Spritzgussverfahrens sind in einem Nahbereich des Zahnseidefadens 24a, insbesondere in einem Nahbereich eines Verbindungspunkts zwischen dem Zahnseidefaden 24a und der jeweiligen Kappe 30a, 30a', angeordnet.

Das weitere Verbindungselement 22a der Verbindungseinheit 18a weist zumindest eine Formschlusskontur 36a auf, welche dazu vorgesehen ist einen Formschluss mit dem Verbindungselement 20a auszubilden. Das weitere Verbindungselement 22a weist an beiden Armen 26a, 26a jeweils eine Formschlusskontur 36a auf. Die Formschlusskontur 36a ist derart gestaltet, dass keine Rotation des Verbindungselements 20a möglich ist. Die Formschlusskontur 36a ist in den Verbindungsbereichen 28a, 28a' angeordnet. Die Formschlusskontur 36a des weiteren Verbindungselements 22a ist zu einer Verdrehsicherung des Verbindungselements 20a vorgesehen. Die Formschlusskontur 36a des weiteren Verbindungselements 22a weist zumindest eine Durchgangsausnehmung 38a, 38a' auf. Die Formschlusskontur 36a des weiteren Verbindungselements 22a weist zwei Durchgangsausnehmungen 38a, 38a' auf, wobei jeweils eine Durchgangsausnehmung 38a, 38a' in jeweils einem der Arme 26a, 26a' angeordnet ist. Die Formschlusskontur 36a bildet sich durch die Durchgangsausnehmung 38a, 38a"""" sowie die Außenkontur der Arme 26a, 26a"""" aus. Das Verbindungselement 20a erstreckt sich jeweils durch die Durchgangsausnehmungen 38a, 38a'. Die Kappen 30a, 30a' erstrecken sich jeweils durch die Durchgangsausnehmungen 38a, 38a'. Die zumindest eine Durchgangsausnehmung 38a, 38a' ist beispielhaft von einem runden Loch gebildet. Es wäre jedoch auch eine andere, einem Fachmann als sinnvoll erscheinende Ausgestaltung denkbar, wie beispielsweise als länglicher Schlitz, quadratisches oder rechteckiges Loch oder dergleichen. Der Durchmesser der Durchgangsausnehmungen 38a, 38a' beträgt jeweils von 1 mm bis 5 mm, vorzugsweise von 2 mm bis 4 mm. Der Abstand zu einem Rand des Griffkörpers 16a, d.h. eine Rest-Wandstärke pro Seite, beträgt insbesondere von 1 mm bis 4 mm.

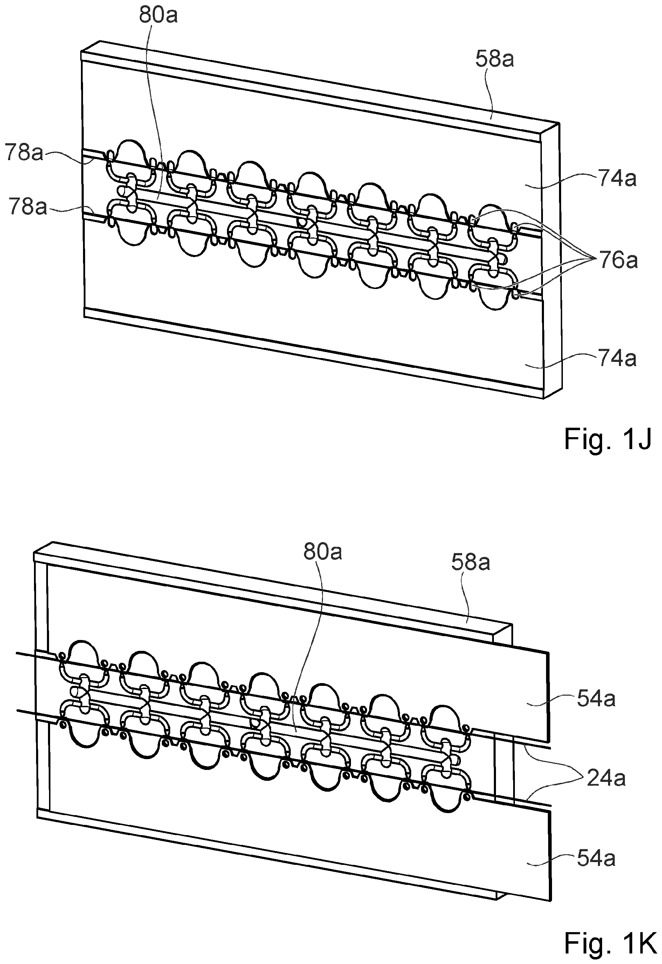

Figur 1J zeigt ein Spritzgusswerkzeug 58a zur Herstellung des erfindungsgemäßen Körperpflegeprodukts 10a. In der Figur 1J ist insbesondere lediglich eine Formhälfte des Spritzgusswerkzeugs 58a gezeigt. Das Spritzgusswerkzeug 58a weist auf jeder Formhälfte Kavitäten 74a auf, welche jeweils zu einer Aufnahme eines Papierbogens 54a vorgesehen sind. Die Arme 26a, 26a' des Griffkörpers 16a werden in dem Spritzgusswerkzeug 58a teilweise anliegend an die Kavitätenwand der Kavitäten 74a des Papierbogens 54a gestaltet, sodass in diesen dichtenden Bereichen keine Freistellung besteht. Die Arme 26a, 26a' müssen insbesondere abdichten, damit das Kunststoffmaterial beim Einspritzen nicht ausläuft und eine Überspritzung bildet. Durch die Form und das Anliegen an den entsprechenden Kavitätenwänden verrutscht der Griffkörper 16a bzw. der gesamte Papierbogen 54a nicht. Die Griffkörper 16a werden mit den Armen 26a, 26a' in die entsprechende Ausnehmung des Spritzgusswerkzeugs 58a hinein gedrückt, insbesondere in Richtung des Zahnseidefadens 24a. Der Papierbogen 54a ist dafür in dem Kopfbereich 66a der Griffkörper 16a bereits gestanzt ausgebildet (vgl. Figur 1K und 1L). Des Weiteren weist das Spritzgusswerkzeug 58a zwei Kavitäten 78a auf, welche jeweils zu einer Aufnahme eines Zahnseidefadens 24a zur Ausbildung der Anwendungseinheit 12a vorgesehen sind. Ferner weist das Spritzgusswerkzeug 58a eine Vielzahl von an die Kavitäten 74a, 78a angrenzende Kavitäten 76a der Verbindungselemente 20a zur Ausbildung der Verbindungselemente 20a der Verbindungseinheit 18a auf. Zudem weist das Spritzgusswerkzeug 58a eine Kanalausnehmung 80a auf, welche einen Kaltkanalanguss 82a begrenzt, welches die Kavitäten 76a der Verbindungselemente 20a miteinander verbindet.

Figur 1O zeigt ein schematisches Ablaufdiagramm eines Verfahrens zu einer Herstellung des Körperpflegeprodukts 10a. Das Verfahren weist einen Bereitstellungsschritt 50a auf. In dem Bereitstellungsschritt 50a wird zumindest eine Griffeinheit 14a mit zumindest einem weiteren Verbindungselement 22a der Verbindungseinheit 18a bereitgestellt. In dem Bereitstellungsschritt 50a werden mehrere Griffeinheiten 14a, insbesondere mehrere Griffkörper 16a der Griffeinheit 14a, zur Herstellung mehrerer Körperpflegeprodukte 10a zusammenhängend aus zumindest einem Papierbogen 54a bereitgestellt. In dem Bereitstellungsschritt 50a werden vierzehn Griffeinheiten 14a, insbesondere vierzehn Griffkörper 16a der Griffeinheit 14a, zur Herstellung mehrerer Körperpflegeprodukte 10a zusammenhängend aufgeteilt auf zwei identische Papierbögen 54a bereitgestellt. Die Papierbögen 54a werden dabei in das Spritzgusswerkzeug 58a eingelegt. Die Papierbögen 54a werden in die Kavitäten 74a eingelegt. Ferner wird in dem Bereitstellungsschritt 50a zumindest ein zusammenhängender Zahnseidefaden 24a für mehrere Anwendungseinheiten 12a bereitgestellt und in das Spritzgusswerkzeug 58a eingelegt. In dem Bereitstellungsschritt 50a werden zwei lange Zahnseidefäden 24a für insgesamt zwei mal sieben Anwendungseinheiten 12a bereitgestellt und jeweils in das Spritzgusswerkzeug 58a eingelegt. Die Zahnseidefäden 24a werden in die Kavitäten 78a eingelegt (vgl. Figur 1K).

Auf den Bereitstellungsschritt 50a folgt ein Verbindungsschritt 52a. In dem Verbindungsschritt 52a wird die Anwendungseinheit 12a über das Verbindungselement 20a der Verbindungseinheit 18a mittels Umspritzen mit der Griffeinheit 14a verbunden. Das Umspritzen erfolgt in einem Spritzgussverfahren. Das Spritzgussverfahren erfolgt mittels eines Kaltkanal-Angusssystems. Beim Kaltkanal-Angusssystem führt ein Kaltkanalanguss 82a von der Nadel zu den Verbindungselementen 20a. Das AngussSystem bleibt folglich am Körperpflegeprodukt 10a, wenn das Körperpflegeprodukt 10a aus dem Spritzgusswerkzeug 58a entfernt wird. Für den Anspritzpunkt 34a am Körperpflegeprodukt 10a sind verschiedene, einem Fachmann als sinnvoll erscheinende Positionen denkbar. Die Anspritzpunkte 34a liegen beispielhaft auf einer Oberseite in der Nähe des Zahnseidefadens 24a. Die Temperatur der Schmelze beträgt für die Verarbeitung insbesondere von 150°C bis 290°C, vorzugsweise 190°C bis 250°C. Der Zahnseidefaden 24a, insbesondere die Zahnseide, besteht vorzugsweise aus Polyamid (PA) und weist einen Schmelzpunkt von rund 220°C auf. Das Kunststoffmaterial des Verbindungselements 20a ist vorzugsweise ein Polypropylen (PP) mit einem Schmelzpunkt von rund 170°C. Polyamid hat daher einen höheren Schmelzpunkt als Polypropylen. Bei dem Spritzgussprozess herrschen insbesondere Drücke von 600 bar bis 1500 bar, vorzugsweise von 800 bar bis 1300 bar.

Auf den Verbindungsschritt 52a folgt ein Trennschritt 56a. In dem auf den Verbindungsschritt 52a folgenden Trennschritt 56a werden die Griffeinheiten 14a voneinander getrennt. Nach einem Umspritzen werden die Papierbögen 54a aus dem Spritzgusswerkzeug 58a entfernt und gestanzt. Ein Stanzen kann nach der Umspritzung inline oder offline, d.h. direkt verknüpft oder nicht verknüpft erfolgen. Ein Stanzen umfasst insbesondere die folgenden Schritte: In einem ersten Schritt werden die Zahnseidefäden 24a abgestanzt und die Zahnseidefadenenden ansengt. Das Trennen zwischen Körperpflegeprodukten 10a und an den Enden erfolgt insbesondere mit einem Stanzmesser. Das Ansengen der Zahnseidefadenenden erfolgt insbesondere mittels Wärme berührungslos. Die Wärmeerzeugung erfolgt dabei insbesondere mittels Heißluft. Durch das Ansengen bildet sich eine kugelartige Struktur 118a am Ende des Zahnseidefadens 24a. Der Zahnseidefaden 24a wird daher weniger aus dem Verbindungselement 20a der Verbindungseinheit 18a ausgerissen. Die kugelartige Struktur 118a bettet sich insbesondere zwischen dem Verbindungselement 20a und dem Griffkörper 16a ein. Dadurch minimiert sich die Größe der kugelartigen Struktur 118a und sie stört in der Anwendung nicht. Die Temperaturen zum Ansengen betragen insbesondere von 200°C bis 280°C, vorzugsweise 220°C bis 260°C. Zum Ansengen sind die Körperpflegeprodukte 10a insbesondere noch in den Papierbögen 54a gehalten, um ein einfacheres Handling und damit eine genauere Positionierung zu ermöglichen. Anschließend wird in einem weiteren Schritt ein Anguss entfernt. Es erfolgt ein Abstanzen des Kaltkanalangusses 82a. Ferner kann eine Anguss-Nachbearbeitung, beispielsweise durch eine Wärmebehandlung, erfolgen. Der Anguss wird insbesondere möglichst spät entfernt, da er das ganze Konstrukt zusammenhält. In einem weiteren Schritt wird der Griffkörper 16a fertig ausgestanzt.

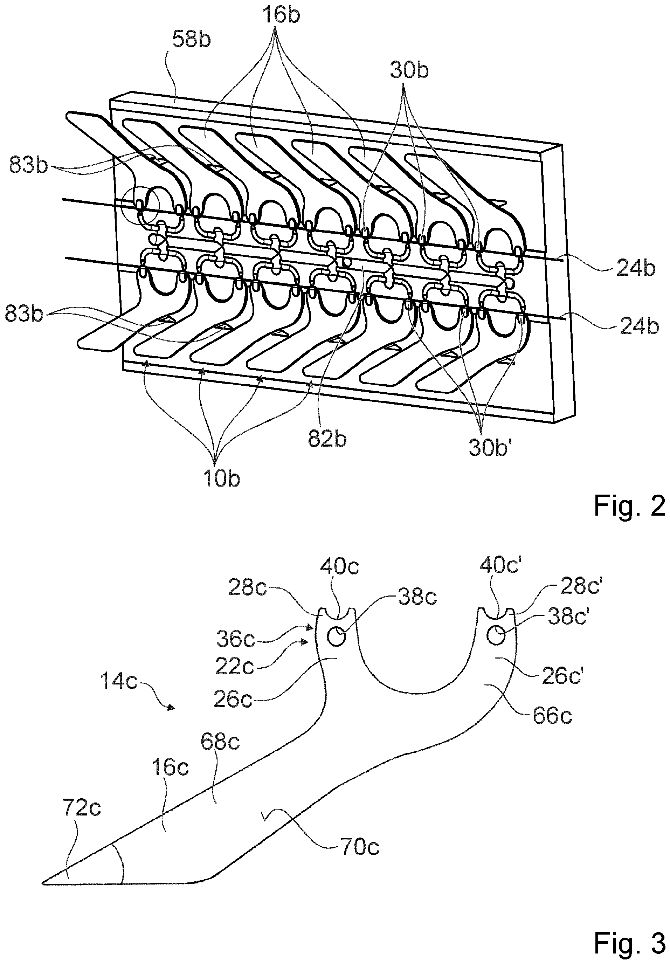

In den Figuren 2 bis 11 sind neun weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1A bis 1O, verwiesen werden kann. Zur Unterscheidung der Ausführungsbeispiele ist der Buchstabe a in den Bezugszeichen des Ausführungsbeispiels der Figuren 1A bis 1O durch die Buchstaben b bis i in den Bezugszeichen der Ausführungsbeispiele der Figuren 2 bis 9C ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1A bis 1O, verwiesen werden.

Figur 2 zeigt ein Spritzgusswerkzeug 58b zur Herstellung von Körperpflegeprodukten 10b. In der Figur 2 ist insbesondere lediglich eine Formhälfte des Spritzgusswerkzeugs 58b gezeigt. Das Spritzgusswerkzeug 58b weist auf jeder Formhälfte Kavitäten 74b auf, welche jeweils zu einer Aufnahme mehrerer, einzelner Griffkörper 16b vorgesehen sind. Das Spritzgusswerkzeug 58b für einzelne Griffkörper 16b bringt insbesondere eine komplizierte Formgebung mit mehr Geometrie mit sich, die die Griffkörper 16b in Position halten. In den Kavitäten 74b sind dazu Fortsätze 83b angeordnet, welche die Griffkörper 16b in Position halten. Die Fortsätze 83b sind beispielhaft von dreieckigen Fortsätzen gebildet, welche die Griffkörper 16b jeweils in einem Griffbereich 68b abstützen. Anstelle der Fortsätze 83b wäre es auch möglich eine dem Griffkörper 16b entsprechende volle Kontur/Kavität auszugestalten, in welche der Griffkörper 16b einsetzbar ist und welche den Griffkörper 16b komplett umfasst. Ferner wären insbesondere weitere Halteelemente zu einem Abstützen der Griffkörper 16b sinnvoll. Es wäre insbesondere ein Halten der Griffkörper 16b in einem Bogenbereich, an der Seite an verschiedenen Positionen und im Endbereich gegenüberliegend zu einem Zahnseidefaden 24b durch das Spritzgusswerkzeug 58b sinnvoll. Des Weiteren weist das Spritzgusswerkzeug 58b zwei Kavitäten 78b auf, welche jeweils zu einer Aufnahme eines Zahnseidefadens 24b zur Ausbildung der Anwendungseinheit 12b vorgesehen sind. Ferner weist das Spritzgusswerkzeug 58b eine Vielzahl von an die Kavitäten 74b, 78b angrenzenden Kavitäten 76b der Verbindungselemente 20b zur Ausbildung von Verbindungselementen 20b einer Verbindungseinheit 18b auf. Zudem weist das Spritzgusswerkzeug 58b eine

Kanalausnehmung 80b auf, welche einen Kaltkanalanguss 82b begrenzt, welches die Kavitäten 76b der Verbindungselemente 20b miteinander verbindet.

Die Figur 3 zeigt eine Griffeinheit 14c und ein weiteres Verbindungselement 22c einer Verbindungseinheit 18c eines Körperpflegeprodukts 10c in einer schematischen Vorderansicht. Das Körperpflegeprodukt 10c ist von einem Mundhygienemittel gebildet. Das Körperpflegeprodukt 10c ist im vorliegenden Fall als ein Flosser ausgebildet.

Das Körperpflegeprodukt 10c weist eine Anwendungseinheit 12c auf. Ferner weist das Körperpflegeprodukt 10c die Griffeinheit 14c auf, welche einen materiellen Griffkörper 16c aufweist. Des Weiteren weist das Körperpflegeprodukt 10c eine Verbindungseinheit 18c auf, welche die Anwendungseinheit 12c mit der Griffeinheit 14c verbindet.

Die Griffeinheit 14c ist zu einem Greifen durch den Bediener vorgesehen. Die Griffeinheit 14c weist den materiellen Griffkörper 16c auf. Der materielle Griffkörper 16c der Griffeinheit 14c weist einen Kopfbereich 66c auf. Ferner weist der materielle Griffkörper 16c der Griffeinheit 14c einen Griffbereich 68c auf. Der Kopfbereich 66c ist zu einer Anbindung der Anwendungseinheit 12c vorgesehen. Der materielle Griffkörper 16c weist zu der Anwendungseinheit 12c hin zumindest zwei Arme 26c, 26c' auf. Der Kopfbereich 66c ist als U-förmige Geometrie mit zwei Armen 26c, 26c' ausgebildet.

Der materielle Griffkörper 16c besteht zumindest zu einem Großteil aus einem Papierwerkstoff. Der materielle Griffkörper 16c besteht beispielhaft vollständig aus einem Papierwerkstoff.

Das Körperpflegeprodukt 10c weist ferner die Verbindungseinheit 18c auf. Die Verbindungseinheit 18c weist ein mit der Anwendungseinheit 12c verbundenes Verbindungselement 20c und ein mit der Griffeinheit 14c verbundenes weiteres Verbindungselement 22c auf. Das weitere Verbindungselement 22c der Verbindungseinheit 18c ist einteilig mit dem Griffkörper 16c ausgebildet. Das weitere Verbindungselement 22c der Verbindungseinheit 18c bildet daher einen Teil des Griffkörpers 16c. Das weitere Verbindungselement 22c der Verbindungseinheit 18c besteht daher ebenfalls zu einem Großteil, insbesondere vollständig, aus einem Papierwerkstoff.

Das weitere Verbindungselement 22c ist in einem Endbereich des Griffkörpers 16c ausgebildet. Die Arme 26c, 26c' des Griffkörpers 16c bilden in ihren Endbereichen das weitere Verbindungselement 22c aus, an welchem die Anwendungseinheit 12c fixiert ist. Das weitere Verbindungselement 22c bildet an den Enden der Arme 26c, 26c' zwei Verbindungsbereiche 28c, 28c' aus. An jedem der Arme 26c, 26c' ist jeweils ein Verbindungsbereich 28c, 28c' ausgebildet.

Das weitere Verbindungselement 22c der Verbindungseinheit 18c weist zumindest eine Formschlusskontur 36c auf, welche dazu vorgesehen ist, einen Formschluss mit dem Verbindungselement 20c auszubilden. Das weitere Verbindungselement 22c weist an beiden Armen 26c, 26c' jeweils eine Formschlusskontur 36c auf. Die Formschlusskontur 36c ist derart gestaltet, dass keine Rotation des Verbindungselements 20c möglich ist. Die Formschlusskontur 36c ist in den Verbindungsbereichen 28c, 28c' angeordnet. Die Formschlusskontur 36c des weiteren Verbindungselements 22c ist zu einer Verdrehsicherung des Verbindungselements 20c vorgesehen. Die Formschlusskontur 36c des weiteren Verbindungselements 22c weist zumindest eine Durchgangsausnehmung 38c, 38c' auf. Die Formschlusskontur 36c des weiteren Verbindungselements 22c weist zwei Durchgangsausnehmungen 38c, 38c' auf, wobei jeweils eine Durchgangsausnehmung 38c, 38c' in jeweils einem der Arme 26c, 26c' angeordnet ist. Die Formschlusskontur 36c bildet sich durch die Durchgangsausnehmung 38c, 38c' sowie die Außenkontur der Arme 26c, 26c' aus. Das Verbindungselement 20c erstreckt sich jeweils durch die Durchgangsausnehmungen 38c, 38c'. Kappen 30c, 30c' des Verbindungselements 20c erstrecken sich jeweils durch die Durchgangsausnehmungen 38c, 38c'. Die zumindest eine Durchgangsausnehmung 38c, 38c' ist beispielhaft von einem runden Loch gebildet.

Ferner weist die Formschlusskontur 36c des weiteren Verbindungselements 22c zumindest eine Einkerbung 40c, 40c' auf, welche von dem Verbindungselement 20c hinterfüllt ist. Die Formschlusskontur 36c des weiteren Verbindungselements 22c weist zwei Einkerbungen 40c, 40c' auf, wobei jeweils eine Einkerbung 40c, 40c' jeweils an einem der Arme 26c, 26c' angeordnet ist. Die Einkerbungen 40c, 40c' sind jeweils oberhalb der Durchgangsausnehmungen 38c, 38c' angeordnet. Die Einkerbungen 40c, 40c' sind an einem oberen Ende der Arme 26c, 26c' angeordnet. Das Verbindungselement 20c erstreckt sich jeweils in die Einkerbungen 40c, 40c'. Die Kappen des Verbindungselements 20c erstrecken sich jeweils in die Einkerbungen 40c, 40c'. Die Einkerbungen 40c, 40c' sind beispielhaft von einem halbrunden Loch gebildet. Die Einkerbungen 40c, 40c' weisen bevorzugt eine Breite von 1 mm bis 5 mm, vorzugsweise von 2 mm bis 4 mm auf. Die Tiefe der Einkerbungen 40c, 40c' entspricht bevorzugt maximal 1 mm bis 3 mm, vorzugsweise von 1.2 mm bis 2 mm. Die Einkerbungen 40c, 40c' der Formschlusskontur 36c sind zu einer Drehvermeidung vorgesehen.

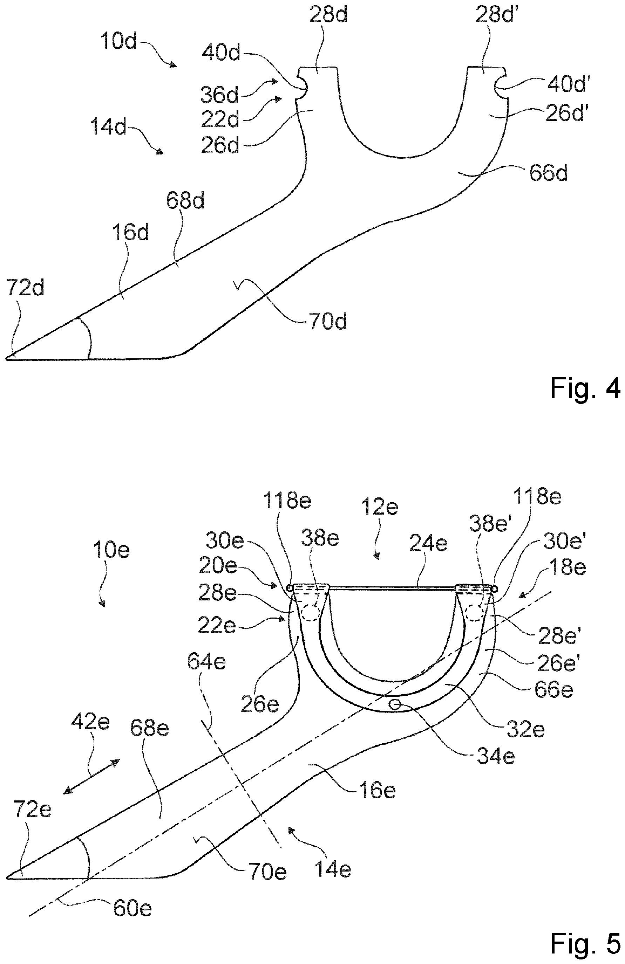

Die Figur 4 zeigt eine Griffeinheit 14d und ein weiteres Verbindungselement 22d einer Verbindungseinheit 18d eines Körperpflegeprodukts 10d in einer schematischen Vorderansicht. Das Körperpflegeprodukt 10d ist von einem Mundhygienemittel gebildet. Das Körperpflegeprodukt 10d ist im vorliegenden Fall als ein Flosser ausgebildet.

Das Körperpflegeprodukt 10d weist eine Anwendungseinheit 12d auf. Ferner weist das Körperpflegeprodukt 10d die Griffeinheit 14d auf, welche einen materiellen Griffkörper 16d aufweist. Des Weiteren weist das Körperpflegeprodukt 10d eine Verbindungseinheit 18d auf, welche die Anwendungseinheit 12d mit der Griffeinheit 14d verbindet.

Die Griffeinheit 14d ist zu einem Greifen durch den Bediener vorgesehen. Die Griffeinheit 14d weist den materiellen Griffkörper 16d auf. Der materielle Griffkörper 16d der Griffeinheit 14d weist einen Kopfbereich 66d auf. Ferner weist der materielle Griffkörper 16d der Griffeinheit 14d einen Griffbereich 68d auf. Der Kopfbereich 66d ist zu einer Anbindung der Anwendungseinheit 12d vorgesehen. Der materielle Griffkörper 16d weist zu der Anwendungseinheit 12d hin zumindest zwei Arme 26d, 26d' auf. Der Kopfbereich 66d ist als U-förmige Geometrie mit zwei Armen 26d, 26d' ausgebildet.

Der materielle Griffkörper 16d besteht zumindest zu einem Großteil aus einem Papierwerkstoff. Der materielle Griffkörper 16d besteht beispielhaft vollständig aus einem Papierwerkstoff.

Das Körperpflegeprodukt 10d weist ferner die Verbindungseinheit 18d auf. Die Verbindungseinheit 18d weist ein mit der Anwendungseinheit 12d verbundenes Verbindungselement 20d und ein mit der Griffeinheit 14d verbundenes weiteres Verbindungselement 22d auf. Das weitere Verbindungselement 22d der Verbindungseinheit 18d ist einteilig mit dem Griffkörper 16d ausgebildet. Das weitere Verbindungselement 22d der Verbindungseinheit 18d bildet daher einen Teil des Griffkörpers 16d. Das weitere Verbindungselement 22d der Verbindungseinheit 18d besteht daher ebenfalls zu einem Großteil, insbesondere vollständig, aus einem Papierwerkstoff.

Das weitere Verbindungselement 22d ist in einem Endbereich des Griffkörpers 16d ausgebildet. Die Arme 26d, 26d' des Griffkörpers 16d bilden in ihren Endbereichen das weitere Verbindungselement 22d aus, an welchem die Anwendungseinheit 12d fixiert ist. Das weitere Verbindungselement 22d bildet an den Enden der Arme 26d, 26d' zwei Verbindungsbereiche 28d, 28d' aus. An jedem der Arme 26d, 26d' ist jeweils ein Verbindungsbereich 28d, 28d' ausgebildet.

Das weitere Verbindungselement 22d der Verbindungseinheit 18d weist zumindest eine Formschlusskontur 36d auf, welche dazu vorgesehen ist, einen Formschluss mit dem Verbindungselement 20d auszubilden. Das weitere Verbindungselement 22d weist an beiden Armen 26d, 26d' jeweils eine Formschlusskontur 36d auf. Die Formschlusskontur 36d ist derart gestaltet, dass keine Rotation des Verbindungselements 20d möglich ist. Die Formschlusskontur 36d ist in den Verbindungsbereichen 28d, 28d' angeordnet. Die Formschlusskontur 36d des weiteren Verbindungselements 22d ist zu einer Verdrehsicherung des Verbindungselements 20d vorgesehen. Die Formschlusskontur 36d des weiteren Verbindungselements 22d weist zumindest eine Einkerbung 40d, 40d' auf, welche von dem Verbindungselement hinterfüllt ist. Die Formschlusskontur 36d des weiteren Verbindungselements 22d weist zwei Einkerbungen 40d, 40d' auf, wobei jeweils eine Einkerbung 40d, 40d' jeweils an einem der Arme 26d, 26d' angeordnet ist. Die Einkerbungen 40d, 40d' sind jeweils auf einander abgewandten Außenseiten der Arme 26d, 26d' angeordnet. Die Einkerbungen 40d, 40d' sind seitlich an einem oberen Ende der Arme 26d, 26d' angeordnet. Das Verbindungselement erstreckt sich jeweils in die Einkerbungen 40d, 40d'. Die Kappen des Verbindungselements 20d erstrecken sich jeweils in die Einkerbungen 40d, 40d'. Die Einkerbungen 40d, 40d' sind beispielhaft von einem halbrunden Loch gebildet. Die Einkerbungen 40d, 40d' weisen bevorzugt eine Breite von 1 mm bis 5 mm, vorzugsweise von 2 mm bis 4 mm auf. Die Tiefe der Einkerbungen 40d, 40d' entspricht bevorzugt maximal 1 mm bis 3 mm, vorzugsweise von 1,2 mm bis 2 mm. Die Einkerbungen 40d, 40d' der Formschlusskontur 36d sind zu einer Drehvermeidung vorgesehen.

Die Figur 5 zeigt ein Körperpflegeprodukt 10e in einer schematischen Vorderansicht. Das Körperpflegeprodukt 10e ist von einem Mundhygienemittel gebildet. Das Körperpflegeprodukt 10e ist im vorliegenden Fall als ein Flosser ausgebildet.

Das Körperpflegeprodukt 10e weist eine Anwendungseinheit 12e auf. Ferner weist das Körperpflegeprodukt 10e eine Griffeinheit 14e auf, welche einen materiellen Griffkörper 16e aufweist. Des Weiteren weist das Körperpflegeprodukt 10e eine Verbindungseinheit 18e auf, welche die Anwendungseinheit 12e mit der Griffeinheit 14e verbindet.

Die Anwendungseinheit 12e bildet einen Flosserkopf des Körperpflegeprodukts 10e. Die Anwendungseinheit 12e weist zumindest ein Zahnseidefaden 24e auf. Der Zahnseidefaden 24e ist von einer Zahnseide gebildet. Im vorliegenden Fall ist die Anwendungseinheit 12e als ein Zahnseidefaden ausgebildet. Der Zahnseidefaden 24e bildet eine Verbindung mit der Verbindungseinheit 18e.

Die Griffeinheit 14e ist zu einem Greifen durch den Bediener vorgesehen. Die Griffeinheit 14e weist den materiellen Griffkörper 16e auf. Der materielle Griffkörper 16e der Griffeinheit 14e weist einen Kopfbereich 66e auf. Ferner weist der materielle Griffkörper 16e der Griffeinheit 14e einen Griffbereich 68e auf. Der Kopfbereich 66e ist zu einer Anbindung der Anwendungseinheit 12e vorgesehen. Der materielle Griffkörper 16e weist zu der Anwendungseinheit 12e hin zumindest zwei Arme 26e, 26e' auf. Der Kopfbereich 66e ist als U-förmige Geometrie mit zwei Armen 26e, 26e' ausgebildet.

Der materielle Griffkörper 16e besteht zumindest zu einem Großteil aus einem Papierwerkstoff. Der materielle Griffkörper 16e besteht beispielhaft vollständig aus einem Papierwerkstoff.

Das Körperpflegeprodukt 10e weist ferner die Verbindungseinheit 18e auf. Die Verbindungseinheit 18e weist ein mit der Anwendungseinheit 12e verbundenes Verbindungselement 20e und ein mit der Griffeinheit 14e verbundenes weiteres Verbindungselement 22e auf. Das Verbindungselement 20e und das weitere Verbindungselement 22e sind korrespondierend ausgebildet. Ferner ist das Verbindungselement 20e der Verbindungseinheit 18e einstückig mit der Anwendungseinheit 12e ausgebildet. Das Verbindungselement 20e bildet insbesondere einen Teil der Anwendungseinheit 12e. Das weitere Verbindungselement 22e der Verbindungseinheit 18e ist zumindest teilweise einstückig mit der Griffeinheit 14e ausgebildet. Das weitere Verbindungselement 22e der Verbindungseinheit 18e ist einstückig mit dem Griffkörper 16e ausgebildet. Das weitere Verbindungselement 22e der Verbindungseinheit 18e ist einteilig mit dem Griffkörper 16e ausgebildet. Das weitere Verbindungselement 22e der Verbindungseinheit 18e bildet daher einen Teil des Griffkörpers 16e. Das weitere Verbindungselement 22e der Verbindungseinheit 18e besteht daher ebenfalls zu einem Großteil, insbesondere vollständig, aus einem Papierwerkstoff.

Das weitere Verbindungselement 22e ist in einem Endbereich des Griffkörpers 16e ausgebildet. Die Arme 26e, 26e' des Griffkörpers 16e bilden in ihren Endbereichen das weitere Verbindungselement 22e aus, an welchem die Anwendungseinheit 12e fixiert ist. Das weitere Verbindungselement 22e bildet an den Enden der Arme 26e, 26e' zwei Verbindungsbereiche 28e, 28d' aus. An jedem der Arme 26e, 26e' ist jeweils ein Verbindungsbereich 28e, 28e' ausgebildet.

Das Verbindungselement 20e der Verbindungseinheit 18e ist zumindest teilweise stoffschlüssig mit dem weiteren Verbindungselement 22e der Verbindungseinheit 18e verbunden. Das Verbindungselement 20e der Verbindungseinheit 18e ist zumindest teilweise formschlüssig mit dem weiteren Verbindungselement 22e der Verbindungseinheit 18e verbunden. Das weitere Verbindungselement 22e der Verbindungseinheit 18e ist mit dem Verbindungselement 20e der Verbindungseinheit 18e umspritzt. Ferner ist der Zahnseidefaden 24e der Anwendungseinheit 12e von dem Verbindungselement 20e der Verbindungseinheit 18e umspritzt. Das Verbindungselement 20e der Verbindungseinheit 18e weist zwei Kappen 30e, 30e' auf, welche jeweils einen der Arme 26e, 26d' in einem Bereich des weiteren Verbindungselements 22e übergreifen. Die Kappen 30e, 30e' erstrecken sich jeweils klammerartig um die Arme 26e, 26e'. Die Kappen 30e, 30e' des Verbindungselements 20e erstrecken sich jeweils klammerartig von der Zahnseidefadenseite her über die Arme 26e, 26e'. Die Kappen 30e, 30e' des Verbindungselements 20e weisen in einer Ebene senkrecht zu einer Richtung des Filaments 24e 10ejeweils einen U-förmigen Querschnitt auf. Der Zahnseidefaden 24e ist dabei von den Kappen 30e, 30e' des Verbindungselements 20e umspritzt. Das Verbindungselement 20e verbindet den Zahnseidefaden 24e mit den Armen 26e, 26e' des Griffkörpers 16e. Der Zahnseidefaden 24e liegt nicht am Griffkörper 16e an.

Das Verbindungselement 20e weist ferner einen Verbindungsbügel 32e auf, welcher die zwei Kappen 30e, 30e' miteinander verbindet. Der Verbindungsbügel 32e ist einteilig mit den Kappen 30e, 30e' ausgebildet. Der Verbindungsbügel 32e erstreckt sich über den Griffkörper 16e. Der Verbindungsbügel 32e folgt auf der Vorderseite dem U-förmigen Verlauf des Griffkörpers 16e in einem der Anwendungseinheit 12e zugewandten Endbereich. Bevorzugt ist der Verbindungsbügel 32e auf den Griffkörper 16e in einem Spritzgussverfahren aufgespritzt. Der Verbindungsbügel 32e ist dazu vorgesehen, eine Stabilität des Griffkörpers 16e zu unterstützen. Das Material des Verbindungsbügels 32e ist auf den Griffkörper 16e aufgebracht und über die Arme 26e, 26e' zum Ende der Arme 26e, 26e' geführt. Der Verbindungsbügel 32e weist eine kreisbogenförmige Erstreckung auf.

Das Verbindungselement 20e ist in einem Spritzgussverfahren hergestellt. Das Verbindungselement 20e weist zumindest einen Anspritzpunkt 34e auf, welcher an dem Verbindungsbügel 32e angeordnet ist. Der Anspritzpunkt 34e ist an dem Verbindungsbügel 32e zwischen der ersten Kappe 30e und der zweiten Kappe 30d' angeordnet. Der Anspritzpunkt 34e ist an einem Tiefpunkt des Verbindungsbügels 32e des U-förmigen Verlaufs des Griffkörpers 16e angeordnet. Der Anspritzpunkt 34e ist vorzugsweise so angeordnet, dass er zu beiden Kappen 30e, 30e' denselben Abstand aufweist bzw. dass der Verbindungsbügel 32e zwischen dem Anspritzpunkt 34e und der jeweiligen Kappe 30e, 30e' denselben Abstand aufweist.

Das weitere Verbindungselement 22e der Verbindungseinheit 18e weist zumindest eine Formschlusskontur 36e auf, welche dazu vorgesehen ist, einen Formschluss mit dem Verbindungselement 20e auszubilden. Das weitere Verbindungselement 22e weist an beiden Armen 26e, 26d' jeweils eine Formschlusskontur 36e auf. Die Formschlusskontur 36e ist derart gestaltet, dass keine Rotation des Verbindungselements 20e möglich ist. Die Formschlusskontur 36e ist in den Verbindungsbereichen 28e, 28e' angeordnet. Die Formschlusskontur 36e des weiteren Verbindungselements 22e ist zu einer Verdrehsicherung des Verbindungselements 20e vorgesehen. Die Formschlusskontur 36e des weiteren Verbindungselements 22e weist zumindest eine Durchgangsausnehmung 38e, 38e' auf. Die Formschlusskontur 36e des weiteren Verbindungselements 22e weist zwei Durchgangsausnehmungen 38e, 38e' auf, wobei jeweils eine Durchgangsausnehmung 38e, 38e' in jeweils einem der Arme 26e, 26e' angeordnet ist.

Die Formschlusskontur 36e bildet sich durch die Durchgangsausnehmung 38e, 38e' sowie die Außenkontur der Arme 26e, 26e' aus. Das Verbindungselement 20e erstreckt sich jeweils durch die Durchgangsausnehmungen 38e, 38e'. Die Kappen 30e, 30e' erstrecken sich jeweils durch die Durchgangsausnehmungen 38e, 38e'. Die zumindest eine Durchgangsausnehmung 38e, 38e' ist beispielhaft von einem runden Loch gebildet.

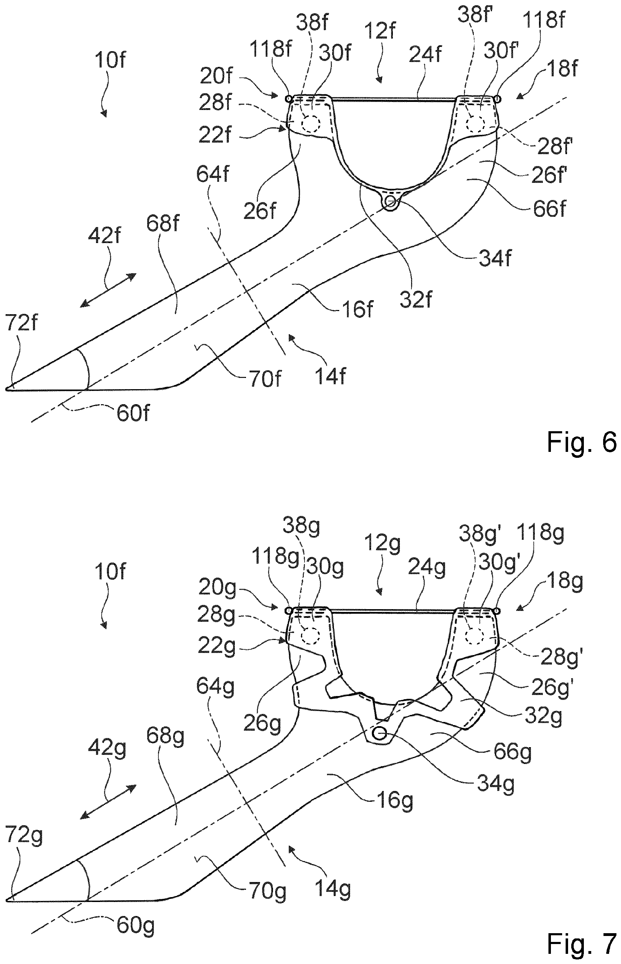

Die Figur 6 zeigt ein Körperpflegeprodukt 10f in einer schematischen Vorderansicht. Das Körperpflegeprodukt 10f ist von einem Mundhygienemittel gebildet. Das Körperpflegeprodukt 10f ist im vorliegenden Fall als ein Flosser ausgebildet.

Das Körperpflegeprodukt 10f weist eine Anwendungseinheit 12f auf. Ferner weist das Körperpflegeprodukt 10f eine Griffeinheit 14f auf, welche einen materiellen Griffkörper 16f aufweist. Des Weiteren weist das Körperpflegeprodukt 10f eine Verbindungseinheit 18f auf, welche die Anwendungseinheit 12f mit der Griffeinheit 14f verbindet.

Die Anwendungseinheit 12f bildet einen Flosserkopf des Körperpflegeprodukts 10f. Die Anwendungseinheit 12f weist zumindest ein Zahnseidefaden 24f auf. Der Zahnseidefaden 24f ist von einer Zahnseide gebildet. Im vorliegenden Fall ist die Anwendungseinheit 12f als ein Zahnseidefaden ausgebildet. Der Zahnseidefaden 24f bildet eine Verbindung mit der Verbindungseinheit 18f.

Die Griffeinheit 14f ist zu einem Greifen durch den Bediener vorgesehen. Die Griffeinheit 14f weist den materiellen Griffkörper 16f auf. Der materielle Griffkörper 16f der Griffeinheit 14f weist einen Kopfbereich 66f auf. Ferner weist der materielle Griffkörper 16f der Griffeinheit 14f einen Griffbereich 68f auf. Der Kopfbereich 66f ist zu einer Anbindung der Anwendungseinheit 12f vorgesehen. Der materielle Griffkörper 16f weist zu der Anwendungseinheit 12f hin zumindest zwei Arme 26f, 26f' auf. Der Kopfbereich 66f ist als U-förmige Geometrie mit zwei Armen 26f, 26f' ausgebildet.

Der materielle Griffkörper 16f besteht zumindest zu einem Großteil aus einem Papierwerkstoff. Der materielle Griffkörper 16f besteht beispielhaft vollständig aus einem Papierwerkstoff.

Das Körperpflegeprodukt 10f weist ferner die Verbindungseinheit 18f auf. Die Verbindungseinheit 18f weist ein mit der Anwendungseinheit 12f verbundenes Verbindungselement 20f und ein mit der Griffeinheit 14f verbundenes weiteres Verbindungselement 22f auf. Das Verbindungselement 20f und das weitere Verbindungselement 22f sind korrespondierend ausgebildet. Ferner ist das Verbindungselement 20f der Verbindungseinheit 18f einstückig mit der Anwendungseinheit 12f ausgebildet. Das Verbindungselement 20f bildet insbesondere einen Teil der Anwendungseinheit 12f. Das weitere Verbindungselement 22f der Verbindungseinheit 18f ist zumindest teilweise einstückig mit der Griffeinheit 14f ausgebildet. Das weitere Verbindungselement 22f der Verbindungseinheit 18f ist einstückig mit dem Griffkörper 16f ausgebildet. Das weitere Verbindungselement 22f der Verbindungseinheit 18f ist einteilig mit dem Griffkörper 16f ausgebildet. Das weitere Verbindungselement 22f der Verbindungseinheit 18f bildet daher einen Teil des Griffkörpers 16f. Das weitere Verbindungselement 22f der Verbindungseinheit 18f besteht daher ebenfalls zu einem Großteil, insbesondere vollständig, aus einem Papierwerkstoff.

Das weitere Verbindungselement 22f ist in einem Endbereich des Griffkörpers 16f ausgebildet. Die Arme 26f, 26f' des Griffkörpers 16f bilden in ihren Endbereichen das weitere Verbindungselement 22f aus, an welchem die Anwendungseinheit 12f fixiert ist. Das weitere Verbindungselement 22f bildet an den Enden der Arme 26f, 26f' zwei Verbindungsbereiche 28f, 28f' aus. An jedem der Arme 26f, 26f' ist jeweils ein Verbindungsbereich 28f, 28f' ausgebildet.

Das Verbindungselement 20f der Verbindungseinheit 18f ist zumindest teilweise stoffschlüssig mit dem weiteren Verbindungselement 22f der Verbindungseinheit 18f verbunden. Das Verbindungselement 20f der Verbindungseinheit 18f ist zumindest teilweise formschlüssig mit dem weiteren Verbindungselement 22f der Verbindungseinheit 18f verbunden. Das weitere Verbindungselement 22f der Verbindungseinheit 18f ist mit dem Verbindungselement 20f der Verbindungseinheit 18f umspritzt. Ferner ist der Zahnseidefaden 24f der Anwendungseinheit 12f von dem Verbindungselement 20f der Verbindungseinheit 18f umspritzt. Das Verbindungselement 20f der Verbindungseinheit 18f weist zwei Kappen 30f, 30f' auf, welche jeweils einen der Arme 26f, 26f' in einem Bereich des weiteren Verbindungselements 22f übergreifen. Die Kappen 30f, 30f' erstrecken sich jeweils klammerartig um die Arme 26f, 26f'. Die Kappen 30f, 30f' des Verbindungselements 20f erstrecken sich jeweils klammerartig von der Zahnseidenfadenseite her über die Arm 26f, 26f'. Die Kappen 30f, 30f' des Verbindungselements 20f weisen in einer Ebene senkrecht zu einer Richtung des Zahnseidefadens 24f jeweils einen U-förmigen Querschnitt auf. Der Zahnseidefaden 24f ist dabei von den Kappen 30f, 30f' des Verbindungselements 20f umspritzt. Das Verbindungselement 20f verbindet den Zahnseidefaden 24f mit den Armen 26f, 26f' des Griffkörpers 16f. Der Zahnseidefaden 24f liegt nicht am Griffkörper 16f an.

Das Verbindungselement 20f weist ferner einen Verbindungsbügel 32f auf, welcher die zwei Kappen 30f, 30f' miteinander verbindet. Der Verbindungsbügel 32f ist einteilig mit den Kappen 30f, 30f' ausgebildet. Der Verbindungsbügel 32f erstreckt sich über den Griffkörper 16f. Der Verbindungsbügel 32f folgt dem U-förmigen Verlauf des Griffkörpers 16f in einem der Anwendungseinheit 12f zugewandten Endbereich. Der Verbindungsbügel 32f überdeckt eine Stanzkante des Griffkörpers 16f auf einer Innenseite der Arme 26f, 26f' und dient als Schutz. Das Material des Verbindungsbügels 32f ist hierzu auf der schmalen Kante im Bogen zwischen den Armen 26f, 26f' geführt und überdeckt eine scharfe Kante des Griffkörpers 16f. Bevorzugt ist der Verbindungsbügel 32f auf den Griffkörper 16f in einem Spritzgussverfahren aufgespritzt. Das Material des Verbindungsbügels 32f ist auf den Griffkörper 16f aufgebracht und über die Arme 26f, 26f' zum Ende der Arme 26f, 26f' geführt. Der Verbindungsbügel 32f weist eine kreisbogenförmige Erstreckung auf.

Das Verbindungselement 20f ist in einem Spritzgussverfahren hergestellt. Das Verbindungselement 20f weist zumindest einen Anspritzpunkt 34f auf, welcher an dem Verbindungsbügel 32f angeordnet ist. Der Anspritzpunkt 34f ist an dem Verbindungsbügel 32f zwischen der ersten Kappe 30f und der zweiten Kappe 30f' angeordnet. Der Anspritzpunkt 34f ist an einem Tiefpunkt des Verbindungsbügels 32f des U-förmigen Verlaufs des Griffkörpers 16f angeordnet. Der Anspritzpunkt 34f ist vorzugsweise so angeordnet, dass er zu beiden Kappen 30f, 30f' denselben Abstand aufweist bzw. dass der Verbindungsbügel 32f zwischen dem Anspritzpunkt 34f und der jeweiligen Kappe 30f, 30f' denselben Abstand aufweist.

Das weitere Verbindungselement 22f der Verbindungseinheit 18f weist zumindest eine Formschlusskontur 36f auf, welche dazu vorgesehen ist, einen Formschluss mit dem Verbindungselement 20f auszubilden. Das weitere Verbindungselement 22f weist an beiden Armen 26f, 26f' jeweils eine Formschlusskontur 36f auf. Die Formschlusskontur 36f ist derart gestaltet, dass keine Rotation des Verbindungselements 20f möglich ist. Die Formschlusskontur 36f ist in den Verbindungsbereichen 28f, 28f' angeordnet. Die Formschlusskontur 36f des weiteren Verbindungselements 22f ist zu einer Verdrehsicherung des Verbindungselements 20f vorgesehen. Die Formschlusskontur 36f des weiteren Verbindungselements 22f weist zumindest eine Durchgangsausnehmung 38f, 38d' auf. Die Formschlusskontur 36f des weiteren Verbindungselements 22f weist zwei Durchgangsausnehmungen 38f, 38f' auf, wobei jeweils eine Durchgangsausnehmung 38f, 38f' in jeweils einem der Arme 26f, 26f' angeordnet ist. Die Formschlusskontur 36f bildet sich durch die Durchgangsausnehmung 38f, 38f' sowie die Außenkontur der Arme 26f, 26f' aus. Das Verbindungselement 20f erstreckt sich jeweils durch die Durchgangsausnehmungen 38f, 38f'. Die Kappen 30f, 30f' erstrecken sich jeweils durch die Durchgangsausnehmungen 38f, 38f'. Die zumindest eine Durchgangsausnehmung 38f, 38f' ist beispielhaft von einem runden Loch gebildet.

Die Figur 7 zeigt ein Körperpflegeprodukt 10g in einer schematischen Vorderansicht. Das Körperpflegeprodukt 10g ist von einem Mundhygienemittel gebildet. Das Körperpflegeprodukt 10g ist im vorliegenden Fall als ein Flosser ausgebildet.

Das Körperpflegeprodukt 10g weist eine Anwendungseinheit 12g auf. Ferner weist das Körperpflegeprodukt 10g eine Griffeinheit 14g auf, welche einen materiellen Griffkörper 16g aufweist. Des Weiteren weist das Körperpflegeprodukt 10g eine Verbindungseinheit 18g auf, welche die Anwendungseinheit 12g mit der Griffeinheit 14g verbindet.

Die Anwendungseinheit 12g bildet einen Flosserkopf des Körperpflegeprodukts 10g. Die Anwendungseinheit 12g weist zumindest einen Zahnseidefaden 24g auf. Der Zahnseidefaden 24g ist von einer Zahnseide gebildet. Im vorliegenden Fall ist die Anwendungseinheit 12g als ein Zahnseidefaden ausgebildet. Der Zahnseidefaden 24g bildet eine Verbindung mit der Verbindungseinheit 18g.

Die Griffeinheit 14g ist zu einem Greifen durch den Bediener vorgesehen. Die Griffeinheit 14g weist den materiellen Griffkörper 16g auf. Der materielle Griffkörper 16g der Griffeinheit 14g weist einen Kopfbereich 66g auf. Ferner weist der materielle Griffkörper 16g der Griffeinheit 14g einen Griffbereich 68g auf. Der Kopfbereich 66g ist zu einer Anbindung der Anwendungseinheit 12g vorgesehen. Der materielle Griffkörper 16g weist zu der Anwendungseinheit 12g hin zumindest zwei Arme 26g, 26g' auf. Der Kopfbereich 66g ist als U-förmige Geometrie mit zwei Armen 26g, 26g' ausgebildet.

Der materielle Griffkörper 16g besteht zumindest zu einem Großteil aus einem Papierwerkstoff. Der materielle Griffkörper 16g besteht beispielhaft vollständig aus einem Papierwerkstoff.

Das Körperpflegeprodukt 10g weist ferner die Verbindungseinheit 18g auf. Die Verbindungseinheit 18g weist ein mit der Anwendungseinheit 12g verbundenes Verbindungselement 20g und ein mit der Griffeinheit 14g verbundenes weiteres Verbindungselement 22g auf. Das Verbindungselement 20g und das weitere Verbindungselement 22g sind korrespondierend ausgebildet. Ferner ist das Verbindungselement 20g der Verbindungseinheit 18g einstückig mit der Anwendungseinheit 12g ausgebildet. Das Verbindungselement 20g bildet insbesondere einen Teil der Anwendungseinheit 12g. Das weitere Verbindungselement 22g der Verbindungseinheit 18g ist zumindest teilweise einstückig mit der Griffeinheit 14g ausgebildet. Das weitere Verbindungselement 22g der Verbindungseinheit 18g ist einstückig mit dem Griffkörper 16g ausgebildet. Das weitere Verbindungselement 22g der Verbindungseinheit 18g ist einteilig mit dem Griffkörper 16g ausgebildet. Das weitere Verbindungselement 22g der Verbindungseinheit 18g bildet daher einen Teil des Griffkörpers 16g. Das weitere Verbindungselement 22g der Verbindungseinheit 18g besteht daher ebenfalls zu einem Großteil, insbesondere vollständig, aus einem Papierwerkstoff.

Das weitere Verbindungselement 22g ist in einem Endbereich des Griffkörpers 16g ausgebildet. Die Arme 26g, 26g' des Griffkörpers 16g bilden in ihren Endbereichen das weitere Verbindungselement 22g aus, an welchem die Anwendungseinheit 12g fixiert ist. Das weitere Verbindungselement 22g bildet an den Enden der Arme 26g, 26e' zwei Verbindungsbereiche 28g, 28g' aus. An jedem der Arme 26g, 26g' ist jeweils ein Verbindungsbereich 28g, 28g' ausgebildet.

Das Verbindungselement 20g der Verbindungseinheit 18g ist zumindest teilweise stoffschlüssig mit dem weiteren Verbindungselement 22g der Verbindungseinheit 18g verbunden. Das Verbindungselement 20g der Verbindungseinheit 18g ist zumindest teilweise formschlüssig mit dem weiteren Verbindungselement 22g der Verbindungseinheit 18g verbunden. Das weitere Verbindungselement 22g der Verbindungseinheit 18g ist mit dem Verbindungselement 20g der Verbindungseinheit 18g umspritzt. Ferner ist der Zahnseidefaden 24g der Anwendungseinheit 12g von dem Verbindungselement 20g der Verbindungseinheit 18g umspritzt. Das Verbindungselement 20g der Verbindungseinheit 18g weist zwei Kappen 30g, 30g' auf, welche jeweils einen der Arme 26g, 26g' in einem Bereich des weiteren Verbindungselements 22g übergreifen. Die Kappen 30g, 30g' erstrecken sich jeweils klammerartig um die Arme 26g, 26g'. Die Kappen 30g, 30g' des Verbindungselements 20g erstrecken sich jeweils klammerartig von der Zahnseidefadenseite her über die Arme 26g, 26g'. Die Kappen 30g, 30g' des Verbindungselements 20g weisen in einer Ebene senkrecht zu einer 10gRichtung des Zahnseidefadens 24g jeweils einen U-förmigen Querschnitt auf. Der Zahnseidefaden 24g ist dabei von den Kappen 30g, 30g' des Verbindungselements 20g umspritzt. Das Verbindungselement 20g verbindet den Zahnseidefaden 24g mit den Armen 26g, 26g' des Griffkörpers 16g. Der Zahnseidefaden 24g liegt nicht am Griffkörper 16g an.

Das Verbindungselement 20g weist ferner einen Verbindungsbügel 32g auf, welcher die zwei Kappen 30g, 30g' miteinander verbindet. Der Verbindungsbügel 32g ist einteilig mit den Kappen 30g, 30g' ausgebildet. Der Verbindungsbügel 32g erstreckt sich über den Griffkörper 16g. Der Verbindungsbügel 32g folgt dem U-förmigen Verlauf des Griffkörpers 16g in einem der Anwendungseinheit 12g zugewandten Endbereich. Der Verbindungsbügel 32g überdeckt teilweise eine Stanzkante des Griffkörpers 16g auf einer Innenseite sowie einer Außenseite der Arme 26g, 26g' und dient als Schutz. Der Verbindungsbügel 32g erstreckt sich insbesondere in einem Zick-Zack-Muster über die Arme 26g, 26g'. Die Arme 26g, 26g' werden somit umschlungen, der Verbindungsbügel 32g breitet sich ab dem Anspritzpunkt 34g auf der Vorderseite wie auch der Rückseite aus und liegt über den inneren wie den äußeren Kanten des Griffkörpers 16g. Der Verbindungsbügel 32g ist als ein Bumper ausgebildet, welcher in der Anwendung das Zahnfleisch eines Benutzers von einer Verletzung an der Kante des Griffkörpers 16g schützt. Bevorzugt ist der Verbindungsbügel 32g auf den Griffkörper 16g in einem Spritzgussverfahren aufgespritzt. Das Material des Verbindungsbügels 32g ist auf den Griffkörper 16g aufgebracht und über die Arme 26g, 26g' zum Ende der Arme 26g, 26g' geführt. Der Verbindungsbügel 32g weist eine kreisbogenförmige Erstreckung auf.

Das Verbindungselement 20g ist in einem Spritzgussverfahren hergestellt. Das Verbindungselement 20g weist zumindest einen Anspritzpunkt 34g auf, welcher an dem Verbindungsbügel 32g angeordnet ist. Der Anspritzpunkt 34g ist an dem Verbindungsbügel 32g zwischen der ersten Kappe 30g und der zweiten Kappe 30g' angeordnet. Der Anspritzpunkt 34g ist an einem Tiefpunkt des Verbindungsbügels 32g des U-förmigen Verlaufs des Griffkörpers 16g angeordnet. Der Anspritzpunkt 34g ist vorzugsweise so angeordnet, dass er zu beiden Kappen 30g, 30g' denselben Abstand aufweist bzw. dass der Verbindungsbügel 32g zwischen dem Anspritzpunkt 34g und der jeweiligen Kappe 30g, 30g' denselben Abstand aufweist.

Das weitere Verbindungselement 22g der Verbindungseinheit 18g weist zumindest eine Formschlusskontur 36g auf, welche dazu vorgesehen ist, einen Formschluss mit dem Verbindungselement 20g auszubilden. Das weitere Verbindungselement 22g weist an beiden Armen 26g, 26g' jeweils eine Formschlusskontur 36g auf. Die Formschlusskontur 36g ist derart gestaltet, dass keine Rotation des Verbindungselements 20g möglich ist. Die Formschlusskontur 36g ist in den Verbindungsbereichen 28g, 28g' angeordnet. Die Formschlusskontur 36g des weiteren Verbindungselements 22g ist zu einer Verdrehsicherung des Verbindungselements 20g vorgesehen. Die Formschlusskontur 36g des weiteren Verbindungselements 22g weist zumindest eine Durchgangsausnehmung 38g, 38g' auf. Die Formschlusskontur 36g des weiteren Verbindungselements 22g weist zwei Durchgangsausnehmungen 38g, 38g' auf, wobei jeweils eine Durchgangsausnehmung 38g, 38g' in jeweils einem der Arme 26g, 26g' angeordnet ist. Die Formschlusskontur 36g bildet sich durch die Durchgangsausnehmung 38g, 38g' sowie die Außenkontur der Arme 26g, 26g' aus. Das Verbindungselement 20g erstreckt sich jeweils durch die Durchgangsausnehmungen 38g, 38g'. Die Kappen 30g, 30g' erstrecken sich jeweils durch die Durchgangsausnehmungen 38g, 38g'. Die zumindest eine Durchgangsausnehmung 38g, 38g' ist beispielhaft von einem runden Loch gebildet. Der Verbindungsbügel 32g mit seiner Zick-Zack Ausgestaltung um die Arme 26g, 26g' unterstützt den Formschluss bzw. unterstützt, dass keine Rotation ermöglicht wird, da er aufgrund seiner Ausgestaltung die Kappen 30g, 30g' stabilisiert.

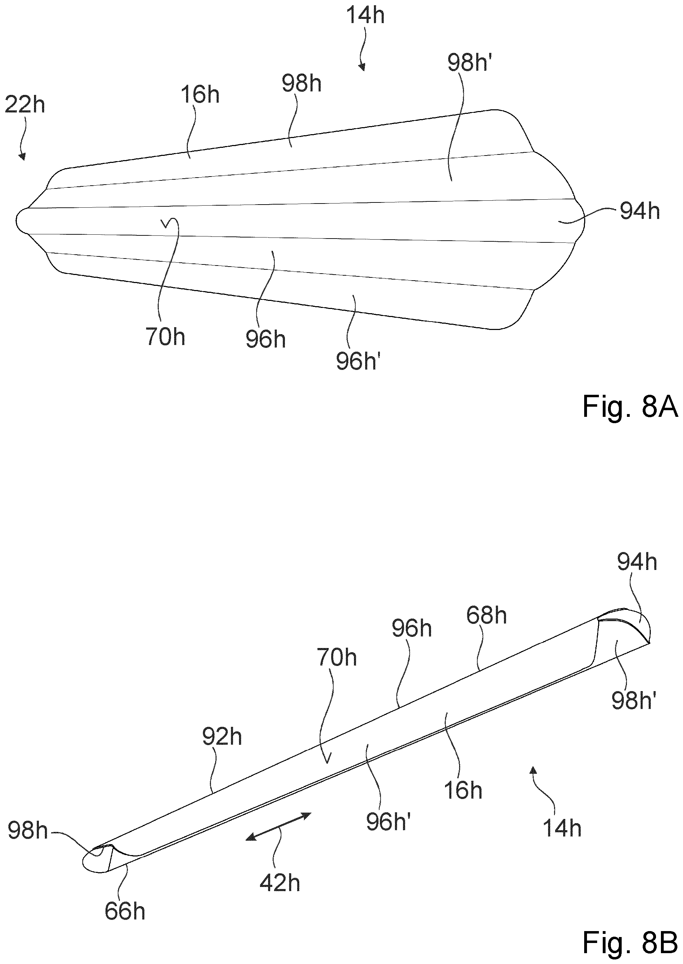

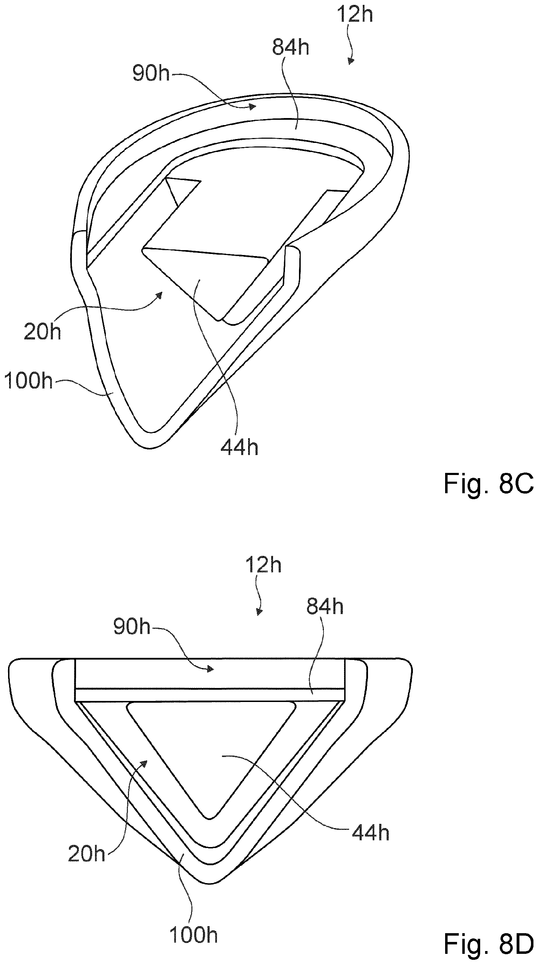

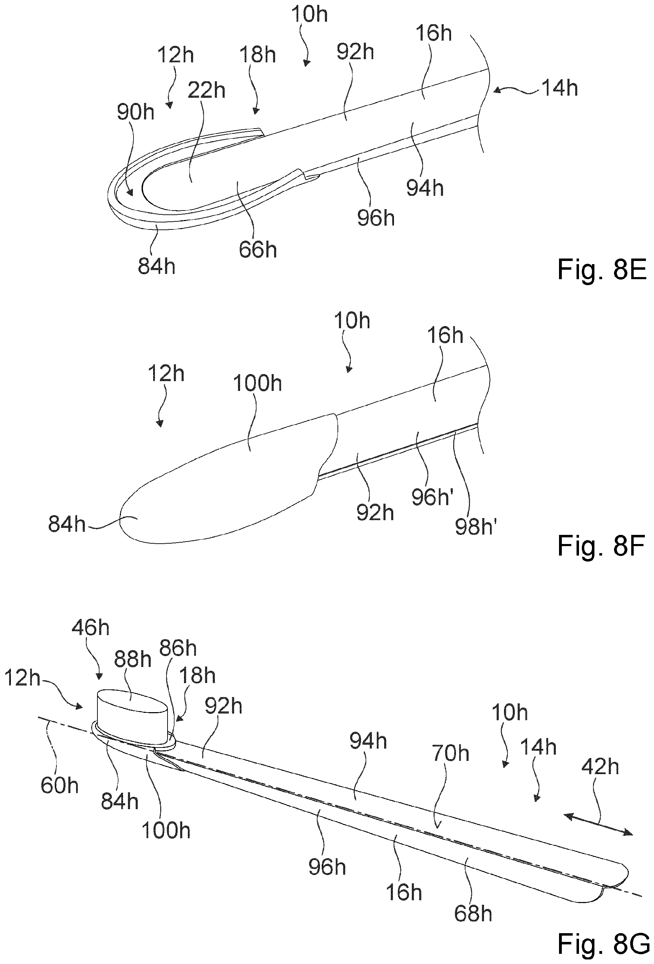

Im Folgenden wird auf die Figuren 8A bis 8G Bezug genommen, welche unterschiedliche Ansichten und Fertigungsstufen des Körperpflegeprodukts 10h zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 8G zeigt das fertige Körperpflegeprodukt 10h. Die Figur 8A und Figur 8B zeigen eine Griffeinheit 14h eines Körperpflegeprodukts 10h. Das Körperpflegeprodukt 10h ist von einem Mundhygienemittel gebildet. Das Körperpflegeprodukt 10h ist im vorliegenden Fall als eine Zahnbürste ausgebildet.

Das Körperpflegeprodukt 10h weist eine Anwendungseinheit 12h auf. Ferner weist das Körperpflegeprodukt 10h die Griffeinheit 14h auf, welche einen materiellen Griffkörper 16h aufweist. Des Weiteren weist das Körperpflegeprodukt 10h eine Verbindungseinheit 18h auf, welche die Anwendungseinheit 12h mit der Griffeinheit 14h verbindet.

Das Körperpflegeprodukt 10h weist eine Längsachse 60h, eine Höhenachse und eine Breitenachse auf. Die Längsachse 60h ist parallel zu einer Haupterstreckungsrichtung 42h des Körperpflegeprodukts 10h angeordnet. Ist das Körperpflegeprodukt 10h mit einer Rückseite auf eine ebene Oberfläche gelegt, sodass die Längsachse 60h parallel zu der Oberfläche angeordnet ist, ist die Höhenachse senkrecht zu der Längsachse 60h und senkrecht zu der Oberfläche und der Breitenachse angeordnet. Die Breitenachse ist senkrecht zu der Längsachse 60h und senkrecht zu der Höhenachse angeordnet.

Die Anwendungseinheit 12h weist einen Bürstenkopf 46h auf. Die Anwendungseinheit 12h ist von einem Bürstenkopf 46h gebildet. Im vorliegenden Fall ist die Anwendungseinheit 12h als ein Zahnbürstenkopf ausgebildet. Die Anwendungseinheit 12h weist einen Grundkörper 84h auf. Der Grundkörper 84h bildet eine Verbindung mit der Verbindungseinheit 18h. Der Grundkörper 84h ist einteilig mit einem Verbindungselement 20h der Verbindungseinheit 18h ausgebildet. Die Anwendungseinheit 12h weist ferner ein Borstenplättchen 86h mit mehreren Borsten 88h auf. Die Borsten 88h sind der Übersichtlichkeit halber als ein Volumenkörper dargestellt. Der Grundkörper 84h der Anwendungseinheit 12h weist einen Aufnahmebereich 90h zu einer Aufnahme des Borstenplättchens 86h auf. Eine Verbindung zwischen dem Borstenplättchen 86h und dem Grundkörper 84h erfolgt durch Kleben, Schweißen, Rasten und/oder Nieten. Allenfalls ergibt sich parallel noch die Verbindung zur Griffeinheit 14h im Bereich der Vorderseite des Griffkörpers 16h. Dabei kann beispielsweise die Verbindung zu dem Griffkörper 16h gesichert werden.

Die Griffeinheit 14h ist zu einem Greifen durch den Bediener vorgesehen. Die Griffeinheit 14h weist den materiellen Griffkörper 16h auf. Der materielle Griffkörper 16h der Griffeinheit 14h weist einen Kopfbereich 66h auf. Ferner weist der materielle Griffkörper 16h der Griffeinheit 14h einen Griffbereich 68h und einen zwischen dem Griffbereich 68h und dem Kopfbereich 66h angeordneten Halsbereich 92h auf. Der Kopfbereich 66h ist zu einer Anbindung der Anwendungseinheit 12h vorgesehen. Die Griffeinheit 14h weist zumindest eine Grifffläche 70h auf, welche eine Oberfläche des materiellen Griffkörpers 16h ausbildet. Der Griffkörper 16h wird aus dem ungefalteten Zustand, abgebildet in Fig. 8A, zu einem dreidimensionalen Körper gefaltet, abgebildet in Figur 8B. Der Griffkörper 16h weist in einem gefalteten Zustand einen dreieckigen Querschnitt auf, welcher sich aus drei Seiten des Griffkörpers 16h zusammensetzt. Der Griffkörper 16h ist in einem gefalteten Zustand hohl ausgebildet. Der Zuschnitt des Griffkörpers 16h besteht insbesondere aus einem Papierbogen, welcher aus zumindest einer, insbesondere genau einer Schicht besteht. Der Griffkörper 16h weist von 1 bis 10 Lagen, vorzugsweise von 1 bis 5 Lagen auf. Der materielle Griffkörper 16h weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16h ab. Es können insbesondere viele dünne Lagen oder wenige dicke Lagen realisiert werden. Die Lagen werden vorzugsweise verbunden. Durch das Realisieren des materiellen Griffkörpers16h in mehreren Lagen ergeben sich Stabilitätsvorteile gegenüber einem Körper aus einer oder weniger Lagen. Der Griffkörper 16h weist eine Vorderwand 94h und zwei Seitenwände 96h, 96h' auf. Der Griffkörper 16h ist aus einem Zuschnitt hergestellt. Die beiden Seitenwände 96h, 96h' zusammen mit den zwei Seiteninnenwänden 98h, 98h' bilden im Endprodukt eine Doppellage aus. Der Zuschnitt des Griffkörpers 16h besteht daher insbesondere aus fünf Seiten, und zwar der Vorderwand 94h, den zwei Seitenwänden 96h, 96h' und zwei Seiteninnenwänden 98h, 98h'. Zumindest eine, insbesondere beide, der Doppellagen sind geklebt. Die beiden Schichten der Seitenwände 96h, 96h' und die jeweiligen Seiteninnenwände 98h, 98h' sind daher miteinander verklebt. Der Griffkörper 16h ist in Längsrichtung konisch gestaltet. Im gefalteten Zustand ist der Griffkörper 16h auf der Bürstenkopf-Seite offen, damit später das Verbindungselement 20h eingefahren werden kann. Beispielhaft ist der Griffkörper 16h auch an einem unteren, freien Ende offen gestaltet. Die Vorderwand 94h des Griffkörpers 16h ist länger als die beiden Seitenwände 96h, 96h' und die jeweiligen Seiteninnenwände 98h, 98h'. Es bildet sich insbesondere ein Verlauf von einer Vorderseite des freien Endes hin zu den Seitenflächen aus, welche insbesondere zurückspringen. Die Längserstreckung des Griffkörpers 16h reduziert sich zur hinteren Faltkante hin. Ferner ist der Griffkörper 16h und/oder das weitere Verbindungselement 22h zu der Anwendungseinheit 12h hin offen gestaltet. Dabei ist die Vorderseite des Griffkörpers 16h länger als die Seiten, sodass sich eine Einführgeometrie für das Verbindungselement 20h ausbildet. Eine Körperstabilität des Griffkörpers 16h wird durch die Faltung bzw. durch das dadurch entstehende Fachwerk im Querschnitt sowie die Doppellagigkeit erreicht. Ein Winkel zwischen der Vorderwand 94h und den Seitenwänden 96h, 96h' mit den jeweiligen Seiteninnenwänden 98h, 98h' des Griffkörper 16h ist in einem gefalteten Zustand links und rechts symmetrisch, insbesondere zwischen 45° und 85°, vorzugsweise zwischen 55° und 75°. Zwischen den Seitenwänden 96h, 96h' mit den jeweiligen Seiteninnenwänden 98h, 98h' des Griffkörpers 16h beträgt der Winkel insbesondere zwischen 30° und 70°, vorzugsweise zwischen 40° und 60°. Die Länge des Griffkörpers 16h beträgt über alles von 130 mm bis 210 mm, vorzugsweise von 180 mm bis 200 mm. Die Breite des Griffkörpers 16h beträgt am freien Ende von 10 mm bis 22 mm, vorzugsweise von 12 mm bis 19 mm, und im Bereich der Anwendungseinheit 12h von 5 mm bis 13 mm, vorzugsweise von 7 mm bis 11 mm. Die Höhe des Griffkörpers 16h beträgt am freien Ende insbesondere von 10 mm bis 20 mm, vorzugsweise von 13 mm bis 17 mm, und in einem Bereich der Anwendungseinheit 12h von 3 mm bis 9 mm, vorzugsweise von 4 mm bis 7 mm.

In Fig. 8A ist ein Zuschnitt des Papierwerkstoffs für die Griffeinheit 14h gezeigt. Beim Falten um die Faltachsen werden die Teilschichten der Vorderwand 94h, der zwei Seitenwände 96h, 96h' und der zwei Seiteninnenwände 98h, 98h' gegeneinander gefaltet, sodass diese einen 3D-Körper bilden. Es bildet sich ein dreieckiger Querschnitt aus. Der materielle Griffkörper 16h bildet im montierten Zustand mindestens abschnittsweise eine hohle Pyramide mit 3-eckigem Querschnitt aus.

Der materielle Griffkörper 16h besteht zumindest zu einem Großteil aus einem Papierwerkstoff. Der materielle Griffkörper 16h besteht vollständig aus einem Papierwerkstoff. Der materielle Griffkörper 16h der Griffeinheit 14h weist zumindest eine Schicht aus einem Papierwerkstoff auf, welche dreidimensional geformt ausgebildet ist. Der Zuschnitt des materiellen Griffkörpers 16h besteht aus genau einer Schicht aus einem Papierwerkstoff.

Das Körperpflegeprodukt 10h weist ferner die Verbindungseinheit 18h auf. Die Verbindungseinheit 18h weist ein mit der Anwendungseinheit 12h verbundenes Verbindungselement 20h und ein mit der Griffeinheit 14h verbundenes weiteres Verbindungselement 22h auf. Das Verbindungselement 20h und das weitere Verbindungselement 22h sind korrespondierend ausgebildet. Ferner ist das Verbindungselement 20h der Verbindungseinheit 18h einstückig mit dem Grundkörper 84h der Anwendungseinheit 12h ausgebildet. Das Verbindungselement 20h bildet insbesondere einen Teil der Anwendungseinheit 12h. Das weitere Verbindungselement 22h der Verbindungseinheit 18h ist zumindest teilweise einstückig mit der Griffeinheit 14h ausgebildet. Das weitere Verbindungselement 22h der Verbindungseinheit 18h ist einstückig mit dem Griffkörper 16h ausgebildet. Das weitere Verbindungselement 22h der Verbindungseinheit 18h ist einteilig mit dem Griffkörper 16h ausgebildet. Das weitere Verbindungselement 22h der Verbindungseinheit 18h bildet daher einen Teil des Griffkörpers 16h. Das weitere Verbindungselement 22h der Verbindungseinheit 18h besteht daher ebenfalls zu einem Großteil, insbesondere vollständig, aus einem Papierwerkstoff. Das weitere Verbindungselement 22h ist in einem Endbereich des Griffkörpers 16h ausgebildet.

Das weitere Verbindungselement 22h ist in einem Querschnitt senkrecht zu einer Haupterstreckungsrichtung 42h in eine polygonale Form gefaltet, welche einen Aufnahmebereich begrenzt. Das weitere Verbindungselement 22h weist einen offenen, dreieckigen Querschnitt auf.

Das Verbindungselement 20h der Verbindungseinheit 18h ist zumindest teilweise formschlüssig mit dem weiteren Verbindungselement 22h der Verbindungseinheit 18h verbunden. Das Verbindungselement 20h weist einen Kernfortsatz 44h auf, welcher dazu vorgesehen ist, in den Aufnahmebereich des weiteren Verbindungselements 22h einzugreifen. Der Grundkörper 84h der Anwendungseinheit 12h ist von einem Schuh gebildet, welcher dazu vorgesehen ist, auf ein Ende des Griffkörpers 16h aufgeschoben zu werden. Der Kernfortsatz 44h dient als Stützgeometrie im Inneren. Der Kernfortsatz 44h folgt dem Querschnitt innen im Griffkörper 16h. Der Kernfortsatz 44h ist von einem Zylinder mit einer dreieckigen Grundseite gebildet. Der Kernfortsatz 44h ist einseitig freigestellt, damit der Griffkörper 16h eingefahren werden kann. Der Kernfortsatz 44h ist kürzer als eine den Kernfortsatz 44h teilweise umgreifende Hülle 100h des Grundkörpers 84h gestaltet. Die Hülle 100h des Grundkörpers 84h liegt außen an dem Griffkörper 16h in einem Bereich des weiteren Verbindungselements 22h an. Der Griffkörper 16h ist in einem montierten Zustand zwischen der Hülle 100h und dem Kernfortsatz 44h geklemmt. Zusätzlich kann der Kernfortsatz 44h in dem Griffkörper 16h verrastet und/oder verklebt sein, insbesondere mit einem Hinterschnitt. Ferner kann der Griffkörper 16h zwischen dem Kernfortsatz 44h und dem Borstenplättchen 86h geklemmt und/oder verklebt werden.

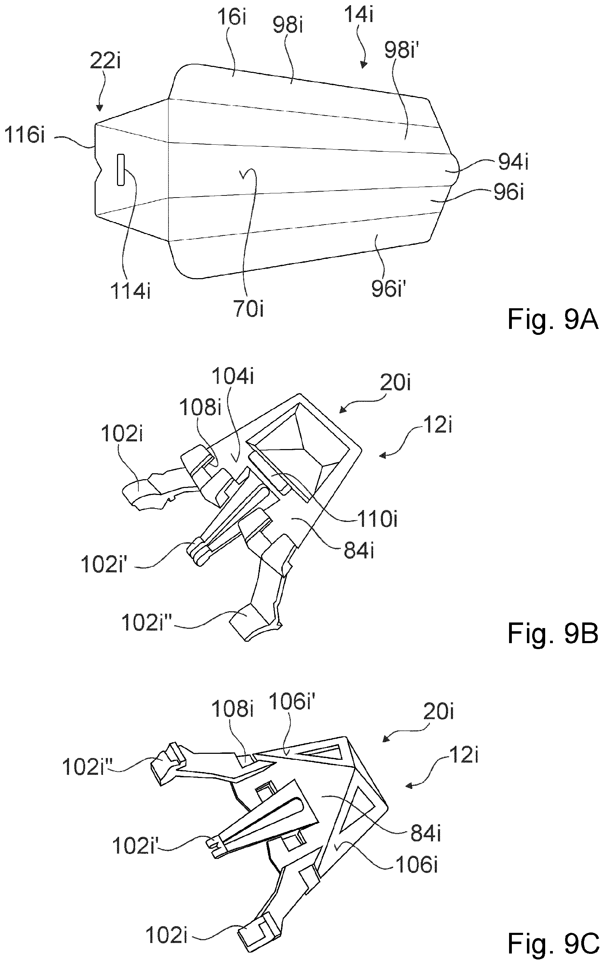

Im Folgenden wird auf die Figuren 9A bis 9E Bezug genommen, welche unterschiedliche Ansichten und Fertigungsstufen des Körperpflegeprodukts 10i zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 9A zeigt eine Griffeinheit 14i eines Körperpflegeprodukts 10i in einem flachen, ungefalteten Zustand. Das Körperpflegeprodukt 10i ist im vorliegenden Fall als ein Rasierer ausgebildet.

Das Körperpflegeprodukt 10i weist eine Anwendungseinheit 12i auf. Ferner weist das Körperpflegeprodukt 10i eine Griffeinheit 14i auf, welche einen materiellen Griffkörper 16i aufweist. Des Weiteren weist das Körperpflegeprodukt 10i eine Verbindungseinheit 18i auf, welche die Anwendungseinheit 12i mit der Griffeinheit 14i verbindet.

Die Anwendungseinheit 12i bildet einen Rasierkopf des Körperpflegeprodukts 10i. Die Anwendungseinheit 12i weist insbesondere einen als Klingenträger ausgebildeten Grundkörper 84i auf. Der Grundkörper 84i der Anwendungseinheit 12i ist vollständig aus einer Hartkomponente ausgebildet. Es wäre jedoch auch denkbar, dass der Grundkörper 84i der Anwendungseinheit 12i aus einer Hartkomponente und einer Weichkomponente gebildet ist. Der Grundkörper 84i der Anwendungseinheit 12i bildet einen statischen Klingenträger aus, welcher zu einer beweglichen, insbesondere schwenkbaren Aufnahme eines Klingenkopfes 48i vorgesehen ist. Die Anwendungseinheit 12i weist den Klingenkopf 48i auf. Die Anwendungseinheit 12i weist den an dem Grundkörper 84i angeordneten Klingenkopf 48i auf. Der Grundkörper 84i weist drei Gelenkarme 102i, 102i', 102i" auf, welche zu einer schwenkbaren Aufnahme des Klingenkopfes 48i vorgesehen sind. Der Klingenkopf 48i kann insbesondere auswechselbar mit dem Grundkörper 84i verbunden sein.

Die Griffeinheit 14i ist zu einem Greifen durch den Bediener vorgesehen. Die Griffeinheit 14i weist den materiellen Griffkörper 16i auf. Der materielle Griffkörper 16i der Griffeinheit 14i weist einen Kopfbereich 66i auf. Ferner weist der materielle Griffkörper 16i der Griffeinheit 14i einen Griffbereich 68i auf. Der Kopfbereich 66i ist zu einer Anbindung der Anwendungseinheit 12i vorgesehen. Die Griffeinheit 14i weist zumindest eine Grifffläche 70i auf, welche eine Oberfläche des materiellen Griffkörpers 16i ausbildet. Der gesamte Griffkörper 16i ist in der Draufsicht in einem gefalteten Zustand insbesondere teilweise Y-förmig oder T-förmig ausgebildet. Der Griffkörper 16i ist dreidimensional gefaltet, um die geknickte Form auszubilden.

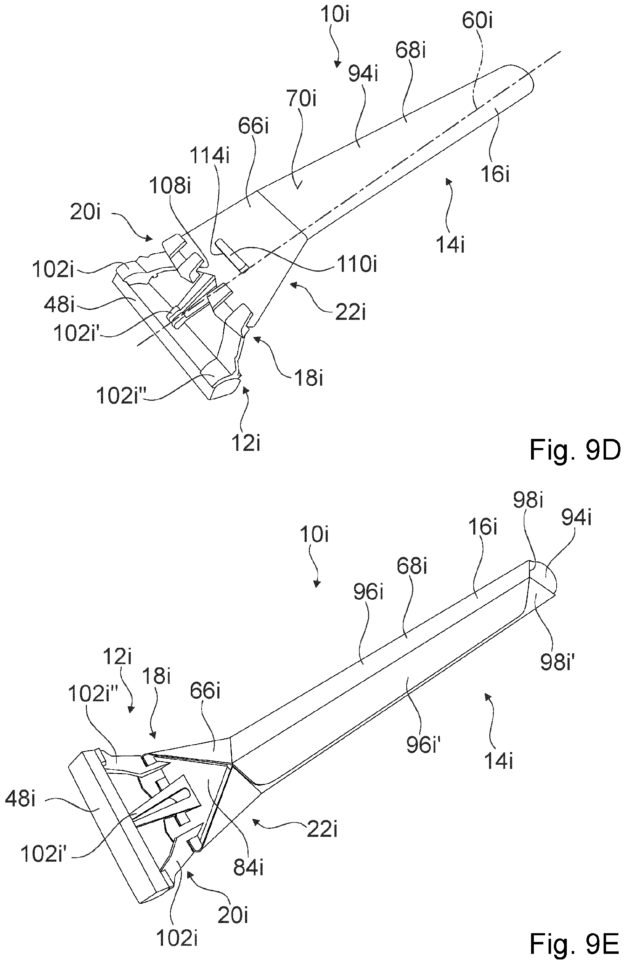

Der Griffkörper 16i wird aus dem ungefalteten Zustand, abgebildet in Fig. 9A, zu einem dreidimensionalen Körper gefaltet, abgebildet in Figur 9D und 9E. Der Griffkörper 16i weist in einem gefalteten Zustand einen dreieckigen Querschnitt auf, welcher sich aus drei Seiten des Griffkörpers 16i zusammensetzt. Der Griffkörper 16i ist in einem gefalteten Zustand hohl ausgebildet. Der Zuschnitt des Griffkörpers 16i besteht insbesondere aus einem Papierbogen, welcher aus zumindest einer, insbesondere genau einer Schicht besteht. Der Griffkörper 16i weist von 1 bis 10 Lagen, vorzugsweise von 1 bis 5 Lagen auf, welche eine Schicht bilden. Die Lagen bilden eine Schicht. Die Anzahl der Lagen hängt insbesondere von der gewünschten Endstärke bzw. Stabilität des Griffkörpers 16i ab. Es können insbesondere viele dünne Lagen oder wenige dicke Lagen realisiert werden. Die Lagen werden vorzugsweise verbunden. Durch das Realisieren des Griffkörpers 16i in mehreren Lagen ergeben sich Stabilitätsvorteile gegenüber einem Körper aus einer oder weniger Lagen. Der Griffkörper 16i weist eine Vorderwand 94i und zwei Seitenwände 96i, 96i' auf. Der Griffkörper 16i ist aus einem Zuschnitt hergestellt. Die beiden Seitenwände 96i, 96h' zusammen mit den zwei Seiteninnenwänden 98i, 98i' bilden im Endprodukt eine Doppellage aus. Der Zuschnitt des Griffkörpers 16i besteht daher insbesondere aus fünf Seiten, und zwar der Vorderwand 94i, den zwei Seitenwänden 96i, 96i' und zwei Seiteninnenwänden 98i, 98i'. Zumindest eine, insbesondere beide, der Doppellagen sind geklebt. Die beiden Schichten der Seitenwände 96i, 96i' und die jeweiligen Seiteninnenwände 98i, 98i' sind daher miteinander verklebt. Der Griffkörper 16i ist in Längsrichtung konisch gestaltet, wobei eine Breite des Griffkörpers 16i zu der Anwendungseinheit 12i hin zunimmt. Im gefalteten Zustand ist der Griffkörper 16i auf der der Anwendungseinheit 12i zugewandten Seite offen, damit später das Verbindungselement 20i eingefahren werden kann. Beispielhaft ist der Griffkörper 16i auch an einem unteren, freien Ende offen gestaltet. Die Vorderwand 94i des Griffkörpers 16i ist länger als die beiden Seitenwände 96i, 96i' und die jeweiligen Seiteninnenwände 98i, 98i' und knickt zu der Anwendungseinheit 12a hin ab. Ferner knicken auch die Seitenwände 96i, 96i' bzw. die Seiteninnenwände 98i, 98i' zu der Anwendungseinheit 12i hin ab. Die Seitenwände 96i, 96i' öffnen sich zu der Anwendungseinheit 12i hin und sind in einem Bereich des weiteren Verbindungselements 22i lediglich einlagig. Eine Körperstabilität des Griffkörpers 16i wird durch die Faltung bzw. durch das dadurch entstehende Fachwerk im Querschnitt erreicht.

Der materielle Griffkörper 16i besteht zumindest zu einem Großteil aus einem Papierwerkstoff. Der materielle Griffkörper 16i besteht vollständig aus einem Papierwerkstoff. Der materielle Griffkörper 16i der Griffeinheit 14i weist zumindest eine Schicht aus einem Papierwerkstoff auf, welche dreidimensional geformt ausgebildet ist. Der Zuschnitt des materiellen Griffkörpers 16i besteht aus genau einer Schicht aus einem Papierwerkstoff, es wäre jedoch auch ein mehrschichtiger Aufbau denkbar. Eine Materialstärke des Griffkörpers 16i beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm.

Das Körperpflegeprodukt 10i weist ferner die Verbindungseinheit 18i auf. Die Verbindungseinheit 18i weist ein mit der Anwendungseinheit 12i verbundenes Verbindungselement 20i und ein mit der Griffeinheit 14i verbundenes weiteres Verbindungselement 22i auf. Das Verbindungselement 20i und das weitere Verbindungselement 22i sind korrespondierend ausgebildet. Ferner ist das Verbindungselement 20i der Verbindungseinheit 18i einstückig mit dem Grundkörper 84i der Anwendungseinheit 12i ausgebildet. Das Verbindungselement 20i bildet insbesondere einen Teil der Anwendungseinheit 12i. Das weitere Verbindungselement 22i der Verbindungseinheit 18i ist zumindest teilweise einstückig mit der Griffeinheit 14i ausgebildet. Das weitere Verbindungselement 22i der Verbindungseinheit 18i ist einstückig mit dem Griffkörper 16i ausgebildet. Das weitere Verbindungselement 22i der Verbindungseinheit 18i ist einteilig mit dem Griffkörper 16i ausgebildet. Das weitere Verbindungselement 22i der Verbindungseinheit 18i bildet daher einen Teil des Griffkörpers 16i. Das weitere Verbindungselement 22i der Verbindungseinheit 18i besteht daher ebenfalls zu einem Großteil, insbesondere vollständig, aus einem Papierwerkstoff. Das weitere Verbindungselement 22i ist in einem Endbereich des Griffkörpers 16i ausgebildet.

Das weitere Verbindungselement 22i ist in einem Querschnitt senkrecht zu einer Haupterstreckungsrichtung 42i in eine polygonale Form gefaltet, welche einen Aufnahmebereich begrenzt. Das weitere Verbindungselement 22i weist den offenen, dreieckigen Querschnitt auf.

Das Verbindungselement 20i der Verbindungseinheit 18i ist zumindest teilweise formschlüssig mit dem weiteren Verbindungselement 22i der Verbindungseinheit 18i verbunden. Es sind dazu insbesondere mehrere Verankerungspunkte zwischen dem Verbindungselement 20i und dem Griffkörper 16i bzw. dem weiteren Verbindungselement 22i vorgesehen. Die Fixierung des Verbindungselements 20i an dem Griffkörper 16i erfolgt durch Formschluss. Alternativ oder zusätzlich wäre jedoch auch eine Fixierung durch Klebung denkbar.

Das Verbindungselement 20i der Verbindungseinheit 18i ist voluminös gestaltet. Das Verbindungselement 20i ist fachwerkartig mit Leerräumen im Inneren ausgestaltet. Das Verbindungselement 20i wird in einem montierten Zustand von dem Griffkörper 16i auf drei Flächen umschlungen. Das Verbindungselement 20i ist dabei dazu vorgesehen, den Griffkörper 16i von innen zu stützen und den Griffkörper 16i mit dem Klingenkopf 48i zu verbinden, damit dieser nicht verdrückt werden kann. Das Verbindungselement 20i weist mehrere Anlageflächen 104i, 106i, 106i' für den Griffkörper 16i auf. Das Verbindungselement 20i weist drei Anlageflächen 104i, 106i, 106i' für den Griffkörper 16i auf. Eine erste Anlagefläche 104i ist auf der oberen Seite angeordnet. Auf dieser Seite weist das Verbindungselement 20i eine Einfahrnut 108i und einen Rastkamm 110i zu einer Verbindung mit dem Griffkörper 16i auf. Der Griffkörper 16i wird zu einer Verbindung mit der Anwendungseinheit 12i mit einer vorderen Kante 116i des weiteren Verbindungselements 22i in die Einfahrnut 108i eingeschoben, bis eine Ausnehmung 114i des weiteren Verbindungselements 22i mit dem Rastkamm 110i verrastet. Die erste Anlagefläche 104i weist eine Umfangsgröße, bei der Ausnehmungen nicht abgezogen sind, von 500 mm² bis 850 mm², vorzugsweise von 600 mm² bis 750 mm², auf. Eine zweite und dritte Anlagefläche 106i, 106i' sind symmetrisch zur Grifflängsachse geformt. Die zweite und dritte Anlagefläche 106i, 106i' laufen insbesondere aufeinander zu. Die zweite und dritte Anlagefläche 106i, 106i' können mit Ausnehmungen versehen sein und liegen in einem Winkel von 25° bis 75°, vorzugsweise von 35° bis 55° zu der ersten Anlagefläche 104i auf der Rückseite des Verbindungselements 20i, wobei die Winkel identisch aber gegenüberliegend sind. Die zweite und dritte Anlagefläche 106i, 106i' weisen jeweils eine Umfangsgröße, bei der Ausnehmungen nicht abgezogen sind, von 100 mm² bis 180 mm², vorzugsweise von 110 mm² bis 150 mm², auf. Das Verbindungselement 20i ist dazu vorgesehen, während einer Montage in die Ausnehmung des Griffkörpers 16i eingefahren und eingerastet zu werden. Der Griffkörper 16i hält, wenn montiert und fixiert, das Verbindungselement 20i und damit die Anwendungseinheit 12i. Das Verbindungselement 20i und der Griffkörper 16i haben keine Materialverbindung. Es wäre jedoch auch denkbar, dass zusätzlich eine Klebung vorgesehen ist.

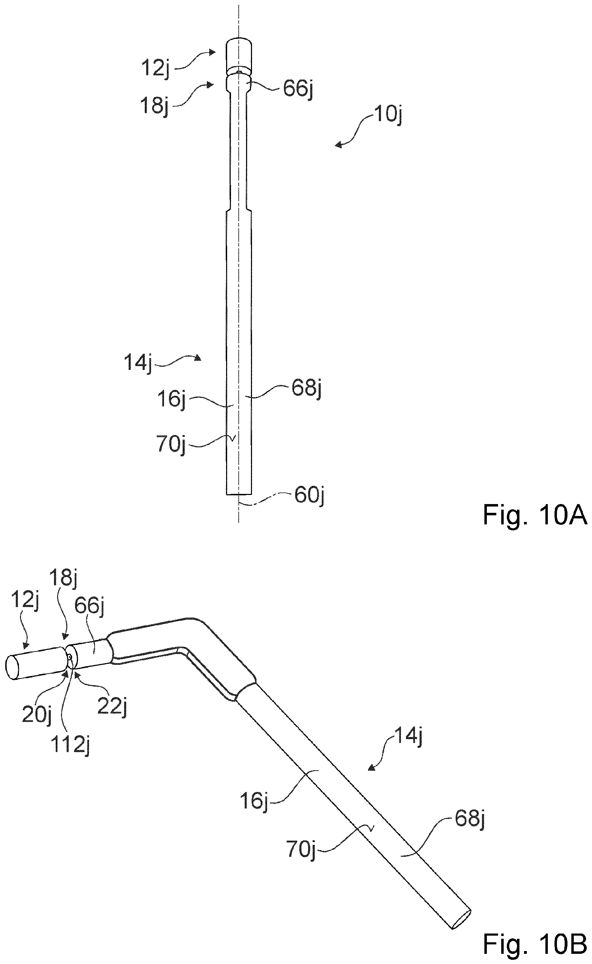

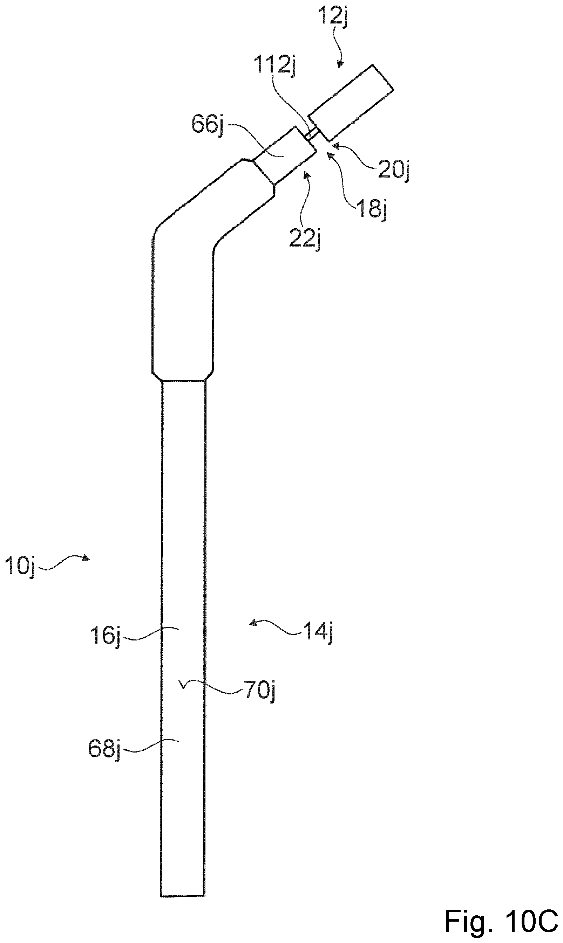

Im Folgenden wird auf die Figuren 10A bis 10C Bezug genommen, welche unterschiedliche Ansichten des Körperpflegeprodukts 10i zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 10B zeigt ein Körperpflegeprodukt 10j in einer schematischen perspektivischen Darstellung. Das Körperpflegeprodukt 10j ist von einem Mundhygienemittel gebildet. Das Körperpflegeprodukt 10j ist im vorliegenden Fall als eine Interdentalbürste ausgebildet.

Das Körperpflegeprodukt 10j weist eine Anwendungseinheit 12j auf. Ferner weist das Körperpflegeprodukt 10j eine Griffeinheit 14j auf, welche einen materiellen Griffkörper 16j aufweist. Des Weiteren weist das Körperpflegeprodukt 10j eine Verbindungseinheit 18j auf, welche die Anwendungseinheit 12j mit der Griffeinheit 14j verbindet.

Die Anwendungseinheit 12j bildet einen Interdentalbürstenkopf des Körperpflegeprodukts 10j. Die Anwendungseinheit 12j weist einen Bürstenkopf mit radial nach außenstehenden Borsten auf, welcher insbesondere von einer eingedrehten Bürste gebildet ist. Die Borsten sind der Übersichtlichkeit lediglich als Volumenkörper dargestellt. Ferner weist die Anwendungseinheit 12j einen Reinigungselementträger 112j auf.

Die Griffeinheit 14j ist zu einem Greifen durch den Bediener vorgesehen. Die Griffeinheit 14j weist den materiellen Griffkörper 16j auf. Der materielle Griffkörper 16j der Griffeinheit 14j weist einen Kopfbereich 66j auf. Ferner weist der materielle Griffkörper 16j der Griffeinheit 14j einen Griffbereich 68j auf. Der Kopfbereich 66j ist zu einer Anbindung der Anwendungseinheit 12j vorgesehen. Der materielle Griffkörper 16j besteht zumindest zu einem Großteil aus einem Papierwerkstoff. Der materielle Griffkörper 16j besteht beispielhaft vollständig aus einem Papierwerkstoff. Der materielle Griffkörper 16j besteht aus einem zylindrischen Papierkörper. Der materielle Griffkörper 16j der Griffeinheit 14j weist zumindest eine Schicht aus einem Papierwerkstoff auf, welche gerollt ausgebildet ist. Der materielle Griffkörper 16j weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Zwischen dem Kopfbereich 66j und dem Griffbereich 68j ist der Griffkörper 16j gewinkelt ausgebildet. Der Griffkörper 16j ist mit einem Biege-Radius von 1,5 cm bis 4,5 cm, vorzugsweise 2 cm bis 3,5 cm, abgewinkelt ausgebildet. Der Winkel zwischen dem Kopfbereich 66j und dem Griffbereich 68j beträgt insbesondere von 120° bis 160°, vorzugsweise 130° bis 150°. Die Länge des Kopfbereichs 66j nach der Krümmung beträgt insbesondere maximal 2 cm, vorzugsweise maximal 1 cm. Ein Durchmesser des Griffkörpers 16j beträgt insbesondere von 2,5 mm bis 5 mm, vorzugsweise 2.5 mm bis 4 mm. Bei einer Anwendung des Körperpflegeprodukts 10j in der Kosmetik wäre insbesondere auch denkbar, dass ein Durchmesser des Griffkörpers 16j von 2,5 mm bis 5 mm, vorzugsweise 3 mm bis 4 mm, beträgt. Der abgewinkelte Bereich des Griffkörpers 16j ist durch nachträgliches Drücken, insbesondere Verpressen stabilisiert. Der Griffkörper 16j ist in einem Bereich zwischen dem Kopfbereich 66j und dem Griffbereich 68j partiell verpresst, sodass der Griffkörper 16j in diesem Bereich einen annähernd rechteckigen Querschnitt aufweist. Insbesondere ist in dem Bereich eine Quererstreckung des Griffkörpers 16j verringert. Ein Biegen des abgewinkelten Bereichs des Griffkörpers 16j kann bei der Herstellung insbesondere durch Befeuchten, Benetzen, Dampf und/oder Wärme verbessert werden. Der abgewinkelte Bereich des Griffkörpers 16j ist flachgepresst, um eine mechanische Stabilität zu erhöhen. Die gedrückte Dicke des abgewinkelten Bereichs des Griffkörpers 16j beträgt insbesondere von 1,5 mm bis 3 mm, vorzugsweise von 1,7 mm bis 2,3 mm.

Die Anwendungseinheit 12j kann mittels einer Verbindungseinheit 18j mit der Griffeinheit 14j verbunden werden. Alternativ zu dem abgewinkelten Bereich des Griffkörpers 16j wäre auch denkbar, dass der Griffkörper 16j gerade ist und die Anwendungseinheit 12j mit der Verbindungseinheit 18j im Winkel angespritzt ist. Die Krümmung würde dabei durch das gespritzte Teil geschaffen.

Das Körperpflegeprodukt 10j weist ferner die Verbindungseinheit 18j auf. Die Verbindungseinheit 18j weist ein mit der Anwendungseinheit 12j verbundenes Verbindungselement 20j und ein mit der Griffeinheit 14j verbundenes weiteres Verbindungselement 22j auf. Das Verbindungselement 20j und das weitere Verbindungselement 22j sind korrespondierend ausgebildet. Ferner ist das Verbindungselement 20j der Verbindungseinheit 18j einstückig mit dem Reinigungselementträger 112j der Anwendungseinheit 12j ausgebildet. Das Verbindungselement 20j bildet insbesondere einen Teil der Anwendungseinheit 12j. Das weitere Verbindungselement 22j der Verbindungseinheit 18j ist zumindest teilweise einstückig mit der Griffeinheit 14j ausgebildet. Das weitere Verbindungselement 22j der Verbindungseinheit 18j ist einstückig mit dem Griffkörper 16j ausgebildet. Das weitere Verbindungselement 22j der Verbindungseinheit 18j ist einteilig mit dem Griffkörper 16j ausgebildet. Das weitere Verbindungselement 22j der Verbindungseinheit 18j bildet daher einen Teil des Griffkörpers 16j. Das weitere Verbindungselement 22j der Verbindungseinheit 18j besteht daher ebenfalls zu einem Großteil, insbesondere vollständig, aus einem Papierwerkstoff. Das weitere Verbindungselement 22j ist in einem Endbereich des Griffkörpers 16j ausgebildet. Das weitere Verbindungselement 22j ist in dem Kopfbereich 66j des Griffkörpers 16j ausgebildet.

Das Verbindungselement 20j der Verbindungseinheit 18j ist zumindest teilweise stoffschlüssig mit dem weiteren Verbindungselement 22j der Verbindungseinheit 18j verbunden. Das Verbindungselement 20j der Verbindungseinheit 18j ist zumindest teilweise formschlüssig mit dem weiteren Verbindungselement 22j der Verbindungseinheit 18j verbunden. Das weitere Verbindungselement 22j bildet eine Ausnehmung in dem Griffkörper 16j aus, in welche das Verbindungselement 20j eingesteckt und fixiert ist. Alternativ oder zusätzlich wäre auch denkbar, dass die Anwendungseinheit 12j über das Verbindungselement 20j an den Griffkörper 16j angespritzt ist.

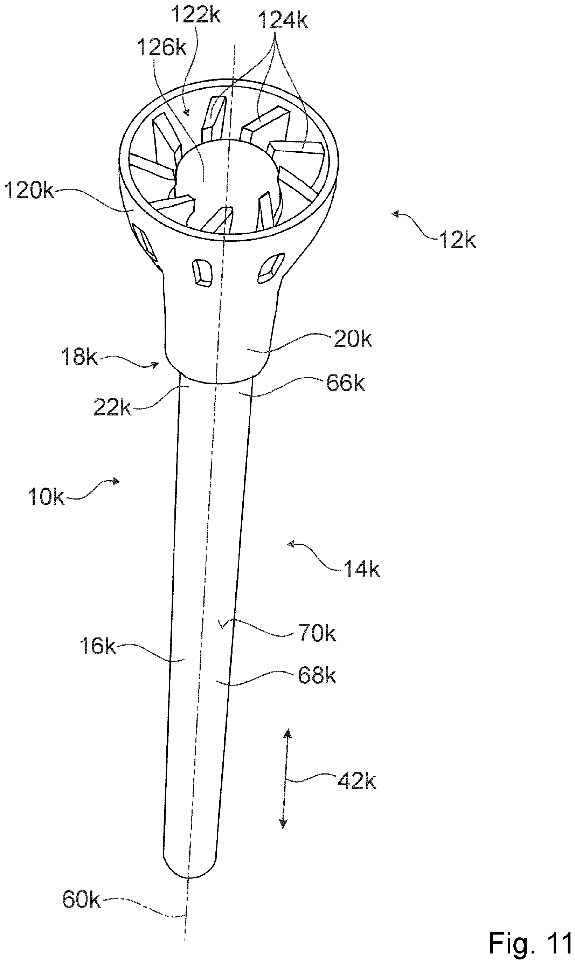

Die Figur 11 zeigt ein Körperpflegeprodukt 10k in einer schematischen perspektivischen Darstellung. Das Körperpflegeprodukt 10k ist von einem Mundhygienemittel gebildet. Das Körperpflegeprodukt 10k ist im vorliegenden Fall als Applikator für ein Whitening Produkt der Mundhygiene ausgebildet.

Das Körperpflegeprodukt 10k weist eine Anwendungseinheit 12k auf. Ferner weist das Körperpflegeprodukt 10k eine Griffeinheit 14k auf, welche einen materiellen Griffkörper 16k aufweist. Des Weiteren weist das Körperpflegeprodukt 10k eine Verbindungseinheit 18k auf, welche die Anwendungseinheit 12k mit der Griffeinheit 14k verbindet.

Die Anwendungseinheit 12k weist einen Träger 120k mit einer Vertiefung 122k und in dieser mit radial nach außenstehenden Lamellen 124k auf, welche im Zentrum eine Ausnehmung für eine Fluidkugel 126k bilden. Die Anwendungseinheit 12k weist ferner eine sich unter Speicheleinfluss öffnende Fluidkugel 126k mit einer Whitening Flüssigkeit auf. Die Fluidkugel 126k ist fest in dem Träger 120k aufgenommen. Der Träger 120k besteht zumindest teilweise aus einer Weichkomponente.

Die Griffeinheit 14k ist zu einem Greifen durch den Bediener vorgesehen. Die Griffeinheit 14k weist den materiellen Griffkörper 16k auf. Der materielle Griffkörper 16k der Griffeinheit 14k weist einen Kopfbereich 66k auf. Ferner weist der materielle Griffkörper 16k der Griffeinheit 14k einen Griffbereich 68k auf. Der Kopfbereich 66k ist zu einer Anbindung der Anwendungseinheit 12k vorgesehen. Der materielle Griffkörper 16k besteht zumindest zu einem Großteil aus einem Papierwerkstoff. Der materielle Griffkörper 16k besteht beispielhaft vollständig aus einem Papierwerkstoff. Der materielle Griffkörper 16k besteht aus einem zylindrischen Papierkörper. Der materielle Griffkörper 16k der Griffeinheit 14k weist zumindest eine Schicht aus einem Papierwerkstoff auf, welche gerollt ausgebildet ist. Der materielle Griffkörper 16k weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Die Anwendungseinheit 12k kann mittels einer Verbindungseinheit 18k mit der Griffeinheit 14k verbunden werden. Das Körperpflegeprodukt 10k weist ferner die Verbindungseinheit 18k auf. Die Verbindungseinheit 18k weist ein mit der Anwendungseinheit 12k verbundenes Verbindungselement 20k und ein mit der Griffeinheit 14k verbundenes weiteres Verbindungselement 22k auf. Das Verbindungselement 20k und das weitere Verbindungselement 22k sind korrespondierend ausgebildet. Ferner ist das Verbindungselement 20k der Verbindungseinheit 18k einstückig mit dem Träger der Anwendungseinheit 12k ausgebildet. Das Verbindungselement 20k bildet insbesondere einen Teil der Anwendungseinheit 12k. Das weitere Verbindungselement 22k der Verbindungseinheit 18k ist zumindest teilweise einstückig mit der Griffeinheit 14k ausgebildet. Das weitere Verbindungselement 22k der Verbindungseinheit 18k ist einstückig mit dem Griffkörper 16k ausgebildet. Das weitere Verbindungselement 22k der Verbindungseinheit 18i ist einteilig mit dem Griffkörper 16k ausgebildet. Das weitere Verbindungselement 22k der Verbindungseinheit 18k bildet daher einen Teil des Griffkörpers 16k. Das weitere Verbindungselement 22k der Verbindungseinheit 18k besteht daher ebenfalls zu einem Großteil, insbesondere vollständig, aus einem Papierwerkstoff. Das weitere Verbindungselement 22k ist in einem Endbereich des Griffkörpers 16k ausgebildet. Das weitere Verbindungselement 22k ist in dem Kopfbereich 66k des Griffkörpers 16k ausgebildet.

Das Verbindungselement 20k der Verbindungseinheit 18k ist zumindest teilweise stoffschlüssig mit dem weiteren Verbindungselement 22k der Verbindungseinheit 18k verbunden. Das Verbindungselement 20k der Verbindungseinheit 18k ist zumindest teilweise formschlüssig mit dem weiteren Verbindungselement 22k der Verbindungseinheit 18k verbunden. Die Anwendungseinheit 12k ist über das Verbindungselement 20k an den Griffkörper 16k angespritzt.

### Bezugszeichenliste

- 10: Körperpflegeprodukt
- 12: Anwendungseinheit
- 14: Griffeinheit
- 16: Griffkörper
- 18: Verbindungseinheit
- 20: Verbindungselement
- 22: Verbindungselement
- 24: Zahnseidefaden
- 26: Arm
- 26': Arm
- 28: Verbindungsbereich
- 28': Verbindungsbereich
- 30: Kappe
- 30': Kappe
- 32: Verbindungsbügel
- 34: Anspritzpunkt
- 36: Formschlusskontur
- 38: Durchgangsausnehmung
- 38': Durchgangsausnehmung
- 40: Einkerbung
- 40': Einkerbung
- 42: Haupterstreckungsrichtung
- 44: Kernfortsatz
- 46: Bürstenkopf
- 48: Klingenkopf
- 50: Bereitstellungsschritt
- 52: Verbindungsschritt
- 54: Papierbogen
- 56: Trennschritt
- 58: Spritzgusswerkzeug
- 60: Längsachse
- 62: Höhenachse
- 64: Breitenachse
- 66: Kopfbereich
- 68: Griffbereich
- 70: Grifffläche
- 72: Zahnstocherspitze
- 74: Kavität
- 76: Kavität
- 78: Kavität
- 80: Kanalausnehmung
- 82: Kaltkanalanguss
- 83: Fortsatz
- 84: Grundkörper
- 86: Borstenplättchen
- 88: Borsten
- 90: Aufnahmebereich
- 92: Halsbereich
- 94: Vorderwand
- 96: Seitenwand
- 96': Seitenwand
- 98: Seiteninnenwand
- 98': Seiteninnenwand
- 100: Hülle
- 102: Gelenkarm
- 102': Gelenkarm
- 102": Gelenkarm
- 104: Anlagefläche
- 106: Anlagefläche
- 106': Anlagefläche
- 108: Einfahrnut
- 110: Rastkamm
- 112: Reinigungselementträger
- 114: Ausnehmung
- 116: Kante
- 118: Struktur
- 120: Träger
- 122: Vertiefung
- 124: Lamellen
- 126: Fluidkugel

## Patentansprüche

1. Körperpflegeprodukt, insbesondere Mundhygieneprodukt, mit zumindest einer Anwendungseinheit (12a; 12e; 12f; 12g; 12h; 12i; 12j; 12k) mit zumindest einer Griffeinheit (14a; 14c; 14d; 14e; 14f; 14g; 14h; 14i; 14j; 14k), welche zumindest einen materiellen Griffkörper (16a; 16b; 16c; 16d; 16e; 16f; 16g; 16h; 16i; 16j; 16k) aufweist, der zumindest teilweise, insbesondere zumindest zu einem Großteil, aus einem Papierwerkstoff besteht, und mit einer Verbindungseinheit (18a; 18c; 18d; 18e; 18f; 18g; 18h; 18i; 18j; 18k), über welche die Anwendungseinheit (12a; 12e; 12f; 12g; 12h; 12i; 12j; 12k) mit der Griffeinheit (14a; 14c; 14d; 14e; 14f; 14g; 14h; 14i; 14j; 14k) verbunden ist,
**dadurch gekennzeichnet, dass**
die Verbindungseinheit (18a; 18c; 18d; 18e; 18f; 18g; 18h; 18i; 18j; 18k) zumindest ein mit der Anwendungseinheit (12a; 12e; 12f; 12g; 12h; 12i; 12j; 12k) verbundenes Verbindungselement (20a; 20e; 20f; 20g; 20h; 20i; 20j; 20k) und zumindest ein mit der Griffeinheit (14a; 14c; 14d; 14e; 14f; 14g; 14h; 14i; 14j; 14k) verbundenes weiteres Verbindungselement (22a; 22c; 22d; 22e; 22f; 22g; 22h; 22i; 22j 22k) aufweist, wobei das Verbindungselement (20a; 20e; 20f; 20g; 20h; 20i; 20j; 20k) der Verbindungseinheit (18a; 18c; 18d; 18e; 18f; 18g; 18h; 18i; 18j; 18k) zumindest teilweise, insbesondere zumindest zu einem Großteil, aus einem Polymer, insbesondere aus einem Kunststoff, besteht.

2. Körperpflegeprodukt nach Anspruch 1,
**dadurch gekennzeichnet, dass**
das Verbindungselement (20a; 20e; 20f; 20g; 20h; 20i; 20j; 20k) der Verbindungseinheit (18a; 18c; 18d; 18e; 18f; 18g; 18h; 18i; 18j; 18k) zumindest teilweise einstückig mit der Anwendungseinheit (12a; 12e; 12f; 12g; 12h; 12i; 12j; 12k) ausgebildet ist.

3. Körperpflegeprodukt nach Anspruch 1 oder 2,
**dadurch gekennzeichnet, dass**
das weitere Verbindungselement (22a; 22c; 22d; 22e; 22f; 22g; 22h; 22i; 22j; 22k) der Verbindungseinheit (18a; 18c; 18d; 18e; 18f; 18g; 18h; 18i; 18j; 18k) zumindest teilweise einstückig mit der Griffeinheit (14a; 14c; 14d; 14e; 14f; 14g; 14h; 14i; 14j; 14k) ausgebildet ist.

4. Körperpflegeprodukt nach einem der vorhergehenden Ansprüche,
**dadurch gekennzeichnet, dass**
das Verbindungselement (20a; 20e; 20f; 20i; 20j) der Verbindungseinheit (18a; 18c; 18d; 18e; 18f; 18g; 18j) zumindest teilweise stoffschlüssig mit dem weiteren Verbindungselement (22a; 22c; 22d; 22e; 22f; 22g; 22j) der Verbindungseinheit (18a; 18c; 18d; 18e; 18f; 18g; 18j) verbunden ist, wobei das weitere Verbindungselement (22a; 22c; 22d; 22e; 22f; 22g; 22j) der Verbindungseinheit (18a; 18c; 18d; 18e; 18f; 18g; 18j) zumindest teilweise, insbesondere zumindest zu einem Großteil, aus einem Papierwerkstoff besteht.

5. Körperpflegeprodukt nach Anspruch 4,
**dadurch gekennzeichnet, dass**
das weitere Verbindungselement (22a; 22c; 22d; 22e; 22f; 22g) der Verbindungseinheit (18a; 18c; 18d; 18e; 18f; 18g) mit dem Verbindungselement (20a; 20e; 20f; 20g) der Verbindungseinheit (18a; 18c; 18d; 18e; 18f; 18g) umspritzt ist.

6. Körperpflegeprodukt nach einem der vorhergehenden Ansprüche,
**dadurch gekennzeichnet, dass**
die Anwendungseinheit (12a; 12e; 12f; 12g) zumindest ein Zahnseidefaden (24a; 24e; 24f; 24g), insbesondere eine Zahnseide, aufweist, wobei der Zahnseidefaden (24a; 24e; 24f; 24g) von dem Verbindungselement (20a; 20e; 20f; 20g) der Verbindungseinheit (18a; 18c; 18d; 18e; 18f; 18g) umspritzt ist.

7. Körperpflegeprodukt nach einem der vorhergehenden Ansprüche,
**dadurch gekennzeichnet, dass**
das Verbindungselement (20a; 20e; 20f; 20g; 20h; 20i; 20j; 20k) der Verbindungseinheit (18a; 18c; 18d; 18e; 18f; 18g; 18h; 18i; 18j; 18k) aus einem Hartkunststoff besteht.

8. Körperpflegeprodukt nach einem der vorhergehenden Ansprüche,
**dadurch gekennzeichnet, dass**
der materielle Griffkörper (16a; 16b; 16c; 16d; 16e; 16f; 16g) zu der Anwendungseinheit (12a; 12c; 12d; 12e; 12f; 12g) hin zumindest zwei Arme (26a, 26a'; 26c, 26c'; 26d, 26d'; 26e, 26e'; 26f, 26f'; 26g, 26g') aufweist, wobei das weitere Verbindungselement (22a; 22c; 22d; 22e; 22f; 22g) an einem Ende der Arme (26a, 26a'; 26c, 26c'; 26d, 26d'; 26e, 26e'; 26f, 26f'; 26g, 26g') zumindest zwei Verbindungsbereiche (28a, 28a'; 28c, 28c'; 28d, 28d'; 28e, 28e'; 28f, 28f'; 28g, 28g') ausbildet.

9. Körperpflegeprodukt nach einem der vorhergehenden Ansprüche,
**dadurch gekennzeichnet, dass**
das Verbindungselement (20a; 20e; 20f; 20g) der Verbindungseinheit (18a; 18c; 18d; 18e; 18f; 18g) zumindest eine Kappe (30a, 30a'; 30d, 30d'; 30e, 30e'; 30f, 30f'; 30g, 30g') aufweist, welche das weitere Verbindungselement (22a; 22c; 22d; 22e; 22f; 22g) der Verbindungseinheit (18a; 18c; 18d; 18e; 18f; 18g) zumindest teilweise übergreift.

10. Körperpflegeprodukt zumindest nach Anspruch 8,
**dadurch gekennzeichnet, dass**
das Verbindungselement (20e; 20f; 20g) der Verbindungseinheit (18e; 18f; 18g) zumindest zwei Kappen (30d, 30d'; 30e, 30e'; 30f, 30f') aufweist, welche die zwei Verbindungsbereiche (28e, 28e'; 28f, 28f'; 28g, 28g') des weiteren Verbindungselements (22e; 22f; 22g) der Verbindungseinheit (18e; 18f; 18g) zumindest teilweise übergreifen, wobei das Verbindungselement (20e; 20f; 20g) zumindest einen Verbindungsbügel (32e; 32f; 32g) aufweist, welcher die zumindest zwei Kappen (30e, 30e'; 30f, 30f'; 30g, 30g') verbindet.

11. Körperpflegeprodukt nach Anspruch 9 oder 10,
**dadurch gekennzeichnet, dass**
das Verbindungselement (20a) zumindest einen Anspritzpunkt (34a) aufweist, welcher an der Kappe (30a, 30a') angeordnet ist.

12. Körperpflegeprodukt zumindest nach Anspruch 10,
**dadurch gekennzeichnet, dass**
das Verbindungselement (20e; 20f; 20g) zumindest einen Anspritzpunkt (34e; 34f; 34g) aufweist, welcher an dem Verbindungsbügel (34e; 34f; 34g) angeordnet ist.

13. Körperpflegeprodukt nach einem der vorhergehenden Ansprüche,
**dadurch gekennzeichnet, dass**
das Verbindungselement (20a;20e; 20f; 20g; 20h; 20i; 20j; 20k) der Verbindungseinheit (18a; 18c; 18d; 18e; 18f; 18g; 18h; 18i; 18j; 18k) zumindest teilweise formschlüssig mit dem weiteren Verbindungselement (22a; 22c; 22d; 22e; 22f; 22g; 22h; 22i; 22j; 22k) der Verbindungseinheit (18a; 18c; 18d; 18e; 18f; 18g; 18h; 18i; 18j; 18k) verbunden ist, wobei das weitere Verbindungselement (22a; 22c; 22d; 22e; 22f; 22g; 22h; 22i; 22j; 22k) der Verbindungseinheit (18a; 18c; 18d; 18e; 18f; 18g; 18h; 18i; 18j; 18k) zumindest teilweise, insbesondere zumindest zu einem Großteil, aus einem Papierwerkstoff besteht.

14. Körperpflegeprodukt nach einem der vorhergehenden Ansprüche,
**dadurch gekennzeichnet, dass**
das weitere Verbindungselement (22a; 22c; 22d; 22e; 22f; 22h; 22i; 22j; 22k) der Verbindungseinheit (18a; 18c; 18d; 18e; 18f; 18g; 18h; 18i; 18j; 18k) zumindest eine Formschlusskontur (36a; 36c; 36d; 36e; 36f; 36g) aufweist, welche dazu vorgesehen ist, einen Formschluss mit dem Verbindungselement (20a; 20d; 20e; 20f; 20h; 20i; 20j; 20k) auszubilden.

15. Körperpflegeprodukt nach Anspruch 14,
**dadurch gekennzeichnet, dass**
die Formschlusskontur (36a; 36c; 36e; 36f; 36g; 36i) des weiteren Verbindungselements (22a; 22c; 22e; 22f; 22g; 22i) zumindest eine Durchgangsausnehmung (38a, 38a'; 38c, 38c'; 38e, 38e'; 38f, 38f'; 38g, 38g') aufweist, wobei sich das Verbindungselement (20a; 20e; 20f; 20h; 20i) durch die Durchgangsausnehmung (38a, 38a'; 38c, 38c'; 38e, 38e'; 38f, 38f'; 38g, 38g') erstreckt.

16. Körperpflegeprodukt zumindest nach Anspruch 14,
**dadurch gekennzeichnet, dass**
die Formschlusskontur (36c; 36d) des weiteren Verbindungselements (22c; 22d) zumindest eine Einkerbung (40c, 40c'; 40d, 40d') aufweist, welche von dem Verbindungselement hinterfüllt ist.

17. Körperpflegeprodukt zumindest nach Anspruch 14,
**dadurch gekennzeichnet, dass**
die Formschlusskontur (36a; 36c; 36d; 36e; 36f; 36g; 36i) des weiteren Verbindungselements (22a; 22c; 22d; 22e; 22f; 22g; 22i) zu einer Verdrehsicherung des Verbindungselements (20a; 20e; 20f; 20g; 20i) vorgesehen ist.

18. Körperpflegeprodukt nach einem der vorhergehenden Ansprüche,
**dadurch gekennzeichnet, dass**
das weitere Verbindungselement (22h; 22i) der Verbindungseinheit (18h; 18i) einteilig mit dem Griffkörper (16h; 16i) ausgebildet ist und aus einem Papierwerkstoff besteht, wobei das weitere Verbindungselement (22h; 22i) in einem Querschnitt senkrecht zu einer Haupterstreckungsrichtung (42h; 42i) in eine polygonale Form gefaltet ist, welche einen Aufnahmebereich begrenzt.

19. Körperpflegeprodukt nach Anspruch 18,
**dadurch gekennzeichnet, dass**
das Verbindungselement (20h) einen Kernfortsatz (44h) aufweist, welcher dazu vorgesehen ist, in den Aufnahmebereich des weiteren Verbindungselements (22h) einzugreifen.

20. Körperpflegeprodukt nach einem der vorhergehenden Ansprüche,
**dadurch gekennzeichnet, dass**
die Anwendungseinheit (12h) zumindest einen Bürstenkopf (46h) aufweist.

21. Körperpflegeprodukt nach einem der vorhergehenden Ansprüche,
**dadurch gekennzeichnet, dass**
die Anwendungseinheit (12i) zumindest einen Klingenkopf (48i) aufweist.

22. Verfahren zur Herstellung eines Körperpflegeprodukts (10a) nach einem der vorhergehenden Ansprüche,
**dadurch gekennzeichnet, dass**
in einem Bereitstellungsschritt (50a) die Griffeinheit (14a) mit dem weiteren Verbindungselement (22a) der Verbindungseinheit (18a) bereitgestellt wird und in einem Verbindungsschritt (52a) die Anwendungseinheit (12a) über das Verbindungselement (20a) der Verbindungseinheit (18a) mittels Umspritzen mit der Griffeinheit (14a) verbunden wird.

23. Verfahren nach Anspruch 22,
**dadurch gekennzeichnet, dass**
in dem Bereitstellungsschritt (50a) mehrere Griffeinheiten (14a) zur Herstellung mehrerer Körperpflegeprodukte (10a) zusammenhängend aus zumindest einem Papierbogen (54a) bereitgestellt werden.

24. Verfahren nach Anspruch 23,
**dadurch gekennzeichnet, dass**
in einem auf den Verbindungsschritt (52a) folgenden Trennschritt (56a) die Griffeinheiten (14a) voneinander getrennt werden.

25. Verfahren nach einem der Ansprüche 22 bis 24,
**dadurch gekennzeichnet, dass**
in dem Bereitstellungsschritt (50a) ein zusammenhängender Zahnseidefaden (24a), insbesondere eine Zahnseide, für mehrere Anwendungseinheiten (12a) bereitgestellt und in ein Spritzgusswerkzeug (58a) eingelegt wird.
